# EUROPEAN PATENT SPECIFICATION

(11) **EP 3 695 747 B1**
(45) Date of publication and mention of the grant of the patent: **16.09.2026**
(21) Application number: 18865904.9
(22) Date of filing: 10.10.2018
(51) Int. Cl.: A47B 57/30, A47B 96/06, F16B 1/00, A47B 67/00, A47B 95/00, H01R 13/46, A47K 1/02

(54) **MIRROR CABINET APPARATUS**
SPIEGELSCHRANKVORRICHTUNG
APPAREIL DE TYPE ARMOIRE DE TOILETTE

(30) Priority: 10.10.2017 KR 20170129187; 13.10.2017 KR 20170133354; 19.10.2017 KR 20170136086; 24.10.2017 KR 20170138638; 24.10.2017 KR 20170138637; 15.11.2017 KR 20170152522; 15.11.2017 KR 20170152521; 16.11.2017 KR 20170153362; 28.03.2018 KR 20180036032
(43) Date of publication of application: 19.08.2020
(73) Proprietor: LG Electronics Inc., Seoul 07336 (KR)
(72) Inventor: KIM, Jeongyun, Seoul 08592 (KR); KIM, Seongho, Seoul 08592 (KR); PARK, Daeyun, Seoul 08592 (KR); JEON, Jin Hyeon, Seoul 08592 (KR); JO, Ung Je, Seoul 08592 (KR)
(74) Representative: Ter Meer Steinmeister & Partner
(86) International application number: PCT/KR2018/011909
(87) International publication number: WO 2019/074274

(56) References cited:
- BE-A3- 1 019 801
- DE-U1- 202016 003 787
- DE-U1- 29 904 040
- JP-A- 2001 201 233
- JP-A- 2002 263 015
- JP-A- 2003 189 950
- JP-A- H0 595 820
- KR-B1- 100 584 023
- KR-B1- 101 167 889
- KR-Y1- 200 384 308

## Description

### [Technical Field]

The present disclosure relates to a mirror cabinet apparatus disposed in a bathroom or a powder room and the like, and, particularly, to a mirror cabinet apparatus including various functional units.

### [Background]

In a bathroom provided with a washbasin, a bathtub, a shower booth and the like, various convenient products such as an electric toothbrush, an electric razor, a hair dryer and the like are used. Additionally, furniture in a bathroom includes a mirror cabinet attached onto a wall and a sink cabinet including a washbasin.

So far, bathroom furniture, and convenient apparatuses used in a bathroom are considered to be different things. A power supply of electric products is supplied through a power socket provided on the wall in a bathroom, and the bathroom furniture is only used to store items.

There are various types of household appliances used in a bathroom. Accordingly, bathroom furniture into which a power socket is built has been introduced. However, the power socket is nothing but a multi-tap installed and buried in furniture.

Additionally, a mirror cabinet of the related art, which is attached onto a wall in a bathroom, is provided with a mirror cabinet body that has a space for storing towels or bathroom products therein, and a mirror door is installed for shielding the storage at a front of the mirror cabinet body. The mirror door of the mirror cabinet is provided with a mirror on an outer surface or an inner surface of thereof.

The mirror cabinet of the related art is provided with a lighting part for lighting up the inside of the mirror cabinet body when the mirror door is opened. The lighting part automatically operates in connection with the opening of the mirror door.

The mirror cabinet of the related art is provided with a lighting part that lights up the mirror cabinet body. The lighting part has brightness to the extent that the inside of the mirror cabinet body can be checked. The mirror cabinet of the related art does not offer the function of adjusting brightness or color of the lighting part according to the needs of users. Further, the mirror cabinet of the related art is not provided with other electronic convenient products except for the lighting part. Accordingly, the mirror cabinet of the related art is limitedly used.

The mirror cabinet of the related art, which is attached onto a wall in a bathroom, is provided with a space for storing towels or bathroom products therein, and does not offer other functions for convenience except for a mirror. Additionally, products in the mirror cabinet are not stored in an environment appropriate for the products.

Convenient products such as toothbrushes, razors, shaving cream and cosmetics stored in a bathroom cabinet have different contents, different purposes, different structures and the like. Accordingly, they are preferably stored in an environment appropriate for them.

For example, to prevent products such as cosmetics from going bad, the products are preferably stored at temperatures of 10 to 15 degrees Celsius. Further, to prevent germs from breeding in products such as toothbrushes or razors, the products are preferably stored in a high-temperature dried space.

However, a space of a bathroom cabinet of the related art is simply divided into spaces and convenient products are stored in the spaces under the same conditions such that users may use the products readily.

A thermoelectric element is an element where a temperature is increased at one side of the element due to heat generation and is decreased at the other side of the element due to heat absorption when two types of conductors are coupled and electric current flows in the conductors, and, in recent years, has been used for electronic refrigeration and the like.

In case heat generated in a heat generation part may be used while a heat absorption part of the thermoelectric element is used for refrigeration, an efficient apparatus may be configured.

The present disclosure includes a cooling space and a drying space in a space in a bathroom cabinet. Convenient products with contents that may easily go bad are stored in the cooling space and convenient products that allow germs to easily breed are stored in the drying space. The drying space is dried using heat generated during the cooling of the cooling space.

In a bathroom, an incandescent light bulb, an LED and the like are used as a light that radiates light of a single color. They are not enough to radiate light of a real color. According to the present disclosure, a mirror cabinet regarded as bathroom furniture may be used as an apparatus, and the mirror cabinet apparatus is provided with a lighting device to provide lighting appropriate for situations.

DE 20 2016 003787 U1 presents a multifunctional furniture, in particular bathroom and/or sanitary furniture and/or kitchen furniture and/or living area furniture, in particular living room furniture, wherein the furniture has a supply unit for, in particular central, supply of functional components arranged in or on the furniture has energy and/or control signals.

BE 1 019 801 A3 relates to a mirror panel comprising at least one side provided with a reflecting surface, and also relates to a piece of furniture provided with such a mirror panel. In particular, furniture with a light fixture.

DE 299 04 040 U1 relates to a mirror furniture with integrated fan.

### [Disclosure]

### [Technical Problems]

The present disclosure is directed to a mirror cabinet apparatus that may remove moisture formed on a mirror of a mirror door, thereby making it possible to keep the mirror door clean and create a pleasant environment in a bathroom.

The present disclosure is also directed to a mirror cabinet apparatus that may change a color temperature of an interior light through a user's input, thereby making it possible to create various moods.

The present disclosure is also directed to a mirror cabinet apparatus that may include a cooling space in a bathroom cabinet, thereby making it possible to keep products requiring cooling at proper temperatures.

The present disclosure is also directed to a mirror cabinet apparatus that may remove moisture formed on a mirror door unit using heat released by a cooling device for cooling a cooling space.

The present disclosure is also directed to a mirror cabinet apparatus that may include a cooling space and a drying space therein, thereby making it possible to properly store bathroom convenient products in each space.

The present disclosure is also directed to a mirror cabinet apparatus that may include a cooling space and a drying space and that may dry the drying space using heat released by a cooling device for cooling the cooling space.

The present disclosure is also directed to a mirror cabinet apparatus that may automatically select a color temperature of lighting appropriate for conditions and that may provide the lighting, thereby making it possible to provide lighting optimal for conditions desired by a user.

The present disclosure is also directed to a mirror cabinet apparatus that may include a charging box unit capable of performing various additional functions for convenience, thereby making it possible to create a pleasant environment in a bathroom.

The present disclosure is also directed to a mirror cabinet apparatus that may include a charging box unit capable of preventing overconsumption of power during the supply of power to an electronic product.

The present disclosure is also directed to a mirror cabinet apparatus that may be provided with a secret space which is not easily accessed or used by other people.

The present disclosure is also directed to a rapid cooling unit that may keep beverages cold to allow a user to drink a cold beverage in a bathroom.

The present disclosure is also directed to a bathroom cabinet in which a shelf configured to divide a space in the cabinet may be supported at a cabinet wall body by a magnetic property such that a height of the shelf is readily adjusted while the shelf is firmly supported at the cabinet wall body.

The present disclosure is also directed to a mirror cabinet apparatus in which a height of a shelf is adjustable using a magnetic property and in which, when a shelf is supported at a cabinet wall body, a groove or a projection on the wall body is not exposed, thereby improving aesthetic qualities.

### [Technical Solutions]

One or more objects of the present technique are achieved by the invention set out by the features of the independent claim(s).

A mirror cabinet apparatus according to the present disclosure includes: a cabinet body provided with an accommodation space therein and including an opened portion at least at a front thereof; a mirror door unit installed to open and close the opened portion of the cabinet body and provided with at least one mirror; and a heat generation sheet disposed in the mirror door unit and configured to heat the mirror.

A mirror cabinet apparatus according to the present disclosure includes: a cabinet body provided with an accommodation space therein and including an opened portion at least at a front thereof; a mirror door unit installed to open and close the opened portion of the cabinet body and provided with at least one mirror; and a lighting part provided at the mirror door and provided at least at one side of a perimeter of the mirror.

A mirror cabinet apparatus according to the present disclosure may include: a cooler unit configured to cool the accommodation space.

A mirror cabinet apparatus according to the present disclosure may include: a cooler unit provided at one side of the cabinet body and configured to cool the accommodation space; and a defrosting unit configured to deliver heat generated in the cooling device and configured to remove moisture formed on the mirror door.

A mirror cabinet apparatus according to the present disclosure includes a cabinet body provided with an accommodation space therein, a cooler unit including a Peltier element that performs a function of cooling, and a cooling space the inner temperature of which is pulled down by the cooler unit and a drying space the inner temperature of which is pushed up by heat generated in the cooler unit.

A mirror cabinet apparatus according to the present disclosure includes beauty lighting disposed at a front of a mirror door unit or disposed in the mirror door unit. The beauty lighting may adjust color temperature and luminous flux, and the adjustment of color temperature and luminous flux of the beauty lighting device may be controlled by a controller with reference to prestored database.

A mirror cabinet apparatus according to the present disclosure provides a structure in which information on natural light and on various artificial lights on the basis of each time slot is stored in a database to provide optimal beauty lighting desired by the user who selects time and a location.

A mirror cabinet apparatus according to the present disclosure includes: a cabinet body provided with an accommodation space therein and provided with a plurality of shelves in the accommodation space; a mirror door unit configured to open and close the accommodation space of the cabinet body; a charging box unit disposed at one side of the accommodation space, provided with a power socket and configured to store a power plug connected to the power socket; and a cooler unit provided at one side of the accommodation space and provided with a cooling space independent from the accommodation space therein.

A charging box unit according to the present disclosure includes: a charging box body provided with a power circuit for supplying power therein and including a storage space at a front thereof; at least one socket provided at one side of the charging box body and connected to the power circuit to supply power; and a charging module provided at one side of an upper portion of the charging box body and connected to the power circuit to supply power for charging a small-sized electronic product.

A method of controlling a charging box unit according to the present disclosure includes: a current supply step of supplying electric current to a power circuit of a charging box; a consumed current confirmation step of confirming electric current consumed by the power circuit, a power cutoff step of cutting off power supplied to the power circuit when electric current confirmed in the current confirmation step is maintained at standby current or lower for a predetermined period; and a current resupply step of resupplying electric current to the power circuit when a predetermined period of cutting off the supply of power passes in the power cutoff step.

A mirror cabinet apparatus according to the present disclosure includes a cabinet body, a mirror door unit, a secret box provided with a lock, a sensor, a database, and a controller. The sensor may identify user biodata, or may identify an unlock signal input by a user. The database may store user biodata or unlock information of a user.

A rapid cooling device according to the present disclosure, which is a device installed in a mirror cabinet apparatus and configured to rapidly cool a beverage vessel, includes at least one holder configured to store a beverage vessel and to cool a beverage, a Peltier element that includes a cooling part cooled to a cooling temperature required by the holder, that includes a heat generation part placed on the opposite side of the cooling part and generating heat and that is disposed below the holder, a heat pipe connected between the cooling part and the holder and configured to deliver cold energy of the cooling part to the holder, and a heat release device placed to face the heat generation part, coupled to the heat generation part, configured to receive external air to release generated heat of the heat generation part by a flow of air.

A mirror cabinet apparatus according to the present disclosure, which is furniture attached onto a wall in a bathroom, includes a cabinet body provided with storage therein, a mirror door unit configured to open and close the cabinet body, a beverage storage part provided through the storage of the cabinet body, and a rapid cooling device. The rapid cooling device includes at least one holder installed through the beverage storage part and configured to store beverage vessels, a Peltier element that includes a cooling part cooled to a cooling temperature required by the holder, that includes a heat generation part placed on the opposite side of the cooling part and generating heat and that is disposed below the holder, a heat pipe connected between the cooling part and the holder and configured to deliver cold energy of the cooling part to the holder, and a heat release device disposed to face the heat generation part, coupled to the heat generation part, and configured to receive external air to release generated heat of the heat generation part by a flow of air.

A bathroom cabinet according to the present disclosure includes a height adjustment guide that is provided with a support stand protruding to support a shelf and that is attached onto a lateral wall of the cabinet body, and a shelf held at the support stand, wherein the height adjustment guide may be attached onto the lateral wall of the cabinet body using a magnetic property. The bathroom cabinet includes a magnet directly fixed to a back of a portion of a lateral wall of the cabinet body, to which the height adjustment guide is attached, or fixed by a magnet fixation guide, and the height adjustment guide includes a ferromagnetic substance. The support stand is disposed disproportionately towards one side of the height adjustment guide.

As for a mirror cabinet apparatus according to the present disclosure, the height adjustment guide may be inserted into a portion of a lateral wall of an inner panel, to which the height adjustment guide is attached, and a fixation groove having a shape corresponding to a shape of the height adjustment guide is provided. A depth of the fixation groove corresponds to a thickness of the height adjustment guide, and an uneven portion is not formed at a boundary between the fixation groove and the height adjustment guide inserted into the fixation groove.

### [Advantageous Effects]

The mirror cabinet apparatus may easily remove moisture such as steam and the like formed on a mirror, thereby enabling a user to easily look into the mirror.

The mirror cabinet apparatus may be provided with beauty lighting around a mirror and may vary lighting on the basis of a color temperature desired by a user to create a mood desired by the user, thereby enabling the user to choose a makeup appropriate for the mood or to check an appearance and the like of the user looks.

The mirror cabinet apparatus may cool an accommodation space in which items are stored, may keep beverages and the like cool, and may store cosmetics and the like at a proper temperature, thereby preventing them from going bad.

The mirror cabinet apparatus may be provided with a cooling device configured to cool an accommodation space in which items are stored to cool the accommodation space and may effectively remove moisture formed on a mirror door using heat generated during the process of operating the cooling device.

The mirror cabinet apparatus may be provided with a cooling space and a drying space, in which the cooling space the inner temperature of which is lower than another space and the drying space the inner temperature of which is higher than another space. **In** the cooling space, convenient products that easily go bad may be stored, and in the drying space, convenient products where germs breed easily may be stored, thereby making it possible to store products hygienically for a long time.

The mirror cabinet apparatus provided with a cooling space and a drying space may dry the drying space using heat released by a cooling device. Accordingly, the apparatus may be efficiently configured and maintained without an additional drying device and energy consumption for drying.

The mirror cabinet apparatus may provide lighting of a color temperature and luminous flux similar to natural light (or artificial light) in a selected location when a user selects the location.

In the mirror cabinet apparatus, a cooling space may be provided or separated when necessary. Accordingly, the mirror cabinet apparatus may offer a cooling function or storage may be expanded, and usability of the mirror cabinet apparatus may be improved.

The mirror cabinet apparatus may cut off supply of power when electronic products are completely charged or electricity is not consumed for a long period during the supply of power to the electronic products, thereby preventing a waste of electric power.

The mirror cabinet apparatus may supply power to various electronic products or may cut off power supplied to electronic products. Accordingly, the electronic products may be used in a safe manner. Additionally, exposure of wiring for supplying power in the mirror cabinet apparatus may be minimized. Accordingly, a clean and pleasant environment may be created in a bathroom.

The mirror cabinet apparatus may store items in a safe manner not to allow others to access the items.

The rapid cooling device may allow the user to drink a beverage kept cold in a bathroom. Accordingly, the user may keep a beverage before the shower and may drink the beverage after the shower in a bathroom.

The mirror cabinet apparatus, which is furniture in a bathroom, may rapidly cool a beverage, thereby improving user convenience, enabling the user to take a comfortable rest after busy work and improving usability of a bathroom.

As for the mirror cabinet apparatus, a shelf that divides a space in the cabinet may be firmly supported at a cabinet wall body using a magnetic property, and a height adjustment guide that supports the shelf may be readily attached to and detached from the wall body.

As for the mirror cabinet apparatus, a height of the shelf may be changed through rotation of the height adjustment guide, thereby making it possible to easily adjust the height of the shelf and to set the height of the shelf differently.

As for the mirror cabinet apparatus, a groove or a projection on the wall body may not be exposed when the shelf is supported at the cabinet wall body, thereby ensuring improved aesthetic qualities.

### [Description of the Drawings]

FIG. 1 is a perspective view illustrating a mirror cabinet apparatus according to a first embodiment.
FIG. 2 is a perspective view illustrating a state in which a mirror door of the mirror cabinet apparatus according to the first embodiment is opened.
FIG. 3 is a perspective view illustrating a mirror door unit of the mirror cabinet according to the first embodiment.
FIG. 4 is an exploded perspective view illustrating a mirror door unit of the mirror cabinet according to the first embodiment.
FIG. 5 is an exploded perspective view specifically illustrating a mirror door frame of the mirror cabinet according to the first embodiment.
FIG. 6 is a plane view illustrating an inner surface mirror of a mirror door unit of the mirror cabinet according to the first embodiment.
FIG. 7 is a plane view illustrating a heat generation sheet of the mirror cabinet according to the first embodiment.
FIG. 8 is a cross-sectional view for describing an attachment structure of a heat generation sheet.
FIG. 9 is a flow chart for describing defrosting operations using a heat generation sheet.
FIG. 10 is a perspective view illustrating a mirror cabinet apparatus according to a second embodiment.
FIG. 11 is a perspective view illustrating a state in which a door of the mirror cabinet apparatus according to the second embodiment is opened.
FIG. 12 is a perspective view illustrating a cooling device by opening a door of the mirror cabinet apparatus according to the second embodiment and by disassembling a part of the opened door of the mirror cabinet apparatus.
FIG. 13 is an enlarged perspective view illustrating portion "A" in FIG. 12.
FIG. 14 is a front view illustrating a state in which a door of the mirror cabinet apparatus according to the second embodiment is opened.
FIG. 15 is a cross-sectional view illustrating a state in which a door of the mirror cabinet apparatus according to the second embodiment is closed.
FIG. 16 is a cross-sectional view illustrating a state in which a door of the mirror cabinet apparatus according to the second embodiment is opened.
FIG. 17 is a perspective view illustrating a state in which a door of a mirror cabinet apparatus according to a third embodiment is opened.
FIG. 18 is an enlarged perspective view illustrating portion "B" in FIG. 17.
FIG. 19 is a front view illustrating a state in which a door of the mirror cabinet apparatus according to the third embodiment is opened.
FIG. 20 is a perspective view illustrating a mirror cabinet apparatus provided with a cooling space and a drying space according to a fourth embodiment.
FIG. 21 is a view illustrating an intake fan, an exhaust fan, and a circulation fan provided at the mirror cabinet apparatus according to the fourth embodiment.
FIG. 22 is a view illustrating a flow path of air of the mirror cabinet apparatus according to the fourth embodiment.
FIGS. 23 and 24 are views illustrating various arrangements of a machine chamber for cooling and a drying space in an accommodation space.
FIG. 25 is a view illustrating a water trap according to an embodiment.
FIG. 26 is a view illustrating a structure of a bottom of a drying space of a mirror cabinet apparatus according to an embodiment.
FIG. 27 is a color temperature table on the basis of each time slot.
FIG. 28 is a graph illustrating color temperatures that are changed on the basis of a flow of time.
FIG. 29 is a view illustrating color temperatures based on the type of a light source.
FIG. 30 is a view illustrating a state in which an input unit is configured using a mobile device.
FIG. 31 is a view illustrating a bathroom convenient device comprised of a mirror cabinet apparatus and a sink cabinet apparatus.
FIG. 32 is a perspective view illustrating a mirror cabinet apparatus according to a fifth embodiment.
FIG. 33 is a perspective view illustrating a state in which a door of the mirror cabinet apparatus according to the fifth embodiment is opened.
FIG. 34 is a perspective view illustrating a state in which a cooler of the mirror cabinet apparatus according to the fifth embodiment is separated.
FIG. 35 is an enlarged perspective view illustrating a cooler unit of a mirror cabinet apparatus according to an embodiment.
FIG. 36 is a perspective view separately illustrating a cooling part provided at a cooler unit of the mirror cabinet apparatus according to the fifth embodiment.
FIG. 37 is an exploded perspective view illustrating a cooling part provided at a cooler unit of the mirror cabinet apparatus according to the fifth embodiment.
FIG. 38 is a cross-sectional view illustrating a cooling part provided at a cooler unit of the mirror cabinet apparatus according to the fifth embodiment.
FIG. 39 is a perspective view illustrating a state in which a charging box door is opened when a charging box unit according to the fifth embodiment is coupled to an upper portion of a cooler unit.
FIG. 40 is a front view illustrating the charging box unit according to the fifth embodiment.
FIG. 41 is a perspective view illustrating a state in which a part of the charging box according to the fifth embodiment is cut.
FIG. 42 is a front view illustrating a state in which the charging box according to the fifth embodiment is being used.
FIG. 43 is a perspective view illustrating a state in which a mirror door unit of a mirror cabinet apparatus according to a sixth embodiment is opened.
FIG. 44 is a perspective view illustrating a state in which a secret door of a secret box provided at the mirror cabinet apparatus according to the sixth embodiment is opened in FIG. 43.
FIG. 45 is a view illustrating a secret box according to an embodiment.
FIG. 46 is a view illustrating a display for inputting a password of a secret box according to an embodiment.
FIG. 47 is a view illustrating a display for inputting a pattern of a secret box according to an embodiment.
FIG. 48 is a view illustrating a fingerprint recognition device of a secret box according to an embodiment.
FIG. 49 is a view illustrating a hanger and an entry hole that are exposed when a secret box according to an embodiment is opened.
FIGS. 50 and 51 are views illustrating a lock with a secret box opened and with a secret box closed.
FIG. 52 is a view illustrating a mirror cabinet apparatus according to a seventh embodiment.
FIG. 53 is a view illustrating a rapid cooling unit of the mirror cabinet apparatus according to the seventh embodiment.
FIG. 54 is a schematic perspective view illustrating a rapid cooling unit according to an embodiment.
FIG. 55 is a schematic front view illustrating a rapid cooling unit according to an embodiment.
FIG. 56 is a view illustrating an operation state in a heat release device of a rapid cooling unit according to an embodiment.
FIG. 57 is a view for describing a coupling structure and movements of a holder guide of a rapid cooling unit according to an embodiment.
FIG. 58 is a view for describing upward and downward movements of a holder guide that constitutes a rapid cooling unit according to an embodiment.
FIG. 59 is a view illustrating a mirror cabinet apparatus according to an eighth embodiment.
FIG. 60 is a perspective view illustrating inner panels and shelves of the mirror cabinet apparatus according to the eighth embodiment.
FIG. 61 is a view illustrating one surface of a height adjustment guide according to an embodiment.
FIG. 62 is a view illustrating a back of the surface in FIG. 61 of a height adjustment guide according to an embodiment.
FIG. 63 is a view illustrating a state in which a height adjustment guide of a mirror cabinet apparatus according to the present disclosure is attached onto a lateral wall of a built-in panel.
FIG. 64 is a view illustrating a magnet fixation guide installed on a lateral wall of a built-in panel of a mirror cabinet apparatus according to the present disclosure.
FIG. 65 is a view illustrating a fixation groove formed on a lateral wall of a built-in panel according to an embodiment.
FIG. 66 is a view illustrating a support stand formed at a height adjustment guide according to an embodiment.
FIG. 67 is a view illustrating a state in which a support stand of a cabinet according to an embodiment supports a shelf.
FIG. 68 is a view illustrating a state in which a support stand of a cabinet according to an embodiment is placed disproportionately towards one side of a height adjustment guide at an upper portion of the built-in panel.
FIGS. 69 and 70 are views illustrating a state in which a height of a shelf is adjusted on the basis of a method of attaching a height adjustment guide of a cabinet according to an embodiment.
FIG. 71 is a view illustrating a shelf of a cabinet according to an embodiment.
FIG. 72 is a view illustrating a state in which both ends of a shelf according to an embodiment are directly attached onto a lateral wall of a built-in panel.

### [Best Mode]

Below, a mirror cabinet apparatus according to embodiments is described.

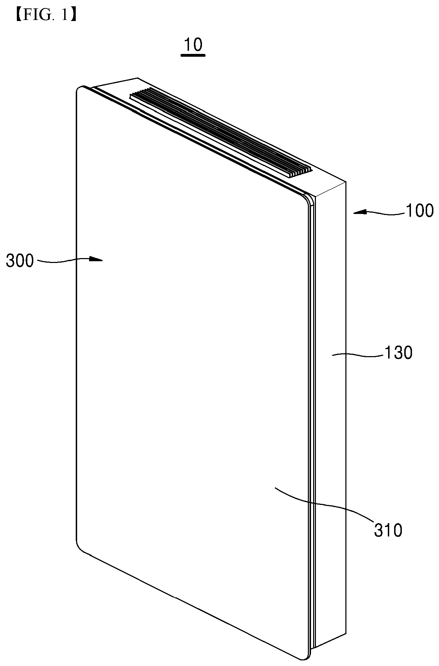

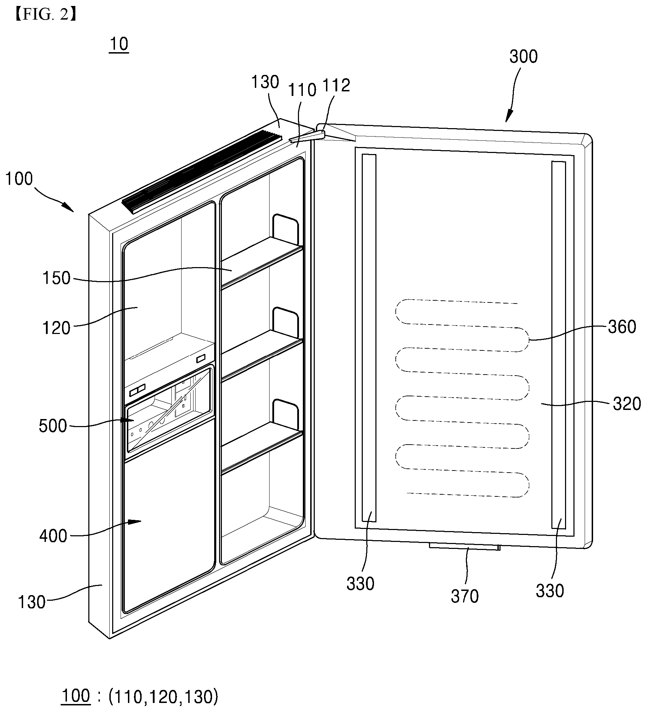

FIG. 1 is a perspective view illustrating a mirror cabinet apparatus according to a first embodiment, and FIG. 2 is a perspective view illustrating a state in which a mirror door of the mirror cabinet apparatus according to the first embodiment is opened.

Referring to FIGS. 1 and 2, a mirror cabinet apparatus 10 according to the first embodiment is a convenient apparatus installed on a wall in a bathroom or a powder room and the like.

The mirror cabinet apparatus 10 includes a cabinet body 100 that is provided with an accommodation space therein, and a mirror door unit 300 that opens and closes the accommodation space of the cabinet body 100.

The mirror cabinet apparatus 10 is a combination of a mirror cabinet regarded as furniture generally made of a wooden material or a stone material with an electronic device, i.e., a combination of furniture and an electronic product.

The cabinet body 100 provides a structural strength and forms an appearance. The cabinet body 100 includes a frame 110 that provides strength, a built-in panel 120 that forms an inner space, and an exterior panel 130 that forms an appearance. The frame 110 may be integrated into the built-in panel 120 or the exterior panel 130.

The frame 110, which provides strength, may be made of a metallic material, a reinforced plastic material, or a composite material and the like. The built-in panel 120 and the exterior panel 130 may be made of an injection mold such as a synthetic resin material and the like. Further, the frame 110 may be integrated into the built-in panel 120 or the exterior panel 130. The frame 110 may be additionally formed and then may be combined with the built-in panel 120 or the exterior panel 130.

The mirror door unit 300 may be rotatably coupled to one side of the cabinet body 100 by means of a rotary connection member 112 such as a hinge and the like. As another example, the mirror door unit may open and close the cabinet body 100 while sliding with respect to the cabinet body 100.

When the mirror door unit 300 is opened, a user may access the accommodation space in the cabinet body 100. After opening the mirror door unit 300, the user may store items in the accommodation space or may take out stored items. Further, after opening the mirror door unit 300, the user may use a convenient unit (a belowdescribed cooler unit, charging box unit, secret box unit and the like) disposed in the accommodation space.

As for the cabinet body 100, various items may be stored in the accommodation space, and, to this end, a plurality of shelves 150 and the like may be disposed on the built-in panel 120.

The cabinet body 100 may be provided with various types of functional units in an accommodation space of the built-in panel120. The functional units may include a cooler unit 400, a charging box unit 500, a secret box unit (not illustrated) and the like.

In the embodiment, the mirror door unit 300 is a single door-type unit that is connected to one side of the cabinet body 100 and that opens and closes the accommodation space of the cabinet body 100. Additionally, a direction in which the mirror door unit 300 is hinge-connected to the cabinet body 100 may be changed according to installation conditions. In the illustrated embodiment, the right side of the mirror door unit 300 is connected to the cabinet body 100 by a hinge. However, the left side of the mirror door unit 300 may also be connected to the cabinet body 100 by a hinge.

Further, the mirror door unit 300 may be a double door-type unit that is connected to both sides of the cabinet body 100 and that shields the accommodation space of the cabinet body 100, considering a size or usability and the like of the cabinet body 100.

The mirror door unit 300 includes at least one mirror. In the illustrated embodiment, the mirror door unit 300 is provided with an outer surface mirror 310 on an outer surface thereof and provided with an inner surface mirror 320 on an inner surface thereof. The outer surface mirror 310 is used with the mirror door unit 300 closed, and the inner surface mirror 320 is used with the mirror door unit 300 opened. In case the mirror door unit 300 has a sliding-type opening and closing structure, the mirror door unit 300 may not require the inner surface mirror 320.

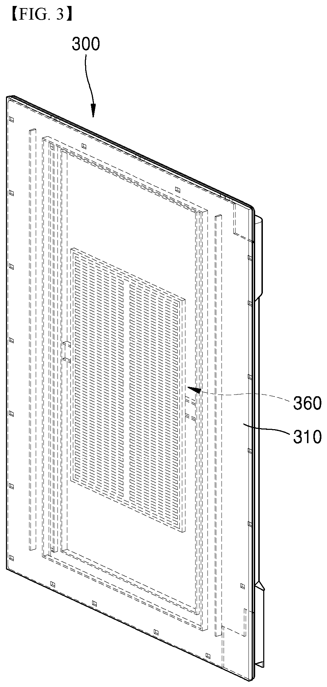

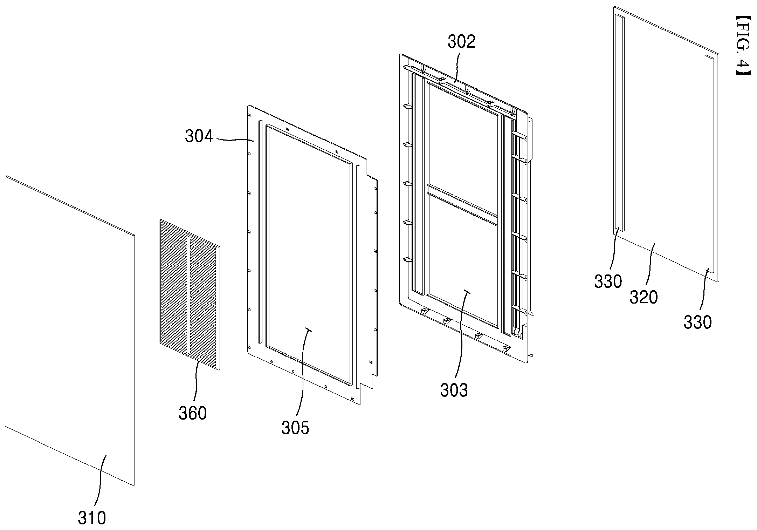

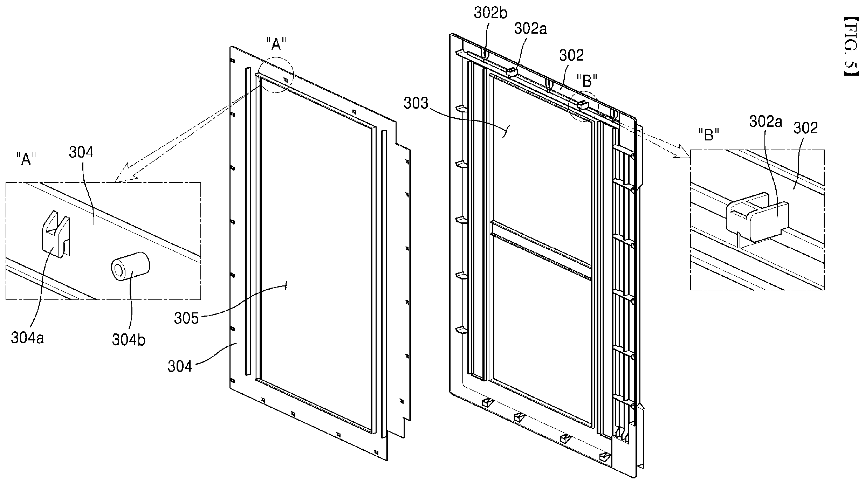

FIG. 3 is a perspective view illustrating a mirror door unit of a mirror cabinet according to the first embodiment, FIG. 4 is an exploded perspective view illustrating a mirror door unit of the mirror cabinet according to the first embodiment, and FIG. 5 is an exploded perspective view specifically illustrating a mirror door frame of the mirror cabinet according to the first embodiment.

Referring to FIGS. 3 to 5, the mirror door unit 300 may include a door frame 302 that is rotatably coupled to one side of the cabinet body 100 through a rotary connection member 112 such as a hinge and the like.

The door frame 302 forms a skeleton and an appearance of the mirror door unit 300. The door frame 302 may include a space for mounting electronic components and the like. The door frame 302 may be made of a synthetic resin material through the process of injection molding or extrusion molding. The door frame 302 may be formed by assembling divided injection molds or extrusion molds.

The outer surface mirror 310 may be mounted onto an outer surface of the door frame 302. In this case, a cover frame 304 may be disposed between the door frame 302 and the outer surface mirror 310.

The cover frame 304 may be provided with a penetration hole 305. The cover frame 304 may be formed into a frame that supports a brim of the outer surface mirror 310 and may be provided with a penetration hole 305 at a central portion thereof.

A heat generation sheet 360 may be disposed in the penetration hole 305 of the cover frame 304. The heat generation sheet 360 heats the outer surface mirror 310 to remove moisture formed on a surface of the outer surface mirror 310.

The outer surface mirror 310 may be formed to cover the entire surface of the cover frame 304. The outer surface mirror 310 may be coupled to a front of the cover frame 304 and may serve as an exterior panel that forms the appearance of the mirror cabinet apparatus.

The inner surface mirror 320 may be mounted onto an inner surface of the door frame 302. The door frame 302 may be formed into a frame that supports an edge of the inner surface mirror 320. The door frame 302 may be provided with a penetration hole 303 at a central portion thereof. Beauty lighting 330 may be placed around the inner surface mirror 320.

In the illustrated embodiment, the inner surface mirror 320 is attached onto an inner surface of the door frame 302, and the outer surface mirror 310 is attached to the cover frame 304. However, the door frame 302 may be placed at an outer side of the mirror cabinet apparatus 10, and the cover frame 304 may be placed at an inner side of the mirror cabinet apparatus 10.

**In** a structure in which the outer surface mirror 310 and the inner surface mirror 320 are provided respectively on both surfaces of the mirror door unit 300, a frame may be separated into two frames, i.e., the door frame 302 and the cover frame 304, and the outer surface mirror 310 and the inner surface mirror 320 may be respectively attached to each of the frames and then the door frame 302 and the cover frame 304 may be assembled.

Referring to FIG. 5, "A" illustrates a holding member 304a formed at a portion of a rear surface of the cover frame 304, and "B" illustrates a hook member 302a of the door frame 320.

To assemble the door frame 302 and the cover frame 304, the hook member 302a may be formed at one side of the door frame 302. The holding member 304a coupled to the hook member 302a may be formed at one side of the cover frame 304.

A plurality of hook members 302a may be formed at the door frame 302. Further, a plurality of holding members 304a inserted into and coupled to the hook members 302a may be formed at the cover frame 304.

The holding member 304a of the cover frame 304 may be inserted and integrated into the hook member 302a of the door frame 302 to form the mirror door unit 300.

In the embodiment, the hook member 302a is formed at the door frame 302, and the holding member 304a is formed at the cover frame 304. However, the hook member 302a may be formed at the cover frame 304 and the holding member 304a may be formed at the door frame 302.

The mirror door unit 300 may further include a coupling structure that prevents the cover frame 304 from separating from the door frame 302 after the cover frame 304 is coupled to the door frame 302.

For the mirror door unit 300, a through hole 304b, into which a coupler such as a bolt and the like is inserted, may be formed at the cover frame 304, and a coupling boss 302b, to which the coupler inserted into the through hole is coupled, may be formed at the door frame 302, as an example of the coupling structure.

For the mirror door unit 300, the coupling of the cover frame 304 and the door frame 302 may be maintained through the coupling structure of the hook member 302a and the holding member 304a, and the cover frame 304 and the door frame 302 may be coupled by the coupler.

For the mirror door unit 300, the cover frame 304 may be easily separated and drawn from the door frame 302 by separating the hook member 302a and the holding member 304a in case components inside the mirror door unit 300 need to be repaired, replaced, and the like.

In the embodiment, for the mirror door unit 300, the cover frame 304 is coupled to a front of the door frame 302. However, the coupling structure may vary.

For example, for the mirror door unit 300, the cover frame 304 may be placed on the front of the door frame 302 and, through a coupling of a plurality of couplers such as a bolt and the like, the door frame 302 and the cover frame 304 may be coupled. Further, for the mirror door unit 300, the door frame 302 and the cover frame 304 may be coupled through the process of welding.

Additionally, a heat generation sheet 360 may be disposed in the mirror door unit 300. The heat generation sheet 360 may heat the outer surface mirror 310 or the inner surface mirror 320, and may remove moisture formed on surfaces of the mirrors using the heat supplied by the heat generation sheet 360.

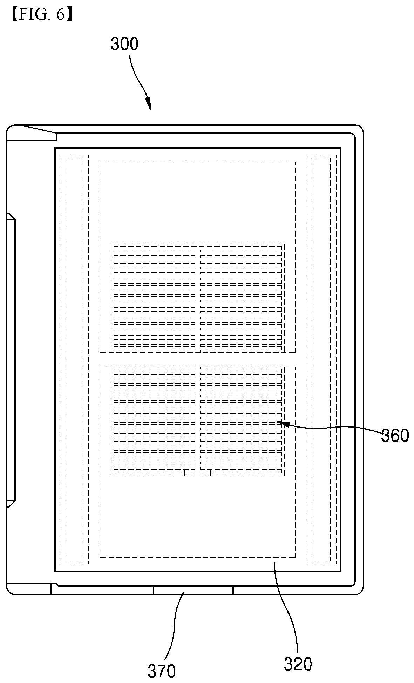

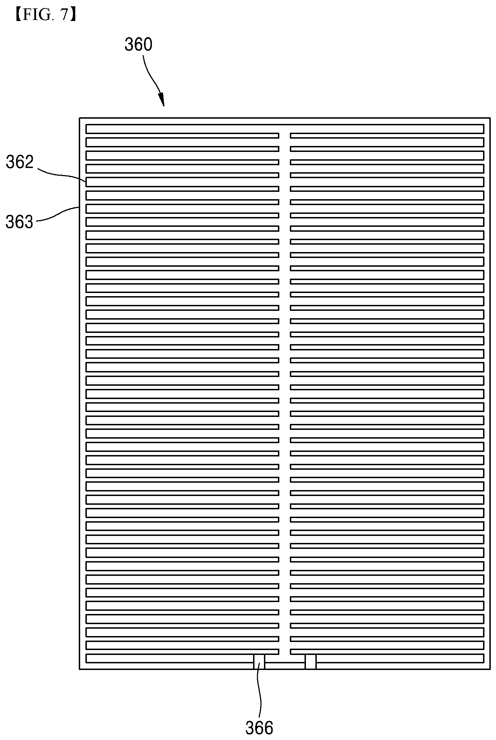

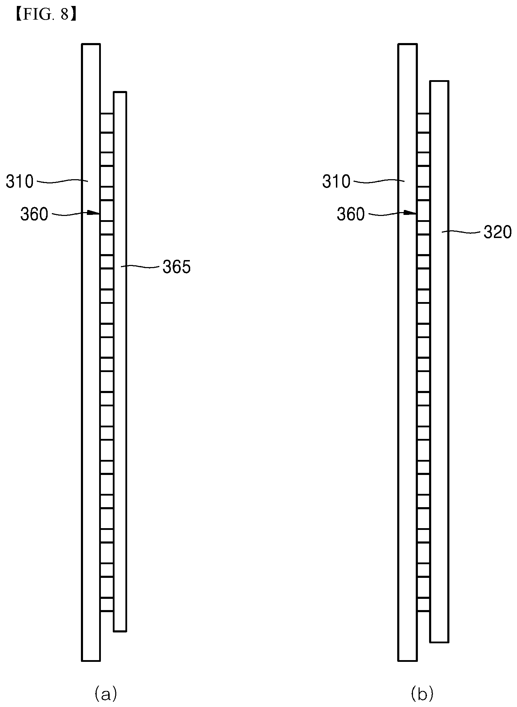

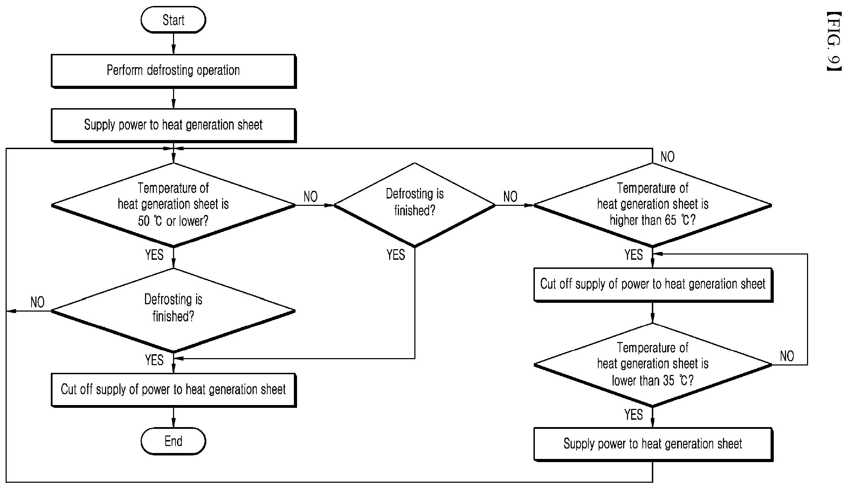

FIG. 6 is a plane view illustrating an inner surface mirror of a mirror door unit of the mirror cabinet according to the first embodiment, FIG. 7 is a plane view illustrating a heat generation sheet of the mirror cabinet according to the first embodiment, FIG. 8 is a cross-sectional view for describing an attachment structure of a heat generation sheet, and FIG. 9 is a flow chart for describing defrosting operations using a heat generation sheet.

Referring to FIGS. 6 to 8, the heat generation sheet 360 may include heating coils 362 that are arranged in a plurality of rows, and the heating coils 362 covered with an insulator 363 may be provided as a surface-type heat generator.

Preferably, as in (a) of FIG. 8, one surface of the heat generation sheet 360 may contact an inner surface of the mirror. Further, the heat generation sheet 360 may be provided with a thermal insulation material 365 on the other side thereof. Accordingly, a fire or injury caused by heat of the heat generation sheet 360 may be prevented.

In the embodiment, the heat generation sheet 360 may be preferably installed to contact the inner surface of the outer surface mirror 310 that frequently contacts moisture.

To this end, one surface of the heat generation sheet 360 may be placed to contact the inner surface of the outer surface mirror 310 in the penetration hole 305 of the cover frame 304.

In the embodiment, the thermal insulation material 365 is installed on the other surface of the heat generation sheet 360. However, as in (b) of FIG. 8, the other surface of the heat generation sheet 360 may be installed to contact the inner surface mirror 320. As in (b) of FIG. 8, the outer surface mirror 310 and the inner surface mirror 320 all contact both surfaces of the heat generation sheet 360 such that a single heat generation sheet 360 removes moisture of the two mirrors 310, 320.

The heat generation sheet 360 may reduce formation of moisture on the inner surface mirror 320 with the mirror door unit 300 opened. Further, the heat generation sheet 360 may heat an inner space of the mirror cabinet apparatus 10 with the mirror door unit 300 closed. The mirror cabinet apparatus 10 may store towels and the like and the towels may be kept dry by the heat generation sheet 360.

The cabinet body 100 or the mirror door unit 300 may be provided with an operation switch 370 for operating the heat generation sheet 360 at their one side, and the operation switch 370 may control the heat generation sheet 360 to allow the heat generation sheet to perform a dehumidification function or to stop performing the dehumidification function.

The operation switch 370 may be provided with a heat generation controller for controlling operations of the heat generation sheet 360 on the basis of input operations. Further, one side of the heat generation sheet 360 may be connected with a temperature sensor 366 that senses temperatures.

In the embodiment, the operation switch 370 may be provided on the outer surface of the mirror door unit 300, i.e., at one side of a bottom of the cover frame 304. The operation switch 370 may be provided at the mirror door unit 300, specifically, at a bottom of a front of the cover frame 304 in a way that the operation switch is exposed. Further, the operation switch may also be provided at one side of a bottom or a lateral surface of the door frame 302. In the embodiment, the position of the operation switch 370 may not be limited. Accordingly, the operation switch 370 may be provided at various positions for user convenience.

The operation switch 370 may also be provided at one side of the cabinet body 100 in addition to the mirror door unit 300. Preferably, the operation switch 370 may be provided on a lateral surface of the cabinet body 100 or at a bottom of the cabinet body 100.

Further, a plurality of operation switches 370 may be provided at a front of the mirror door unit 300, a rear of the mirror door unit 300 or at the cabinet body 100. The operation switch 370 may be provided at proper positions such that proper functions are performed using the operation switch 370 when the mirror door unit 300 opens or closes the cabinet body 100, and a plurality of operation switches 370 may be dividedly provided.

In the embodiment, the operation switch 370 controls operations of the heat generation sheet 360. However, the operations and functions of the operation switch 370 are not limited. The shape and function of the operation switch 370 may vary on the basis of additional functions for convenience.

For example, the cabinet body 100 may be provided with a speaker and the like connected to an external device, at one side thereof, and the operation switch 370 may be provided with a sound manipulation knob that controls operations including the volume and the like of the speaker.

The temperature sensor 366 may sense a temperature of the heat generation sheet 360 and may deliver the sensed temperature to the heat generation controller, and the heat generation controller may control the heat generation sheet 360 using the sensed temperature such the heat generation sheet 360 operates at a predetermined temperature.

Preferably, the heat generation controller may control the heat generation sheet 360 such that a temperature of the heat generation sheet 360 is maintained from 35 to 65 °C. More preferably, the heat generation controller may control the heat generation sheet 360 such that a temperature of the heat generation sheet 360 is maintained at 50 °C.

The heat generation controller may control the temperature of the heat generation sheet 360 considering humidity of an environment where the mirror cabinet apparatus 10 is installed. In a bathroom, moisture formed on the surface of the mirror may be removed effectively at a temperature of 45 °C or higher.

In the embodiment, the operation temperature of the heat generation sheet 360 may not be limited, and, in case the mirror cabinet apparatus 10 is installed in an environment with high temperature and high humidity or low ventilation, the operation temperature of the heat generation sheet 360 may be adjusted to effectively remove moisture.

Preferably, the heat generation controller may control the heat generation sheet such that the temperature of the heat generation sheet 360 does not exceed 65 °C. In case the temperature of the heat generation sheet 360 exceeds 65 °C, a fire or an incorrect operation of the heat generation sheet 360 may occur. Accordingly, the heat generation controller may forcibly stop the operation of the heat generation sheet 360 in case the temperature measured by the temperature sensor 366 exceeds 65 °C.

The heat generation controller may sense a temperature of the heat generation sheet 360 through the temperature sensor 366 in a state in which a heater stops operating, and, after a predetermined period passes, may sense a temperature of the heat generation sheet 360 through the temperature sensor 366 again, and then may determine the overheating of the heat generation sheet 360. Through the sensing by the heat generation controller, the heat generation controller may determine whether to operate the heat generation sheet 360. In case a temperature measured by the temperature sensor 366 is lower than 35 °C, the heater may determine that the problem of overheating is resolved and may control the heat generation sheet 360 such that the heat generation sheet operates again.

In the embodiment, operations of the heat generation sheet 360 are controlled on the basis of an operation input of the operation switch 370 and a predetermined temperature. However, the heat generation sheet 360 may sense moisture and may automatically control its operations.

To this end, a moisture sensor (not illustrated) that senses moisture may be provided at one side of the cabinet body 100 or the mirror door unit 300.

The moisture sensor may automatically sense humidity of the surroundings of the mirror cabinet apparatus 10 and may deliver the sensed humidity to the heat generation controller. The heat generation controller may control operations of the heat generation sheet 360 on the basis of the humidity sensed by the moisture sensor.

In the embodiment, the mirror door unit 300 may further include a lighting unit provided at least at one side of a perimeter of the mirror. The lighting unit may be installed around a perimeter of the inner surface mirror 320, and may be installed at an inner side of the inner surface mirror 320 such that light passes through the inner surface mirror 320 and emits.

The lighting unit according to the invention includes beauty lighting 330 provided at an inner side of the mirror door unit 300, i.e., at one side of the door frame 302.

The beauty lighting 330 according to the invention operates in a state in which the mirror door unit 300 is opened. Further, the beauty lighting 330 emits light towards a user when the user looks into the mirror for a make-up and the like.

Preferably, the beauty lighting 330 of the lighting unit may adjust color temperatures. To this end, a lighting switch for controlling operations of the beauty lighting 330 may be provided at one side of the cabinet body 100 or the mirror door unit 300.

The lighting switch may be configured to be integrated into the operation switch 370 that controls operations of the het generation sheet 360.

The lighting switch may adjust color temperatures of the beauty lighting 330. Accordingly, the user may adjust a color temperature of the beauty lighting 330 to change a mood, and may light up the user and a surrounding environment of the user at a color temperature similar to a color temperature of a specific environment. The user may operate the lighting switch such that a temperature of lighting is implemented previously as a temperature of lighting in an environment such as a party or a meeting and the like to be participated by the user. Accordingly, the user may change makeup colors and the like using the implemented temperature of lighting.

In the embodiment, the beauty lighting 330 is operated by the lighting switch. However, control over operations of the beauty lighting 330 may not be limited but may vary.

The beauty lighting 330 may be controlled to automatically operate on the basis of opening of the mirror door unit 300. An illuminance sensor (not illustrated) that senses illumination may be provided at one side of the cabinet body 100 or the mirror door unit 300. Illumination sensed by the illuminance sensor is delivered to a lighting controller such that operations of the lighting unit are controlled. The lighting controller may adjust color temperature and brightness on the basis of brightness of the surroundings sensed by the illuminance sensor.

Further, the illuminance sensor may be provided in the cabinet body 100. The lighting controller may control a lighting part such that the lighting part does not operate because the illuminance sensor does not sense light in a state in which the mirror door unit 300 is closed. An illuminance controller may control the lighting part such that the lighting part automatically operates in connection with the opening of the mirror door unit 300 because the illuminance sensor senses light in a state in which the mirror door unit 300 is opened.

The beauty lighting 330 may be implemented in the form of a surface light emitting light. Specifically, the lighting part may include at least one light emitting element. A surface light emitting light may include an LED element or an OLED element. The lighting part may include a diffusion panel that diffuses light emitted from the light emitting element over an entire light-emitting surface area. The LED element or the OLED element may include a red light source, a blue light source and a green light source, and may adjust brightness of the light source of each color to adjust a color temperature.

In the embodiment, the lighting unit may further include an exterior light provided at one side of the cabinet body 100 or the mirror door unit 300 in addition to the beauty lighting 330. The exterior light may be provided around the cabinet body 100 or the mirror door unit 300 in a predetermined length in the form of a strap.

The exterior light may emit light such that a color temperature is adjusted on the basis of a surrounding environment. The exterior light may change a mood of an indoor space on the basis of a surrounding environment where the mirror cabinet apparatus 10 is installed.

In the embodiment, the beauty lighting 330 is placed at edges of both sides of the inner surface mirror 320. However, the beauty lighting 330 may be placed around the outer surface mirror 310 or inside the outer surface mirror 310.

Operations of the mirror cabinet apparatus 10 with the above-described configuration are described as follows.

First, a mirror cabinet apparatus 10 is installed in a place such as a bathroom and the like.

A user stores towels, washing items or bathroom products and the like in storage provided in the mirror cabinet apparatus 10.

When the user uses a bathroom, a large amount of moisture may be generated. The moisture may be formed on an outer surface mirror 310 provide at a mirror door unit 300 of the mirror cabinet apparatus 10 as steam. When steam is formed on the outer surface mirror 310, the user may remove the steam through a dehumidification operation of an operation switch 370.

When a defrosting function is performed, a heat generation sheet 360 in the outer surface mirror 310 is heated. The heat generation sheet 360 may be heated to temperature from 35 to 65 °C, and, preferably, may be heated to 50 °C.

The heat generation sheet 360 may heat the outer surface mirror 310; accordingly, moisture such as steam and the like formed on the surface of the outer surface mirror 310 may be removed. The heat generation sheet 360 is controlled such that the heat generation sheet 360 is heated to a temperature of 35 to 65°C. However, the heat generation sheet 360 may be heated to a temperature of higher than 65 °C.

A temperature sensor 366 provided at one side of the heat generation sheet 360 senses a temperature of the heat generation sheet 360 and delivers the sensed temperature to a heat generation controller, and the heat generation controller determines that the heat generation sheet is overheated in case a temperature of the heat generation sheet 360 exceeds 65 °C. In this case, the heat generation controller stops the operations of the heat generation sheet 360.

The heat generation controller senses a temperature of the heat generation sheet 360 using the temperature sensor 366 after a predetermined period passes. In case a temperature sensed by the temperature sensor 366 is lower than 35 °C, the heat generation controller heats the heat generation sheet 360 again to perform the defrosting function.

When moisture formed on the surface of the outer surface mirror 310 is removed through the above-described processes, the heat generation controller stops the operation of the heat generation sheet 360 and finishes the defrosting function.

Below, a mirror cabinet apparatus according to a second embodiment is described.

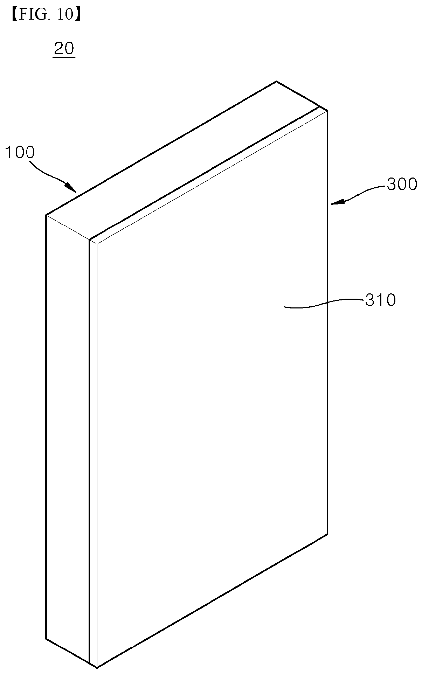

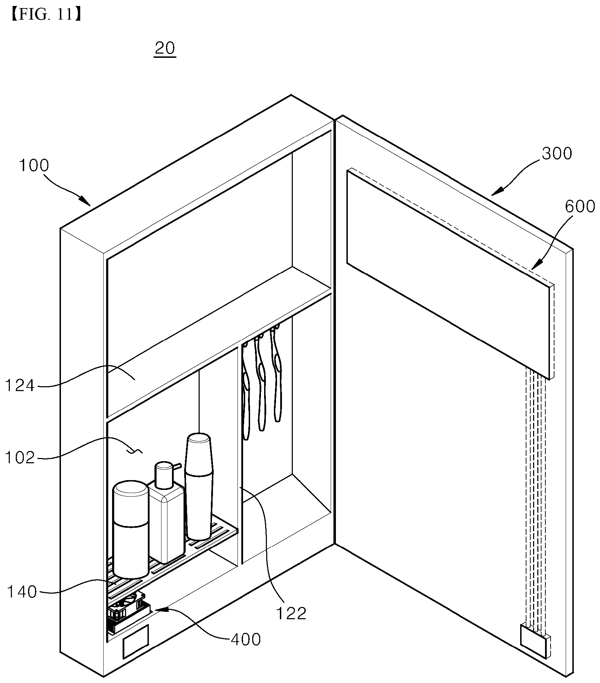

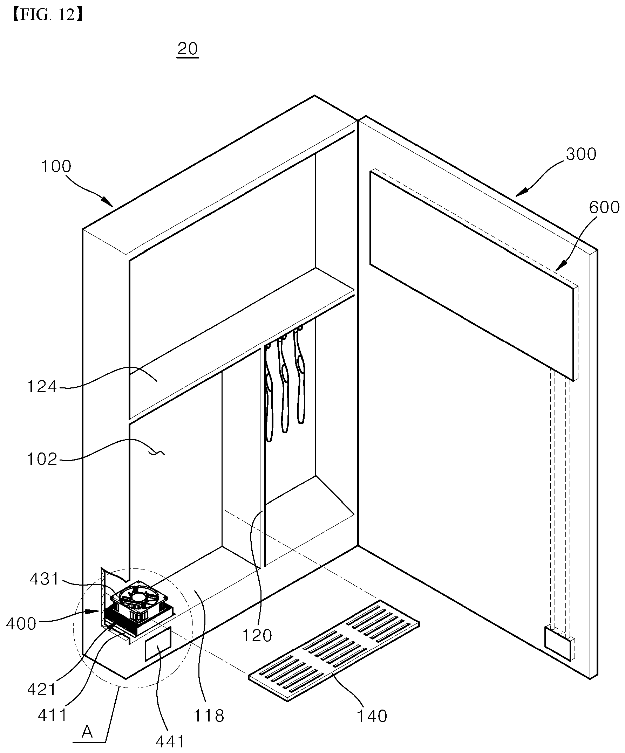

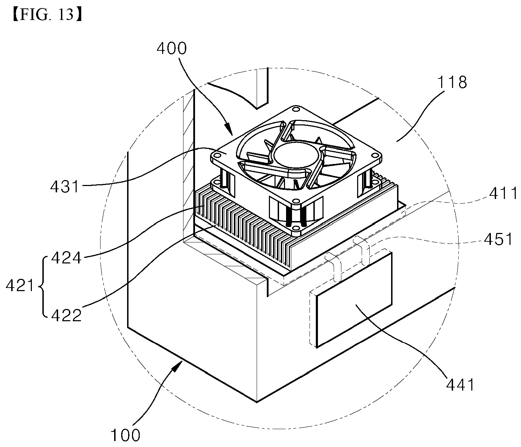

FIG. 10 is a perspective view illustrating a mirror cabinet apparatus according to a second embodiment, FIG. 11 is a perspective view illustrating a state in which a door of the mirror cabinet apparatus according to the second embodiment is opened, FIG. 12 is a perspective view illustrating a cooling device by opening a door of the mirror cabinet apparatus according to the second embodiment and by disassembling a part of the opened door of the mirror cabinet apparatus, and FIG. 13 is an enlarged perspective view illustrating portion "A" in FIG. 12.

As illustrated, the mirror cabinet apparatus 20 according to the second embodiment, which is a convenient apparatus installed in a bathroom and the like, may include a cabinet body 100 and a cooling device.

Components that perform the same or similar functions as the components of the first embodiment are given the same names and reference numerals.

The mirror cabinet apparatus 20 includes a cabinet body 100 that is provided with an accommodation space therein, and the cabinet body 100 includes a mirror door unit 300 that opens and closes the accommodation space at one side of the cabinet body 100.

The cabinet body 100, which provides a structural strength and forms an appearance, may have a structure in which the accommodation space in the cabinet body 100 is opened in a frontward direction.

The cabinet body 100 may store a variety of items in the accommodation space. To this end, a wall 122 or a plurality of shelves 124 may be provided in the cabinet body 100.

The cabinet body 100 may be provided with a cooler unit 400 for cooling the inside of the cabinet body at one side thereof. The cooler unit 400 may be connected to an external power supply to perform operations. In the embodiment, a configuration in which electric current is supplied to the cooler unit 400 is not specifically disclosed. However, the cabinet body 100 may be provided with a power circuit for supplying electric current at one side thereof, and the power circuit may be connected to a power socket supplied outside of the mirror cabinet apparatus 20 to supply electric current.

The cooler unit 400 may include at least one Peltier element 411.

The Peltier element 411 is a thermoelectric element using the Perltier effect that is a phenomenon in which a difference in temperatures at both ends of a conductive material is maintained when electric current flows in the conductive material. A cooler unit to which a Peltier element 411 is applied may become smaller than a cooler unit to which a refrigerant circulation method is applied and which requires a pump and a compressor for circulating and compressing refrigerants.

One surface of the Peltier element 411 becomes a cooling surface and the other surface of the Peltier element 411 becomes a heat release surface from which heat is released, through the supply of electric current. The cooling surface of the Peltier element 411, where cooling is performed, may be placed at the accommodation space 102. Accordingly, a temperature in the accommodation space 102 may drop.

As for the Peltier element 411, the heat release surface on which heat release is performed may be disposed outside of the accommodation space 102. Accordingly, the cooling surface of the Peltier element 411 may be cooled, may absorb generated heat and may release the heat out of the accommodation space 102. Then, the heat in the accommodation space 102 may be cooled.

Preferably, the cooler unit 400 has an increased surface area that contacts air of the accommodation space 102 to improve efficiency of cooling by the Peltier element 411.

To this end, the cooler unit 400 may include a cooling block 421 that contacts the cooling surface of the Peltier element 411. The cooling block 421 may be made of a material having excellent thermal conduction, and the material may typically include aluminum or copper and the like.

The cooling block 421 may include a contact plate 422 that contacts the Peltier element 411, and a plurality of cooling pins 424 that extend from the contact plate 422 towards the accommodation space 102.

The contact plate 422 may contact the cooling surface of the Peltier element 411 and may be cooled, and air in the accommodation space 102 may be cooled while passing between the cooling pins 424 that are cooled through the cooling of the contact plate 422.

Preferably, a blowing fan 431, which forcibly circulates air in the accommodation space 102 to allow the air to contact the cooling block 421, may be provided at one side of the cooling block 421.

In this embodiment, the cooler unit 400 uses the Peltier element 411. However, a method by which air is cooled by circulating refrigerants may also be applied.

In this embodiment, the mirror cabinet apparatus 20 may pull down a temperature in the accommodation space 102 by operating the cooler unit 400. Accordingly, the mirror cabinet apparatus 20 may store items stored in the accommodation space 102 at low temperatures.

The cabinet body 100 may directly store items in the accommodation space 102. However, the cabinet body 100 may further include a grill shelf 140 that prevents the items from directly contacting the cooler unit 400 and that allows cold air to communicate. Stored items may be disposed on the grill shelf 140, and cold air may pass through the grill shelf 140 and may be supplied to the accommodation space 102.

The grill shelf 140 may be provided with a plurality of through holes to supply air in the accommodation space 102 to the cooler unit 400 or to supply air cooled in the cooler unit 400 to the accommodation space 102 again.

The mirror cabinet apparatus 20 uses the cooler unit 400 to cool the accommodation space 102. The mirror cabinet apparatus 20 may also use heat generated in the cooler unit 400 to remove moisture and the like on the outer surface mirror 310 of the mirror door unit 300.

As for the Peltier element 411, one side absorbs heat and its temperature is decreased, and the other side generates heat and its temperature is increased, when electric current flows in the Peltier element 411.

In case the generated heat is effectively discharged, efficiency of the Peltier element 411 is enhanced. In this context, it is important to deal with heat generated in the Peltier element 411.

The generated heat may be simply discharged outwards. However, the generated heat may be used to remove moisture of the mirror door unit 300. In this case, an efficient configuration of the apparatus may be ensured.

Accordingly, instead of an additional device or additional energy, wasted heat generated in the cooler unit 400 may be used to remove moisture and the like generated in the mirror door unit 300.

The mirror cabinet apparatus 20 may include a defrosting unit 600 that delivers wasted heat generated in the cooler unit 400 to the mirror door unit 300 to remove moisture on the mirror.

The cooler unit 400 may include at least one of the Peltier elements 411. The cooling surface of the Peltier element 411may be disposed at one side of the accommodation space 102, and the heat release surface of the Peltier element 411may be disposed outside of the accommodation space 102.

Further, the cabinet body 100 may be provided with a first heat delivery plate 441 at one side thereof. The first heat delivery plate 441 may be disposed to contact one side of the mirror door unit 300 when the mirror door unit 300 is closed.

Preferably, the first heat delivery plate 441 may stand such that one surface of the first heat delivery plate 441 contacts the mirror door unit 300.

Further, a first heat pipe (heat-pipe) 451, which delivers heat, may be connected between the heat release surface of the Peltier element 411 and the first heat delivery plate 441. The first heat pipe 451, which is a sealed pipe, accommodates fluid therein. When one end (a first end) of the first heat pipe 451 is heated, the fluid evaporates, and heat is delivered to the other end (a second end) of the first heat pipe while the fluid flows to the other end (the second end). Additionally, when the other end (the second end) is heated, the heat is delivered to one end (the first end) again through the capillary phenomenon. The heat is delivered through the above-described circulation of the fluid.

The first heat pipe 451 may be freely bent in any direction.

In this embodiment, one side of the Peltier element 411 may be disposed towards the accommodation space 102, e.g., disposed to face the accommodation space 102, and the first heat delivery plate 441 may be orthogonal to the Peltier element 411 and may be disposed towards the mirror door unit 300. The first heat pipe 451 may have one bent side and may connect the heat release surface of the Peltier element 411 and the first heat delivery plate 441.

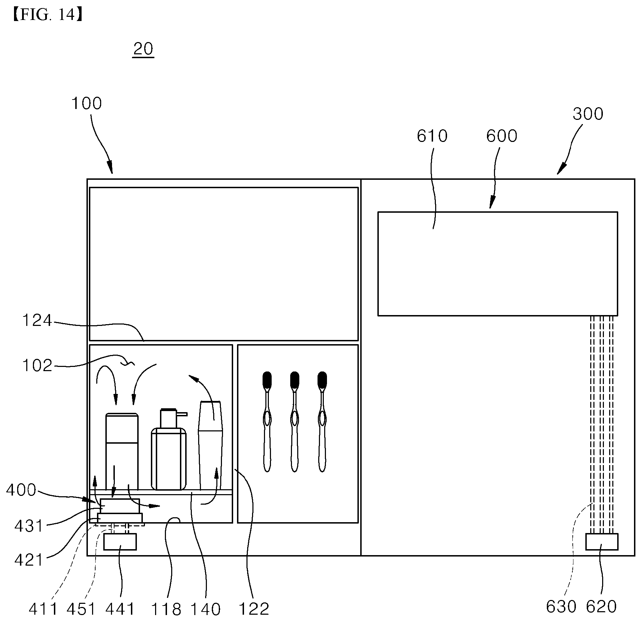

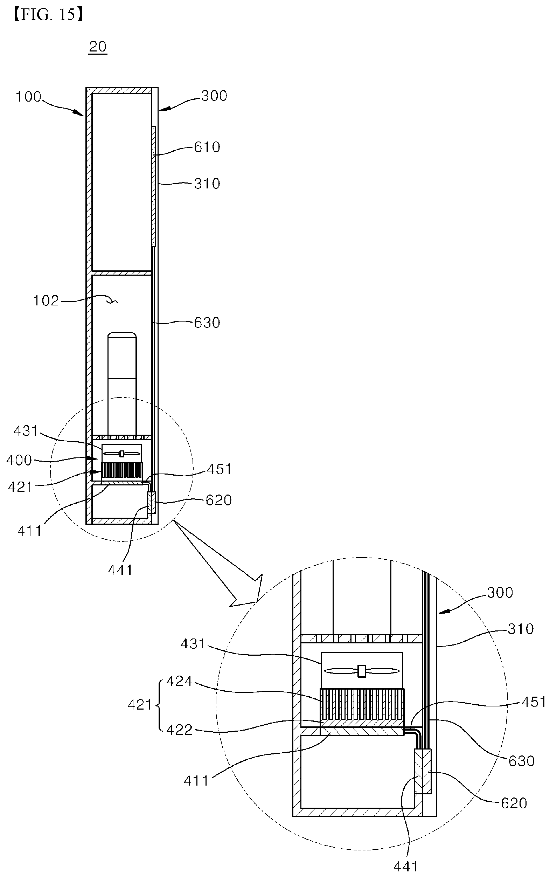

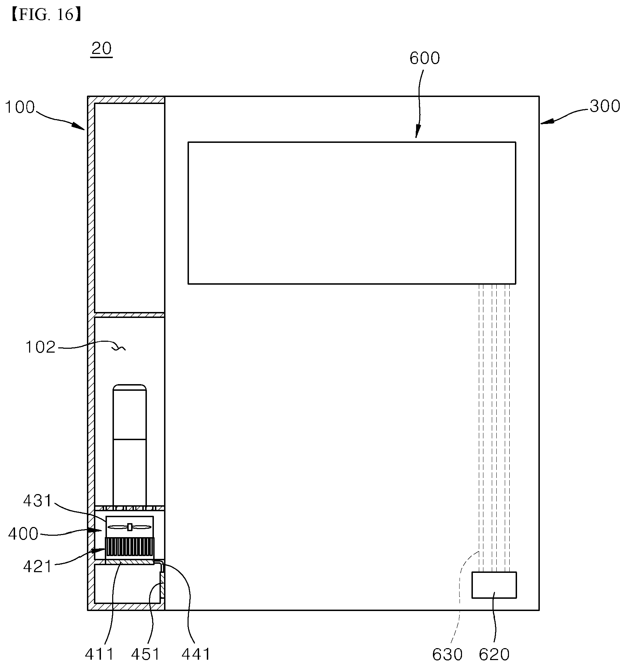

FIG. 14 is a front view illustrating a state in which a door of the mirror cabinet apparatus according to the second embodiment is opened, FIG. 15 is a cross-sectional view illustrating a state in which a door of the mirror cabinet apparatus according to the second embodiment is closed, and FIG. 16 is a cross-sectional view illustrating a state in which a door of the mirror cabinet apparatus according to the second embodiment is opened.

Referring to the drawings, the defrosting unit 600 may include a heat release plate 610 that contacts a rear surface of the mirror door unit 300. The heat release plate 610 may be preferably disposed to contact an inner surface of the outer surface mirror 310 and to deliver heat.

The mirror door unit 300 may be provided with a second heat delivery plate 620 at one side of the rear surface of the mirror door unit 300. The second heat delivery plate 620 may contact the first heat delivery plate 441 to receive heat of the first heat delivery plate 441 through conduction when the mirror door unit 300 is closed.

The second heat delivery plate 620 may be directly connected to one side of the heat release plate 610 or may be spaced apart from the heat release plate 610.

In case the second heat delivery plate 620 and the heat release plate 610 are spaced apart from each other, a second heat pipe 630 may be disposed between the heat release plate 610 and the second heat delivery plate 620 to deliver heat to the heat release plate.

The outer surface mirror 310 of the mirror door unit 300 may be heated by heat delivered from the heat release plate 610. Accordingly, moisture formed on the outer surface mirror 310 may be removed.

The heat release plate 610, the first heat delivery plate 441 and the second heat delivery plate 620 may be preferably made of a material having excellent thermal conduction, and, for example, may include aluminum or copper and the like.

Preferably, the heat release plate 610 allows heat to be delivered only to the outer surface mirror 310. In case heat generated in the heat release plate 610 is delivered to the accommodation space 102, a temperature in the accommodation space may increase. To prevent this from happening, a thermal insulation material may be provided onto a rear surface of the heat release plate 610. The thermal insulation material may thermally insulate the heat release plate 610 and may prevent heat of the heat release plate 610 from being delivered to the accommodation space 102.

In this embodiment, the defrosting unit 600 receives heat from the cooler unit 400 when the mirror door unit 300 is closed. Accordingly, an additional configuration and an additional power supply for controlling operations of the defrosting unit 600 are not required. Thus, energy may not be additionally consumed for defrosting.

The cabinet body 100 may include the cooler unit 400, i.e., a guide cover 118 that divides the cooling surface and the heat release surface of the Peltier element 411, at one side of the accommodation space 102 of the cabinet body 100.

For example, the guide cover 118 may be provided in the form of a shelf that divides the accommodation space 102 of the cabinet body 100 into an upper portion and a lower portion, and may also be provide in the form of an exterior panel that is integrated into the cabinet body 100.

The cooling surface of the Peltier element 411 may be disposed at an upper portion of the guide cover 118, and the heat release surface of the Peltier element 411 may be separated from the accommodation space 102 by the guide cover 118.

In case the guide cover 118 is provided in the form of a shelf, the cooler unit 400 may be disposed at the lower portion of the accommodation space 102 of the cabinet body 100.

In this embodiment, a position of the cooler unit 400 is not limited. The cooler unit 400 may be disposed at any portion including the upper portion and the lower potion or the left portion and the right portion of the cabinet body 100.

Operations of the mirror cabinet apparatus 20 configured as described above are described as follows.

The mirror cabinet apparatus 20 is provided with a cooler unit 400 at one side of an accommodation space 102 provided in a cabinet body 100. The mirror cabinet apparatus 20 may be controlled such that the cooler unit 400 may operate in the state where a mirror door unit 300 closes the cabinet body 100.

The cooler unit 400 includes a Peltier element 411. A cooling surface of the Peltier element 411 may be disposed in the accommodation space 102, and a heat release surface of the Peltier element 411 is disposed outside of the accommodation space 102 divided by a guide cover 118.

When the cooler unit 400 operates, the cooling surface of the Peltier element 411 is cooled and absorbs heat of a cooling block 421 that contacts the cooling surface.

Air in the accommodation space 102 forcibly comes into contact with the cooling block 421 by a blowing fan 431 installed at an upper portion of the cooling block 421. In this process, the cooling block 421 takes heat away from the air, and the cooled air circulates to the accommodation space 102 again. Accordingly, the cooled air may pull down a temperature in the accommodation space 102.

When the cooler unit 400 operates, heat generated on the heat release surface of the Peltier element 411 is delivered to a first heat pipe 451. The first heat pipe 451 delivers the heat delivered from the heat release surface to a first heat delivery plate 441. The first heat delivery plate 441 contacts a second heat delivery plate 620 in a state where the mirror door unit 300 is closed. As a result, wasted heat generated in the Peltier element 411 is delivered to the second heat delivery plate 620 through the first heat pipe 451.

The second heat delivery plate 620 is connected to the heat release plate 610 through a second heat pipe 630. The heat release plate 610 is disposed to contact an outer surface mirror 310.

In summary, wasted heat generated in the Peltier element 411 is delivered to the outer surface mirror 310 by passing through the first heat pipe 451, the first heat delivery plate 441, the second heat delivery plate 620, the second heat pipe 630 and the second heat delivery plate 620. As the outer surface mirror 310 is heated by the heat release plate 610, a temperature of the outer surface mirror 310 goes up. Accordingly, moisture formed on the outer surface mirror 310 may be removed.

In the mirror cabinet apparatus 20, the cooler unit 400 is disposed at a lower portion of the cabinet body 100. However, a position of the cooler unit 400 may not be limited and may vary. Based on various positions of the cooler unit 400, the disposition of the defrosting unit 600 connected to the cooler unit 400 may also vary.

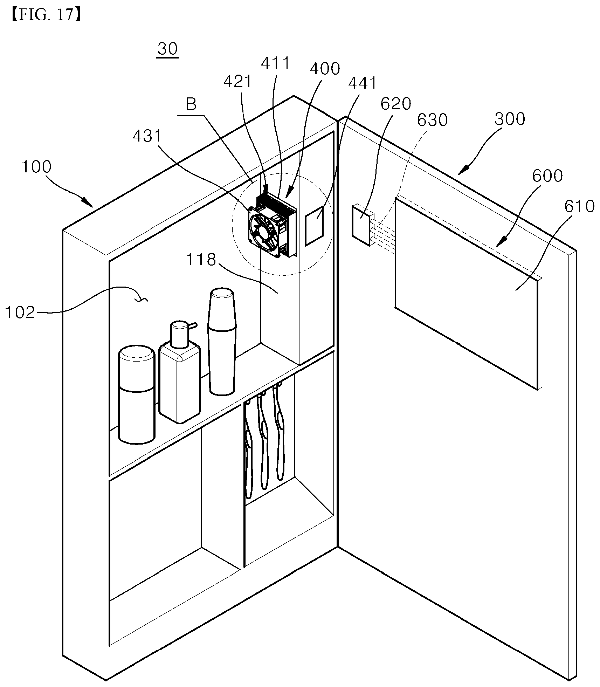

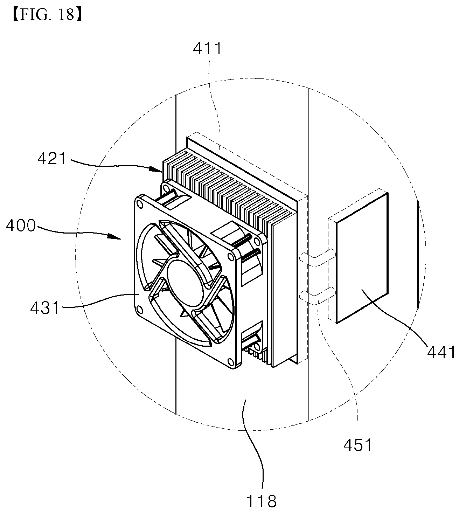

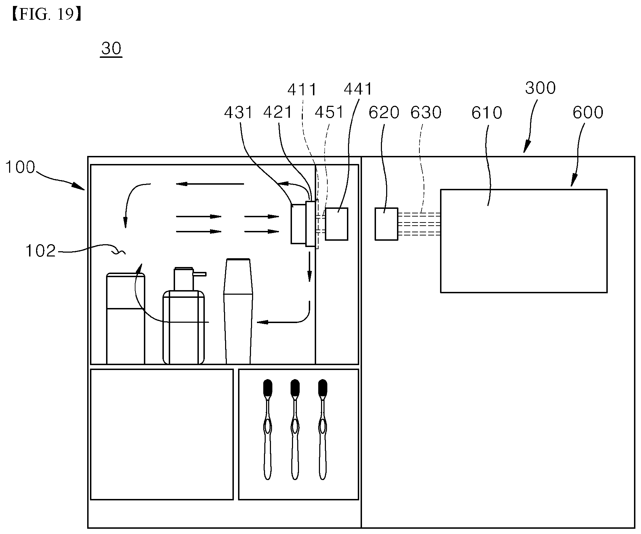

FIG. 17 is a perspective view illustrating a state in which a door of a mirror cabinet apparatus according to a third embodiment is opened, FIG. 18 is an enlarged perspective view illustrating portion "B" in FIG. 17, and FIG. 19 is a front view illustrating a state in which a door of the mirror cabinet apparatus according to the third embodiment is opened.

As illustrated in FIGS. 17 to 19, the mirror cabinet apparatus 30 includes a cabinet body 100 and a cooler unit 400, and has a structure in which the cooler unit 400 is disposed at one side of an upper portion of the cabinet body 100.

A guide cover 118 of the mirror cabinet apparatus 30 according to a third embodiment may be provided in the form of a wall that divides an upper portion of one side of the cabinet body 100 into a left portion and a right portion.

A cooling surface of a Peltier element 411 provided at the cooler unit 400 is disposed at the accommodation space 102, and a heat release surface of the Peltier element 411 may be disposed in a space divided by the guide cover 118. In this case, the heat release surface of the Peltier element 411 is connected with one side of a first heat pipe 451 such that the first heat pipe 451 delivers heat of the heat release surface. Further, the other side of the first heat pipe 451 may be connected with a first heat delivery plate 441.

A defrosting unit 600 may include a heat release plate 610 that contacts an inner surface of the mirror door unit 300, and one side of the heat release plate 610 may be connected with a second heat pipe 630.

The other end of the second heat pipe 630 may be connected with a second heat delivery plate 620, and the second heat delivery plate 620 may be disposed to contact the first heat delivery plate 441.

To this end, the second heat pipe 630 may extend to a lateral surface of one side of the heat release plate 610 such that the second heat delivery plate 620 contacts the first heat delivery plate 441 disproportionately disposed towards one side of an upper portion of the cabinet body 100.

Below, a mirror cabinet apparatus provided with a cooling space 104 and a drying space 106 according to a fourth embodiment is described.

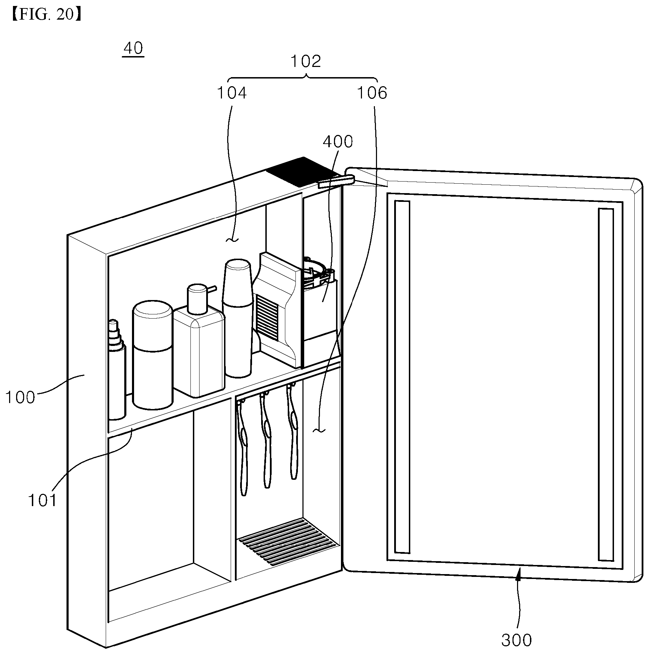

FIG. 20 is a perspective view illustrating a mirror cabinet apparatus provided with a cooling space 104 and a drying space 106 according to a fourth embodiment.

The mirror cabinet apparatus 30, as illustrated, includes a cabinet body 100 that provides an accommodation space 102 therein, a cooler unit 400 disposed in the accommodation space 102, a cooling space 104 which is a part of the accommodation space 102 and where cooling is performed, and a drying space 106 which is a part of the accommodation space 102 and where heating is performed.

The cabinet body 100 provides a structural strength, forms an appearance and includes storage provided in the cabinet body 100. The storage provided in the cabinet body 100 may be divided by a wall 101.

One side of the cabinet body 100 may be connected with a mirror door unit 300, and the mirror door unit 300 may open and close the cabinet body 100 at the front of the cabinet body 100.

When the mirror door unit 300 is opened, the storage provided by the cabinet body 100 may be used. When the cabinet body 100 is closed by the mirror door unit 300, items in the accommodation space 102 may be prevented from escaping outwards or foreign substances may be prevented from being suctioned into the accommodation space 102.

The inside of the accommodation space 102 may be opened and closed all together by the mirror door unit 300 installed on a lateral surface of the cabinet. However, the cooling space 104 may be additionally provided with a door only for opening and closing the cooling space 104 such that the cooling space 104 and the accommodation space 102 are separately opened. In case the cooling space 104 is opened each time the mirror door unit 300 is opened, cold air in the cooling space 104 may leak. Accordingly, an additional door for opening and closing the cooling space 104 is preferably provided.

In case a door for opening and closing the cooling space 104 is made of a transparent material, the inside of the cooling space 104 may be seen without opening the door for opening and closing the cooling space 104.

The cooling space 104 is storage where a temperature in the cooling space 104 may be kept lower than a temperature of another portion in the accommodation space 102. The cooling space 104 may be used to keep cosmetics that otherwise easily go bad.

A heat absorption surface of a Peltier element may be disposed at one side of the cooling space 104 to lower a temperature in the cooling space 104. Preferably, an inner wall of the cooling space 104 may be thermally insulated such that cooled air in the cooling space 104 is not heated by external heat.

The drying space 106 is a space where a temperature in the drying space 106 is higher than a temperature of another portion in the accommodation space 102 and which has a relatively low humidity. The drying space 106 may be used to store products such as a toothbrush or a shaver where germs breed very easily due to moisture.

The drying space 106 may be heated by wasted heat generated from a heat release surface of the Peltier element. As for the Peltier element, one side absorbs heat and its temperature is decreased, and the other side generates heat and its temperature is increased, when electric current flows in the Peltier element.

In case the generated heat is effectively discharged, efficiency of the Peltier element is enhanced. In this context, it is important to deal with wasted heat generated in the Peltier element. The wasted heat may be simply discharged outwards. However, the wasted heat may be delivered to the drying space 106 to raise a temperature in the drying space 106.

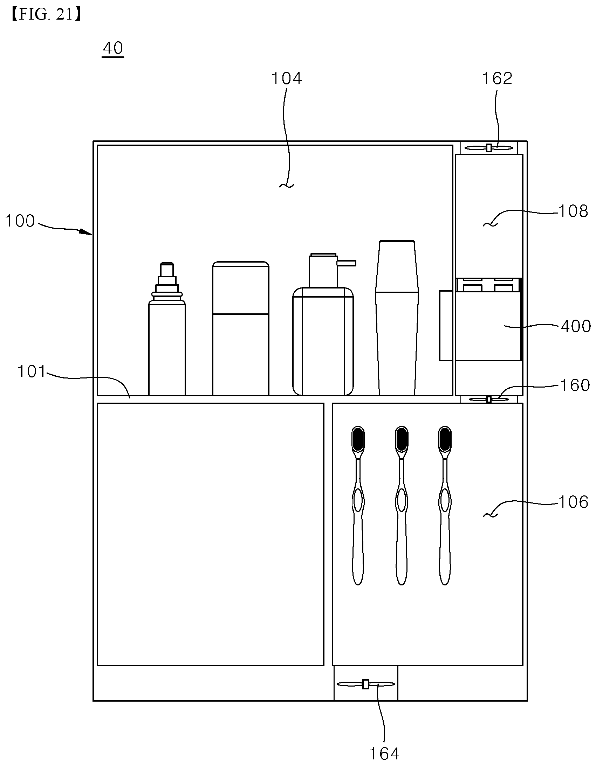

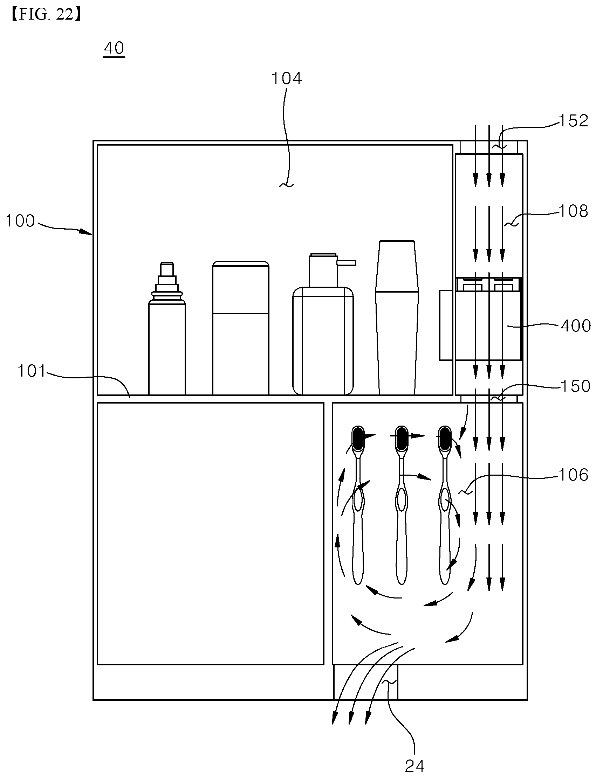

FIG. 21 is a view illustrating an intake fan, an exhaust fan, and a circulation fan provided at the mirror cabinet apparatus according to the fourth embodiment, and FIG. 22 is a view illustrating a flow path of air of the mirror cabinet apparatus according to the fourth embodiment.

A mirror cabinet apparatus 40 according to the fourth embodiment, as illustrated, may be provided with a machine chamber for cooling 108 where a cooler unit 400 is paced at a cabinet body 100.

At least one of the heat absorption surface and the heat release surface of the Peltier element, which constitute the cooler unit 400, may be arranged to efficiently deliver air, the temperature of which is changed, to the cooling space 104 or the drying space 106.

The cooler unit 400 is disposed in the machine chamber for cooling 108. The heat absorption surface of the Peltier element included in the cooler unit 400 may be connected to the cooling space 104, and the heat release surface of the Peltier element included in the cooler unit 400 may be connected to the drying space 106.

When the heat absorption surface of the Peltier element is directed to the cooling space 104, air in the cooling space 104 starts to cool at a portion of the cooling space 104 directed to the heat absorption surface. At the portion, as steam in the cooling space 104 starts to condense, condensate is generated.

The condensate is collected at the portion in the cooling space 104, directed to the heat absorption surface, and the condensate is exposed to the heat release surface, to dry the condensate.

Then the condensate generated at the portion in the cooling space 104, connected to the heat absorption surface, may not be additionally collected.

The heat release surface is directly directed to the drying space 106 and may directly raise a temperature of air in the drying space 106. In case the heat release surface is directly exposed to the drying space 106, aesthetic qualities or safety may not be ensured, and the quality of a product may be deteriorated.

Thus, preferably, the cooler unit 400 is installed in the machine chamber for cooling 108 and then air the temperature of which is raised by the heat release surface in the machine chamber for cooling 108 is suctioned into the drying space 106.

In this case, the cooler unit 400 may be installed not to be exposed to the cooling space 104 or the drying space 106, and heat generated in the cooler unit 400 may be used to heat the drying space 106.

A wall 101 that divides the machine chamber for cooling 108 and the drying space 106 may be provided with a through hole 151 such that the machine chamber for cooling 108 and the drying space 106 communicate with each other.

The heat absorption surface of the Peltier element provided at the cooler unit 400 absorbs heat from the cooling space 104 and discharges the absorbed heat to the heat release surface. The wall 101 that divides the machine chamber for cooling 108 and the drying space 106 may be provided with a through hole 151 such that the heat discharged to the heat release surface is suctioned into the drying space 106.

Further, the cabinet body 100 may be provided with an intake port 152 and an exhaust port 154.

The intake port 152 is formed at the cabinet body 100, where the machine chamber for cooling 108 is disposed, to allow the machine chamber for cooling 108, where the heat release surface of the Peltier element is disposed, to communicate with the outside.

Air in the machine chamber for cooling 108 is continuously heated by the heat release surface. Accordingly, it is effective to suction air having a relatively low temperature to cool the heat release surface.

A filter device may be provided at the intake port 152. The intake port 152 is a hole through which external air is suctioned into the machine chamber for cooling 108. Accordingly, when the filter device is provided at the intake port 152, foreign substances such as dust flowing in the air of a bathroom may be prevented from being suctioned into the machine chamber for cooling 108.

The exhaust port 154 is preferably formed at the cabinet body 100 where the drying space 106 is disposed such that the drying space 106 communicates with the outside.

When the air suctioned through the intake port 152 is discharged through the exhaust port 154, the air in the machine chamber for cooling 108 and the drying space 106 may smoothly circulate.

The cabinet according to the embodiment, as illustrated, may be provided with at least one of an intake fan 162, an exhaust fan 164 and a circulation fan 160.

That is, the intake fan 162 may be installed at the intake port 152, the exhaust fan 164 may be installed at the exhaust port 154, and the circulation fan 160 may be installed at the through hole 151.

A temperature of the machine chamber for cooling 108 continues to go up due to heat generated in the heat release surface. Accordingly, when external air is forcibly suctioned into the machine chamber for cooling 108, a temperature inside the machine chamber for cooling 108 drops, thereby easily cooling the heat release surface.

The exhaust fan 162 is installed at the intake port 152 and forces external air to be suctioned into an accommodation space 102 of a drying device where the heat release surface of the Peltier element is disposed.

When air heated in the machine chamber for cooling 108 is suctioned into the drying space 106, moisture on a product evaporates in the drying space 106, and humidity of in drying space 106 increases. When air the humidity of which is increased in the drying space 106 is forcibly released outwards, humidity in the drying space 106 may be decreased.

The circulation fan 160 may be installed at the through hole 151 and may force air heated by the heat release surface in the machine chamber for cooling 108 to flow into the drying space 106. The exhaust fan 164 may be installed at the exhaust port 154 and may force air the humidity of which is increased in the drying space 106 to leak outwards.

The intake port 152, the through hole 151, the exhaust port 154 provided at the mirror cabinet apparatus including the cooling space 104 and the drying space 106 may be placed linearly.

That is, the intake port 152, the through hole 151, the exhaust port 154 are arranged in a row in the cabinet. Accordingly, air suctioned through the intake port 152 may not bump into the wall 101 and its flow may not be interrupted by the wall 101 such that the air is smoothly discharged to the exhaust port 154 through the through hole 151.

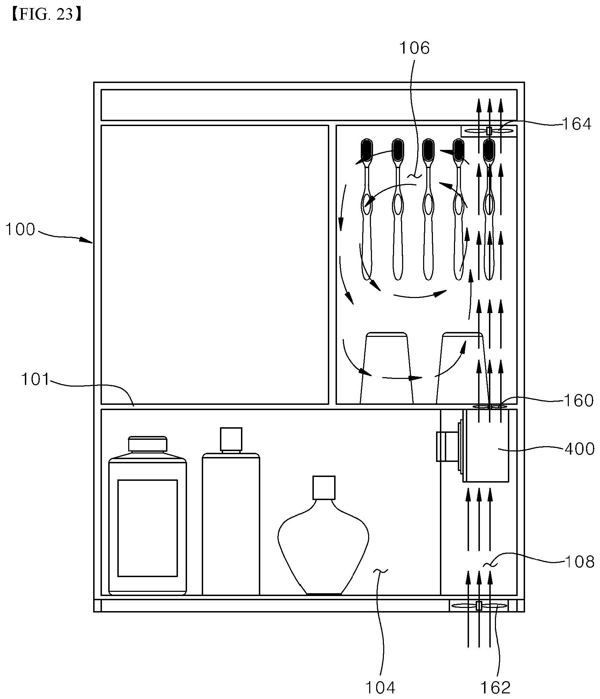

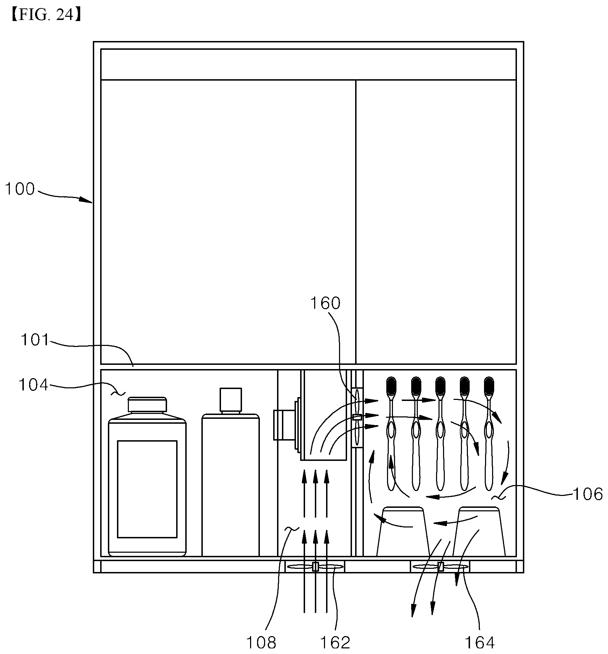

FIGS. 23 and 24 are views illustrating various arrangements of a machine chamber for cooling 108 and a drying space 106 in an accommodation space 102.

For the cabinet according to the embodiment, the machine chamber for cooling 108 may be disposed above the drying space 106 in the accommodation space 102.

Air suctioned through the intake port 152 at the upper portion of the cabinet body 100 is discharged to the drying space 106 through the through hole 151 between the machine chamber for cooling 108 and the drying space 106, and is discharged through the exhaust port 154 disposed at the lower portion of the drying space 106.

As the machine chamber for cooling 108 is disposed above the drying space 106, air suctioned into the intake port 152 flows from the upper portion to the lower portion of the drying space 106 and then is discharged outwards.

For the cabinet according to the embodiment, the machine chamber for cooling 108 may be disposed under the drying space 106 in the accommodation space 102.

As the machine chamber for cooling 108 is disposed under the drying space 106, air suctioned into the intake port 152 flows from the lower portion to the upper portion of the drying space 106 and then is discharged outwards.

In case the drying space 106 is disposed at the upper portion of the accommodation space 102, the exhaust port 154 may be formed on an outer wall of an upper end of the cabinet body 100. As air in the drying space 106 may be discharged through the exhaust port 154 disposed on the outer wall of the upper end of the cabinet body 100, the user in front of the cabinet may not be affected by high-temperature high-humidity air.

Further, the exhaust fan 164, disposed at the exhaust port 154 on the outer wall of the upper end of the cabinet body 100, may not be damaged by water that drips from a product stored in the drying space 106.

For the cabinet according to the embodiment, the machine chamber for cooling 108 may be disposed near the left and right of the drying space 106 in the accommodation space 102.

**In** addition, the machine chamber for cooling 108 and the drying space 106 may have a modified structure in which the cooler unit 400 installed in the machine chamber for cooling 108 may cool the cooling space 104 and air heated in the machine chamber for cooling 108 may be suctioned into the drying space 106.

Preferably, the exhaust port 154 is formed at the cabinet body 100 where the drying space 106 is disposed, but the exhaust port 154 is preferably arranged such that the exhaust port 154 does not face the front of the cabinet body 100.

When the exhaust port 154 is not disposed at the front of the cabinet body 100, air discharged through the exhaust port 154 is not discharged towards the user in front of the cabinet regardless of arrangement of the cooling space 104, the machine chamber for cooling 108 and the drying space 106.

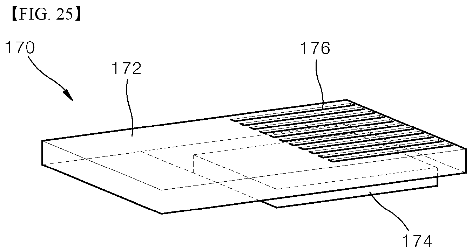

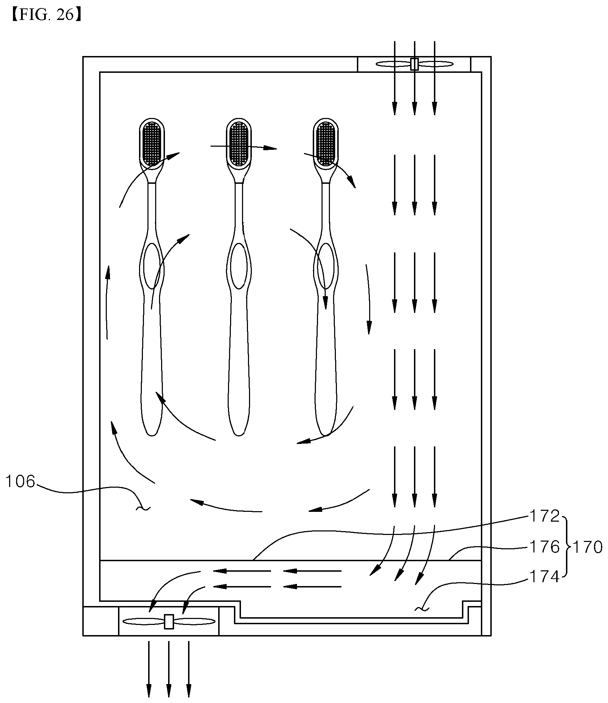

FIG. 25 is a view illustrating a water trap 170 according to an embodiment, and FIG. 26 is a view illustrating a structure of a bottom of a drying space 106 of a mirror cabinet apparatus according to an embodiment.

The drying space 106 of the cabinet, as illustrated, is provided with a flow path and a water vessel for preventing water from flowing into the exhaust fan 164 installed at the bottom of the drying space.

In the drying space 106, products such as a wet toothbrush or a wet razor may be stored. Accordingly, it is likely that water may drip from the products onto the bottom of the drying space 106. In case the exhaust port 154 is formed at the bottom of the drying space 106, water may drip onto the bottom of the drying space 106, and may permeate the exhaust fan 164 installed at the exhaust port 154.

Accordingly, a water trap 170 is preferably provided at the bottom of the drying space 106 such that the water trap 170 prevents water from dripping from the products stored in the drying space 106 directly onto the exhaust fan 164 and collects water having dripped onto the bottom of the drying space 106.

The water trap 170 may include a plate 172 spaced apart from the bottom of the drying space 106 and a trap 174 configured to collect water having dripped onto a lower end of the drying space 106.

Further, the plate 172 may be provided with an inlet 56 that allows air to pass through the plate 172 spaced apart from the bottom of the drying space 106. The inlet 56 is preferably formed into a net structure such that the items stored in the drying space 106 are prevented from falling into the trap 174.

The plate 172 of the water trap 170 blocks water droplets falling directly onto the exhaust port 154 from an upper surface of the exhaust port 154 formed at the bottom of the drying space 106. Water having fallen onto the plate 172 is collected in the trap 174.

The plate 172 of the water trap 170 may be provided with an air vent through which air passes such that air in the drying space 106 at an area except the upper surface of the exhaust port 154 is discharged outwards through the exhaust port 154.

The water trap170 is preferably detached from the drying space 106 to get rid of the water collected in the trap 174.

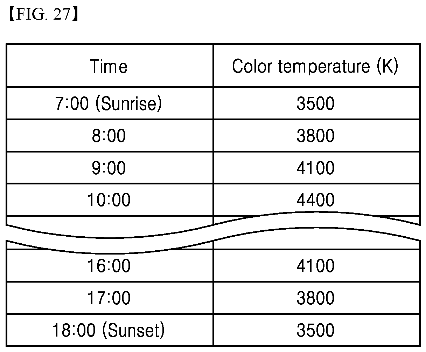

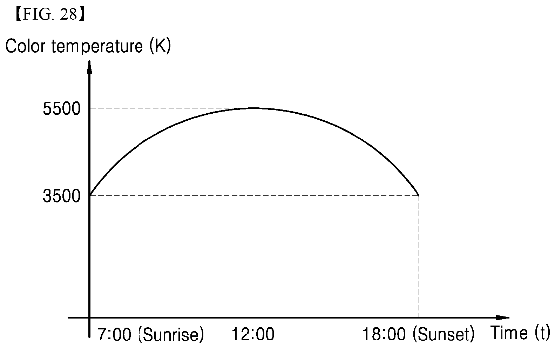

FIG. 27 is a color temperature table on the basis of each time slot, and FIG. 28 is a graph illustrating color temperatures that are changed on the basis of a flow of time.

The sunlight enters the atmosphere of the earth and collides with air particles and then scatters. In this case, red light having a long wave length proceeds further than blue light having a short wave length. An incident angle of the sunlight during the day differs from an incident angel of the sunlight in the evening. Accordingly, there is a big difference in the degrees to which the blue light and the red light proceed.

Thus, the sunlight reaching the earth has different color temperatures on the basis of time.

Even the same color may look different depending on lighting conditions such as a color temperature and luminous flux and the like. When the user puts on a make-up using the same tone of color, the make-up may look different depending on lighting because a color may look different depending on lighting conditions.

In case lighting corresponding to natural light of the current time is provided to the user who puts on a make-up using the beauty lighting (330 in FIG. 2), the user may put on a make-up of a color desired by the user using cosmetics of a color desired by the user. The natural light denotes lighting of the sunlight not lighting of an artificial light.

The natural light may include direct sunlight, light in the shade of trees, light on the beach, light in the mountain and the like. In other words, the natural light denotes the sunlight and lighting conditions in the natural environment.

Preferably, the beauty lighting 330 performs the function of adjusting a color temperature and luminous flux and the like.

When the user puts on a make-up, the user uses the outer surface mirror 310 or the inner surface mirror 320 provided at the mirror door unit 300. When the user puts on a make-up, the color of the make-up looks different through the mirror depending on lighting conditions (a color temperature, a level of brightness and the like).

The beauty lighting 330 is allowed to adjust a color temperature or luminous flux and the like of lighting such that the user puts on a make-up under lighting conditions desired by the user.

As illustrated, data on lighting information that is classified on the basis of each time slot is, according to the invention, stored in a database of the mirror cabinet apparatus according to the embodiment.

The data on lighting information, as illustrated, includes, according to the invention, a color temperature and luminous flux of the sunlight that vary on earth on the basis of time.

The data on lighting information stored in the database may include information on a color temperature and luminous flux classified on the basis of each time slot, or information on a color temperature and luminous flux that continue to change on the basis of time.

A controller may sense the current time and may control the beauty lighting 330 such that the beauty lighting provides lighting corresponding to lighting information of the current time among pieces of lighting information stored in the database.

**In** case the beauty lighting 330 provides lighting corresponding to the sunlight when the sunlight comes into a bathroom, lighting of the sunlight and lighting of the beauty lighting 330 are not mixed. Accordingly, the user may be provided with lighting of a color temperature and luminous flux desired by the user.

Additionally, when the user who puts on a make-up in lighting corresponding to the sunlight goes out, the user may be in the sunlight that is the same as the provided lighting. Accordingly, the color tone of the make-up may be the same color tone desired by the user.

As a minor amount of sunlight reaches the earth after sunset before sunrise, lighting of a color temperature set by the user may be provided through the beauty lighting 330 instead of lighting corresponding to the sunlight of the current time. In other words, the beauty lighting 330 may preferably perform the function of adjusting a color temperature and luminous flux. When the user puts on a make-up using the inner and outer surface mirrors, a color tone of the make-up seen by the user through the mirrors may look different depending on lighting conditions such as a color temperature and luminous flux.

A color temperature and luminous flux of the beauty lighting 330 may be adjusted such that the user puts on a make-up under lighting conditions desired by the user.

A color temperature and luminous flux of the beauty lighting 330 may be adjusted through an additional operation device. The operation device may be implemented as a switch or as a voice recognition device.

The beauty lighting 330 may be manually operated through the switch or the voice recognition device and the like. However, the beauty lighting 330 may operate automatically on the basis of situations to provide lighting corresponding to a situation to the user without an additional operation.

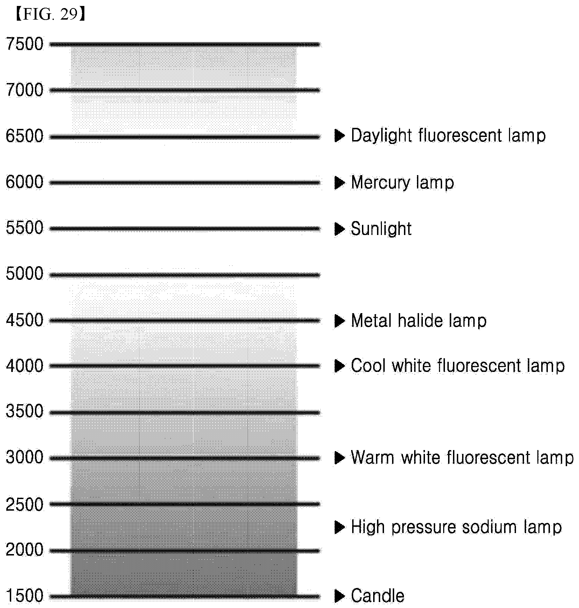

FIG. 29 is a view illustrating color temperatures based on the type of a light source.

A color temperature in an indoor space and an outdoor space may differ even in the same time slot. Additionally, a color temperature may differ on the basis of provided lighting even in an indoor space.

Even though the user puts on a make-up in lighting provided by the beauty lighting 330, the user may be provided with lighting different from the lighting provided by the beauty lighting 330 depending on a location of the user.

Accordingly, lighting information stored in the database may include information on a color temperature and luminous flux corresponding to a light source in a specific location in each time slot.

When the user goes to a party, the user is provided with lighting in a location for the party not with the sunlight. Even though the user puts on a make-up using the lighting that corresponds to the sunlight and that is provided by the beauty lighting 330, the color of the make-up may differ from a color desired by the user in the lighting at the party.

As the lighting information stored in the database may include lighting information corresponding to a light source in a specific location in each time slot. Accordingly, the user may put on a make-up in lighting of a corresponding location provided by the beauty lighting 330.

The mirror cabinet according to the invention includes an input unit (not illustrated) for inputting a location and time. The user may input a desired location and desired time through the input unit such that the user is provided by the beauty lighting 330 with lighting corresponding to a light source in a specific location in each time slot.

The input unit may be provided as a touch screen-type input unit that senses flowing currents or pressure. The touch screen-type input unit may be provided at the mirror cabinet body or the beauty lighting 330.

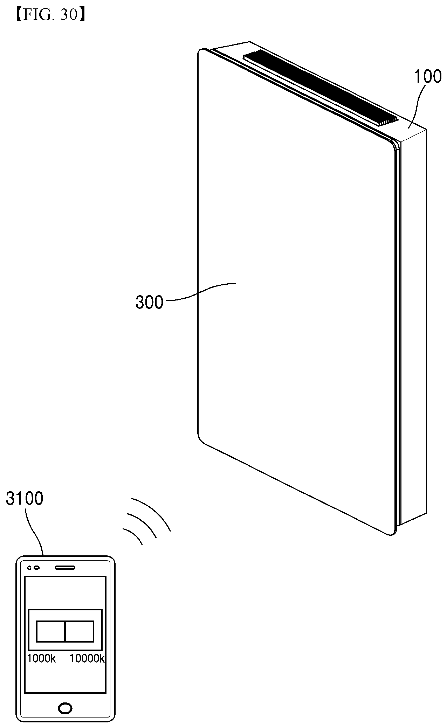

FIG. 30 is a view illustrating a state in which an input unit is configured using a mobile device.

The input unit may be configured to be attached onto a wall in a bathroom or to be attached to a device provided in a bathroom. However, the input unit may be configured through a mobile phone of the user.

As illustrated, the mirror cabinet apparatus according to the embodiment may further include a transceiver (not illustrated) that may make access to a mobile device 3100.

In order for the mobile device 3100 to connect with the mirror cabinet apparatus, an application, which is configured to easily input a desired value, may be installed in the mobile device 3100. The user may input a specific location and specific time using the application.

A degree to which the sunlight reaches the earth differs depending on wavelengths when the weather changes. Accordingly, a color temperature of lighting may vary depending on the weather. For example, a color temperature of an outdoor space when it is cloudy is about 6500K while a color temperature of an outdoor space when it is sunny is about 9000K.

Accordingly, the beauty lighting 330 is preferably configured to provide lighting corresponding to the weather of corresponding time such that the user puts on a make-up using the lighting corresponding to the weather of corresponding time.

According to the invention, data on lighting information stored in the database includes information on a color temperature and luminous flux corresponding to the sunlight on the basis of the weather in the current location in each time slot.

According to the invention, the mirror cabinet includes a communication unit (not illustrated) that may connect to the Internet and may transmit and receive data including information on weather.

When receiving information on weather provided by the meteorological administration or a portal site and the like through the communication unit is received, the controller controls the beauty lighting 330 such that the beauty lighting provides lighting corresponding to lighting information of the current weather among pieces of lighting information stored in the database.

Additionally, the controller may control controls, according to the invention, the beauty lighting 330 such that the beauty lighting provides lighting corresponding to weather in a location and in a time slot input by the user among the pieces of lighting information stored in the database.

In case a location input by the user is an indoor space that is not affected by the weather, the controller may control the beauty lighting 330 such that the beauty lighting provides lighting corresponding to a light source in the location input by the user regardless of the weather.

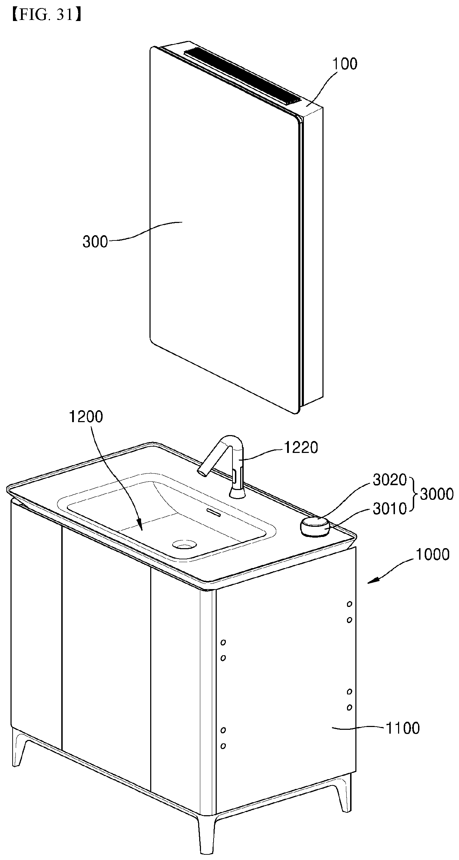

FIG. 31 is a view illustrating a bathroom convenient device comprised of a mirror cabinet apparatus and a sink cabinet apparatus.

The sink cabinet apparatus 1000 includes a sink cabinet body 1100, a washbasin 1200, and a jog dial 3010.

The sink cabinet body 1100 may form an appearance of the sink cabinet apparatus 1000 and may provide a structural strength.

The sink cabinet body 1100 is provided with a space therein. Though not illustrated in the drawing, the space accommodates a drawer-type towel manager (not illustrated) configured to store and manage towels and a drawer-type console (not illustrated) configured to store small-sized household appliances such as a hairdryer and the like.

The washbasin 1200 may be provided with a space for washing the user's hair or face, and may be disposed at an upper portion of the sink cabinet body 1100 for convenience. A faucet 1220 included in the washbasin 1200 may supply hot and cold water to the washbasin 1200 through a pipe arranged in the sink cabinet body 1100.

The washbasin 1200 may be made of a translucent material. Additionally, the washbasin 1200 may be provided with a washbasin lighting device configured to adjust a color temperature at a lower portion of a washbasin body.

The washbasin lighting device (not illustrated) may guide light at the body of the washbasin 1200 to provide dim light as a whole. The body of the washbasin 1200 made of a translucent material may perform the functions of guiding light optically and diffusing light evenly.

The washbasin lighting device may be controlled to provide the same lighting as the beauty lighting 330.

The controller may control the beauty lighting 330 and the washbasin lighting device such that the beauty lighting 330 and the washbasin lighting device supply lighting corresponding to lighting information of the current time among pieces of lighting information stored in the database.

In case the washbasin lighting device and the beauty lighting 330 provide lighting of different color temperatures, lighting from the washbasin lighting device and lighting from the beauty lighting 330 are mixed. Accordingly, the user may not be supplied with lighting of a color temperature desired by the user.

Preferably, a color temperature of lighting provided by the washbasin lighting device and a color temperature of lighting provided by the beauty lighting 330 are unified.

Additionally, in a bathroom, various lighting devices including a bathroom light may be installed in addition to the washbasin lighting device and the beauty lighting 330.

Preferably, the entire lighting devices in a bathroom including the washbasin lighting device and the beauty lighting 330 provide lighting of unified color temperatures to the user, not to create lighting of a color temperature that is not desired by the user, due to mixed lighting from various lighting devices.

For example, data on lighting information under different conditions is stored in the database, and lighting corresponding to lighting information of the local time among pieces of lighting information stored in the database may be provided at the same time by the washbasin lighting device, the beauty lighting 330 and the bathroom light.

The washbasin 1200 may be provided with an integrated operation switch 3000 formed into a jog dial 3010. The integrated operation switch 3000 in the form of a jog dial 3010 provided with a display 3020 may operate various devices in a bathroom.

An input unit according to an embodiment may be formed into a jog dial 3010 including a display 3020. As an example, the input unit may be attached to the mirror cabinet body 2100 or the beauty lighting 330 in the form of a jog dial 3010 having a vertical axis.

The input unit in the form of a jog dial 3010 may display a location and time to be selected through the display 3020, and the user may select a desired location and time by turning the dial.

Lighting corresponding to the location and time selected by the user's turning the dial may be provided through the beauty lighting 330.

The display 3020 may display devices to be operated and a desired device among the devices may be selected by the user's turning the jog dial.

When a device is selected, the selected device may be operated using the display 3020 and the dial again.

For example, when an amount of water discharged out of the faucet 1220 is adjusted, the faucet 1220 is selected using the display 3020 and the dial. When the dial is turned clockwise after the faucet 1220 is selected through the integrated operation switch 3000, the amount of the discharged water may be increased. When the dial is turned clockwise to adjust a temperature of water discharged from the faucet 1220, the temperature of the water may be increased.

Further, the integrated operation switch 3000 may serve as the input unit of the above-described beauty lighting 330.

The mirror cabinet apparatus and the sink cabinet apparatus 1000 may be operated through the operation of the integrated operation switch 3000. Accordingly, a plurality of switches for operating various components may be integrated into a single switch. As a result, aesthetic qualities of bathroom equipment and user convenience may be improved.

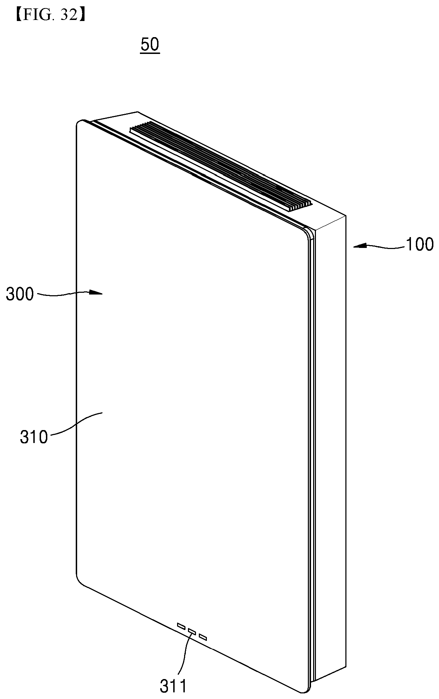

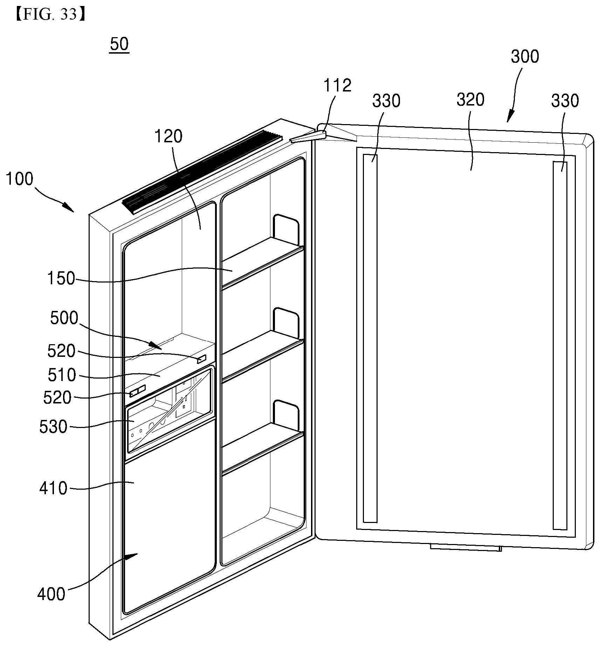

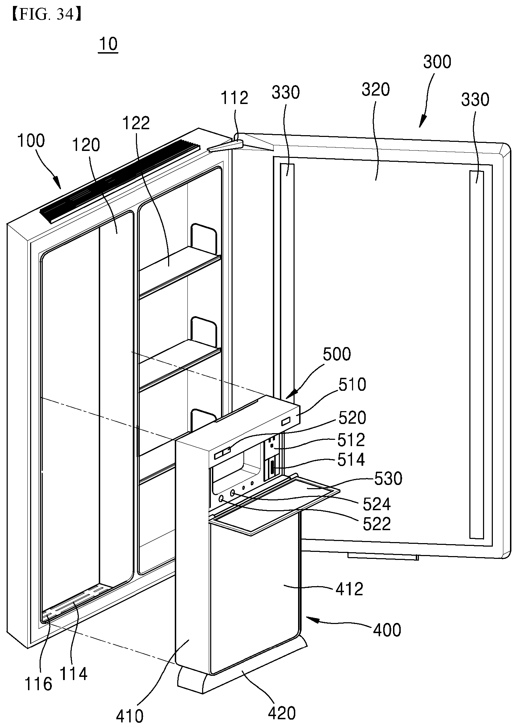

FIG. 32 is a perspective view illustrating a mirror cabinet apparatus according to a fifth embodiment, FIG. 33 is a perspective view illustrating a state in which a door of the mirror cabinet apparatus according to the fifth embodiment is opened, and FIG. 34 is a perspective view illustrating a state in which a cooler of the mirror cabinet apparatus according to the fifth embodiment is separated.

As illustrated, a mirror cabinet apparatus 50 according to a fifth embodiment, which is a convenient apparatus installed in a bathroom and the like, may include a cabinet body 100, a mirror door unit 300 and a cooler unit 400.

The mirror cabinet apparatus 50 may include a cabinet body 100 provided with an accommodation space therein, and a mirror door unit 300 may be provided at one side of the cabinet body 100 to open and close the accommodation space.

The cabinet body 100 may supply a structural strength and form an appearance, and the accommodation space in the cabinet body 100 may be opened in a direction of the front of the cabinet body 100.

The mirror door unit 300 may be provided with an outer surface mirror 310 on an outer surface thereof, and an inner surface mirror 320 on an inner surface thereof such that the user looks into the mirror when the door unit 300 is opened. Additionally, beauty lighting 330 may be provided on a perimeter or an inner side of the inner surface mirror 320 of the door unit 300.

The mirror cabinet apparatus 50 may be provided with an indicator 311 for displaying an operation state or a power supply state of the mirror cabinet apparatus 10 at a lower end of the mirror door unit 300.

The cabinet body 100 is provided with a cooler unit 400 having an independent cooling space in the accommodation space of the cabinet body 100. Preferably, the cooler unit 400 may be provided in the form of a module. When necessary, the cooler unit 400 may be mounted in the accommodation space of the cabinet body 100 or may be separated from the accommodation space of the cabinet body 100. As for the cooler unit 400 that is an example of a module, the cooler unit 400 may be separated from the accommodation space of the cabinet body 100, and a shelf and the like may be installed to expand storage.

A charging box unit 500 may be coupled to an upper portion of the cooler unit 400.

The cooler unit 400 and the charging box unit 500 are all electric goods that require a power supply. In case the cooler unit 400 and the charging box unit 500 are disposed close to each other, electric wiring in the cabinet may be simplified.

The cooler unit 400 may receive electricity from the charging box unit 500 disposed at the upper portion of the cooler unit 400, and, using the electricity, may cool the inner space of the cooler unit 400.

Further, the cooler unit 400 may include a cooler body 410 provided with a cooling space therein, and a cooler door 412 configured to open and close a front of the cooler body 410.

The cooler body 410 may be provided with a cooling part 420 for supplying cold air to the cooling space, under the cooler body 410.

An intake port 114 of the cooling part 420 may be formed at one side of the cabinet body 100. The intake port 114 may supply external air to the cooling part 420. Additionally, a discharge hole 116 configured to communicate with the cooling part 420 may be formed at the other side of the cabinet body 100. Preferably, a filter device for filtering foreign substances during the suction of external air may be provided at one side of the intake port 114.

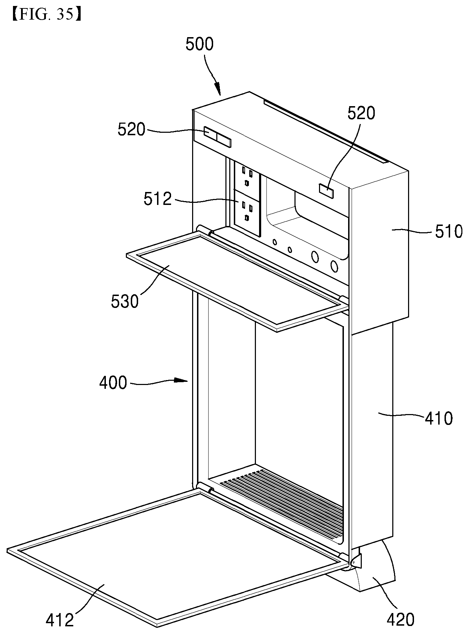

FIG. 35 is an enlarged perspective view illustrating a cooler unit of a mirror cabinet apparatus according to an embodiment.

The cooler unit 400, as illustrated in FIG. 35, may include a cooler body 410 provided with a cooling space therein. The cooler body 410 may be provided with an opened portion at one side thereof and may be provided with a cooler door 412 for shielding the opened portion at one side thereof.

The cooler body 410 and the cooler door 412 may include a thermal insulation material for minimizing a change in temperatures of the inner space of the cooler body 410.

In the embodiment, the cooler door 412 may be configured to rotate at a lower end of the cooler body 410 and to be opened only up to a predetermined angle. The cooler door 412 may be opened in parallel with the ground, and the user may dispose cosmetics, beverages and the like on an upper surface of the opened cooler door 412.

Further, the cooler door 412 may be provided with a lock configured to limit the opening and closing of the cooler door 412 at the other side of the cooler door 412 connected with the cooler body 410 by a rotary connection member.

The lock may be implemented as a push button-type lock. The lock may be unlocked when the cooler door 412 is pressed against the opened portion, and then the cooler door 412 may be opened. The lock may fix the cooler door 412 when the cooler door 412 is pressed against the cooler door 412 again, and then the cooler door 412 is prevented from being opened.

Further, sealing (not illustrated) may be provided between the cooler body 410 and the cooler door 412 to block cold air from leaking. A gap between the cooler body 410 and the cooler door 412 may be sealed in a state in which the cooler door 412 is closed to shield the opened portion of the cooler body 410 to block cold air from leaking.

A cooling part 420 for supplying cold air may be provided at one side of the cooler body 410.

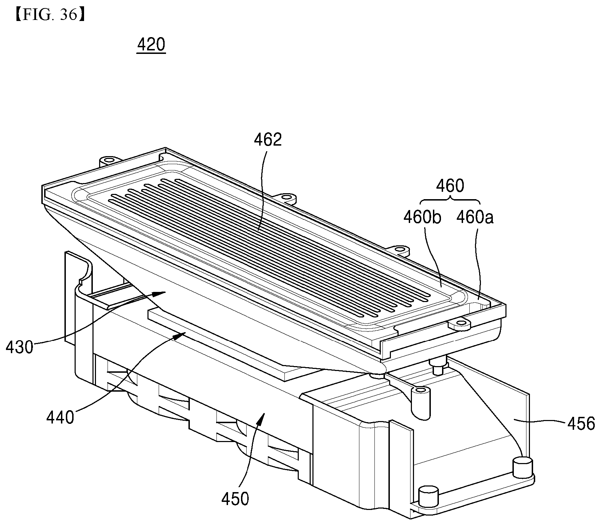

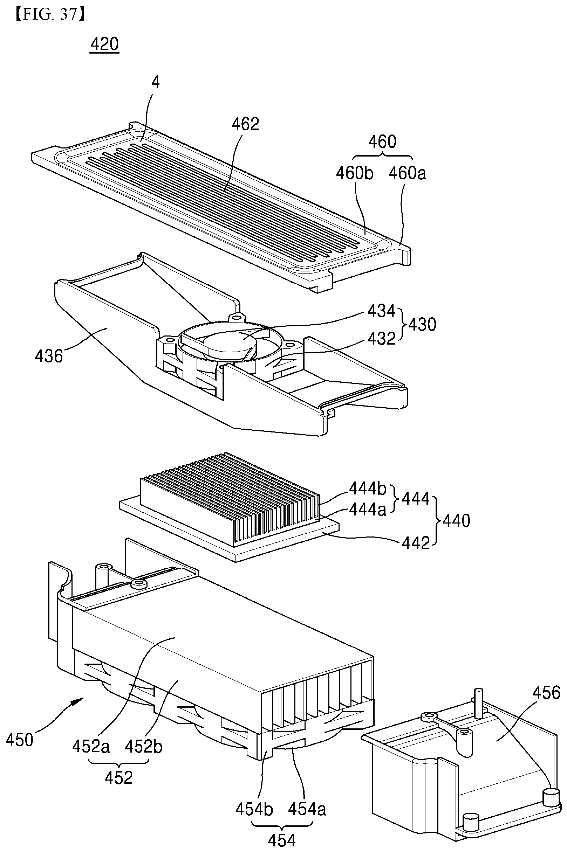

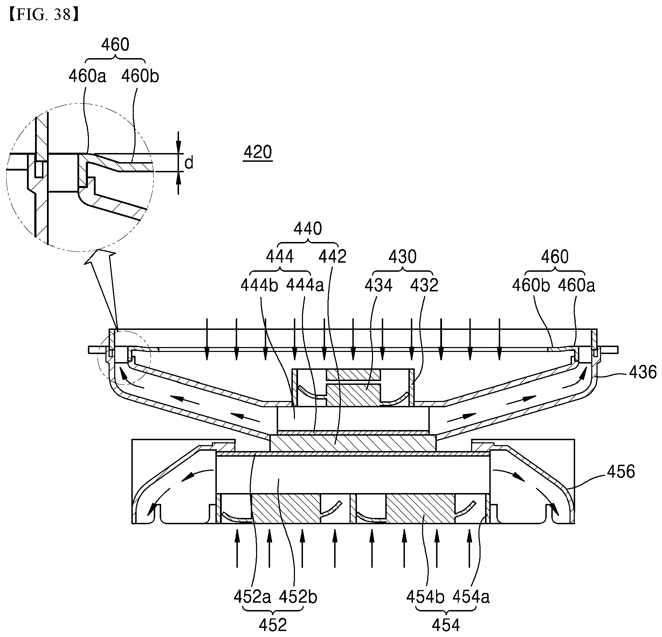

FIG. 36 is a perspective view separately illustrating a cooling part provided at a cooler unit of the mirror cabinet apparatus according to the fifth embodiment, FIG. 37 is an exploded perspective view illustrating a cooling part provided at a cooler unit of the mirror cabinet apparatus according to the fifth embodiment, and FIG. 38 is a cross-sectional view illustrating a cooling part provided at a cooler unit of the mirror cabinet apparatus according to the fifth embodiment.

Referring to the drawings, a cooling part 420 configured to supply cold air to a cooling space may be provided under a cooler body 410. In the embodiment, a position of the cooling part 420 is not limited. The cooling part 420 may be disposed under the cooler body 410 to ensure efficient usability of space, and may also be disposed on the cooler body 410 or at one side of a lateral surface of the cooler body 410.

In case the cooling part 420 is disposed under the cooler body 410, condensate and the like generated during the cooling of air may be collected at a lower portion of the cooler body 410. Accordingly, an additional condensate discharge device is not required. The cooling part 420 may cool the cooling space while circulating air in the cooler body 410.

To this end, the cooling part 420 may include a first inlet 430 into which air heated in the cooling space is suctioned, and a cooling element 440 configured to cool air supplied by the first inlet 430. Further, the cooling part 420 may include a first outlet configured to discharge air cooled in the cooling element 440 to the cooling space.

The first inlet 430 may include a first suction duct 432 provided at a central portion of a lower portion of the cooling space. The first suction duct 432 may guide air in the cooling space to the lower portion of the cooling space, and, preferably, may be provided with a blowing fan 434 to forcibly supply air in the cooling space to the cooling element 440.

In the embodiment, various methods may be used to cool air in the cooling space. The cooling element 440 may include a Peltier element 442.

One surface of the Peltier element 442 may be a cooling surface and the other surface may be a heat release surface through the supply of electric current. As for the cooling element 440 according to the embodiment, the cooling surface of the Peltier element 442, where cooling is performed, may be disposed towards the cooling space.

Further, the cooling element 440 may include a heat sink 444 where a surface area contacted by air is expanded through contact with the cooling surface of the Peltier element 442.

The heat sink 444 may be disposed between the first inlet 430 and the first outlet. The heat sink 444 may rapidly cool air supplied through the first inlet 430 using the expanded contact surface. The heat sink 444 may be made of a material having excellent thermal conduction. The material typically includes aluminum or copper and the like.

The heat sink 444 may include a contact plate 444a configured to contact the Peltier element 442, and a plurality of cooling pins 444b configured to extend from the contact plate 444a. The cooling pin 444b may enhance cooling performance of air through the expanded contact surface.

In the embodiment, the cooling element 440 uses a Peltier element 442, but a method by which air is cooled by circulating refrigerants may also be applied to the cooling element 440.

The first outlet may guide air that is cooled while passing through the cooling element 440 such that the cooled air is discharged to the cooling space.

The first outlet may discharge cooled air to the cooling space through both sides of the inlet after guiding the cooled air to allow the cooled air to flow into a central portion of the cooling element 440. To this end, the first outlet may include a discharge guide 436 configured to communicate with a lower portion of the cooling element 440 and extending to both sides of the first inlet 430.

In the embodiment, the first inlet 430 is provided at a central portion of the cooler unit 400, and the first outlet is provided on both lateral surfaces of the first inlet 430. Accordingly, a suction path of air and a discharge path of air may be separated, and a circulation flow path, on which air in the cooling space draws a large circle towards the central portion, is formed, thereby ensuring improved circulation and flow of air and improved cooling efficiency.

In the embodiment, the cooler unit 400 may further include a heat release part 450 for discharging heat generated on the other surface, i.e., the heat release surface of the Peltier element 442 of the cooling part 420 outwards.

The heat release part 450 may include a heat release block 452 provided to contact a bottom of the cooling element 440. As the heat release block 452 contacts the cooling element 440, heat generated on the other surface of the cooling element 440 during the cooling of one surface of the cooling element 440 may be delivered to one surface of the cooling element 440, and the heat generation block 452 may release the delivered heat.

The heat release block 452 may include a heat release plate 452a that contacts the cooling element 440, specifically, the Peltier element 442, and a plurality of heat release pins 452b that extend from the heat release plate 452a. The heat release pin 452b is provided to effectively release heat delivered by the cooling element 440 through the expanded contact surface.

Further, the heat release part 450 may include a second inlet 454 that supplies external air to the heat release block 452, and a second outlet 456 that discharges air, supplied to the second inlet 454 and then heated by absorbing heat of the heat release block 452, outwards.

The second inlet 454 may include a second suction duct 454a provided at a central portion of a lower portion of the heat release block 452, and a suction fan 454b installed at one side of the second suction duct 454a.

The suction fan 454b suctions external cold air and supplies the air to the second suction duct 454a, and the air supplied to the second suction duct 454a is supplied to the heat release block 452 and absorbs heat of the heat release block 452.

Further, the second outlet 456 may be disposed on both lateral surfaces of the heat release block 452, and may guide air that is heated by absorbing heat from the heat release block 452 to discharge the air outwards. A flow path in the second outlet 456 may be inclined or bent downwards.

The cooler body 410 may be provided with a cooling shelf 460 that separates the cooling space from the cooling part 460. The cooling shelf 460 may be configured to cover the first inlet 430 and the first outlet.

Additionally, the cooling shelf 460 may be provided with the first inlet 430 to circulate air between the cooling space 460 and the cooling part 420, or a plurality of through holes 462 configured to communicate with the first inlet 430. The through hole 462 may be formed into a grill that is opened in one direction in a long shape.

Items such as a beverage or cosmetics and the like may be placed on the cooling shelf 460, and the cooling shelf 460 may provide a flow path through which air in the cooling space is supplied to the cooling element 440 through the through hole 462 or through which air cooled by the cooling element 440 is supplied to the cooling space.

The cooling shelf 460 may be formed to have different heights to prevent the flow path connected to the first outlet from clogging when beverages or cosmetics are placed on the cooling shelf 460.

That is, the cooling shelf 460 may include a first upper surface 460a on which the through hole 462 connected to the first outlet is formed, and a second upper surface 460b on which the through hole 462 connected to the first inlet 430 is formed.

Preferably, the first upper surface 460a may be formed to have a height higher than that of the second upper surface 460b by a difference (d).

With the structure, a portion where the first upper surface 460a of the cooling shelf 460 is connected to the first outlet is narrow and high. Accordingly, it is difficult to place beverages or cosmetics on the first upper surface 460a. Further, even when beverages or cosmetics are placed on the first upper surface 460a, because of a difference in heights of the first upper surface 460a and the second upper surface 460b, the beverages or cosmetics are inclined towards the second upper surface 460b. Thus, the first outlet may be prevented from clogging.

In the embodiment, the mirror cabinet apparatus 10 is provided with a cooler unit 400 configured to perform the function of cooling, in the accommodation space. In case the cooling surface and the heat release surface of the Peltier element 442 provided at the cooling part 420 exchange their positions, the cooling space may be turned into a heating space. Accordingly, a heating cabinet having a configuration similar to the configuration of the cooler unit 400 may be implemented through a change in directions of arrangement of the Peltier element 442, and the cooling space of the cabinet body 100 may be replaced with a heating cabinet.

The second inlet 454 may be configured to allow external air to flow through the intake port 114 formed at the cabinet body 100 and may supply the external air to the heat release block 452.

Further, the second outlet 456 is connected to a discharge hole 116 formed at the cabinet body 100 and may discharge air, heated by absorbing heat of the heat release block 452, outwards.

Operations of a mirror cabinet apparatus 50 according to a fifth embodiment are described as follows.

The mirror cabinet apparatus 50 is provided with a cooler unit 400 having a cooling space in an accommodation space provided in a cabinet body 100.

The cooler unit 400 may be provided with a cooling space therein and may keep the cooling space cool while circulating cold air in the cooling space.

The user may open a cooler door 412 provided at a front of the cooler unit 400 and may keep items such as beverages or cosmetics and the like in the cooling space.

A temperature of air in the cooling space may be increased by items such as beverages or cosmetics and the like stored in the cooling space. The air having a temperature increased by the beverages or cosmetics and the like is supplied to a cooling part 420 through a first inlet 430 provided under the cooling shelf 460.

The air supplied to the cooling part 420 is cooled while contacting a Peltier element 442 of a cooling element 440, and is discharged to the cooling space by a discharge guide 436 of a first outlet provided at both sides of the cooling element 440 in the state of cold air.

Heat absorbed by the cooling part 420 from air is supplied to a heat release part 450 provided below a heat sink 444, and then is cooled while being discharged outwards.

External cold air may be suctioned into the heat release part 450 through the second inlet 454. The second inlet 454 is provided with a heat release fan 454a to forcibly circulate the external air.

Air supplied to the second inlet 454 absorbs heat of the heat release part 450 and is heated while contacting the heat release part 450. Then the air is discharged outwards through a second outlet 456 disposed at both sides of the second inlet 454.

The user opens the cooler door 412 and takes out beverages or cosmetics and the like to use them when the cooler unit 400 performs the function of cooling for a predetermined period.

The mirror cabinet apparatus 10, as described above, may keep items in a bathroom cool and may prevent them from going bad and the like using the cooler unit 400 provided at the cabinet body 100, thereby extending shelf lives of the items.

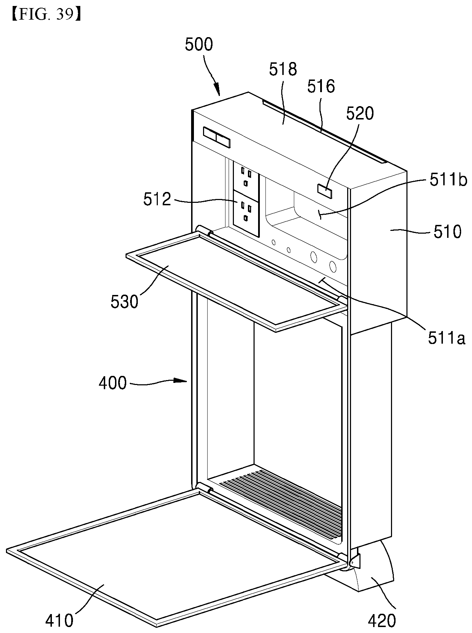

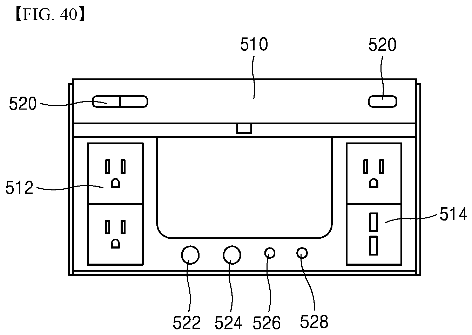

FIG. 39 is a perspective view illustrating a state in which a charging box door is opened in a state in which a charging box unit according to the fifth embodiment is coupled to an upper portion of a cooler unit, and FIG. 40 is a front view illustrating the charging box unit according to the fifth embodiment.

In the embodiment, a charging box unit 500, as illustrated, is coupled to a top of a cooler unit 400.

The charging box unit 500 may include a charging box body 510 that forms an appearance. The charging box body 510 may be provided with a power circuit for supplying power. The power circuit may be connected to a power socket provided at the outside to receive power.

Further, the charging box unit 500 may be provided with a charging box door 530 configured to open and close a front of the charging box body 510. A lower end of the charging box door 530 may be rotatably connected to the charging box body 510. The charging box door 530 may be configured to have a limited unfolded angle such that items are placed on the charging box door in a state in which the charging box door is opened.

The charging box body 510 may be provided with at least one power supply that is connected to a power circuit and supplies power at one side thereof.

The power supply may include an AC supply socket 512 for supplying alternating currents. Plugs of small-sized household appliances may be inserted into the socket 512 and may be electrically connected to the socket 512.

The power supply may include a USB terminal 514 that supplies direct currents used for mobile phones or small-sized electronic products in addition to the socket 512 that supplies alternating currents. The USB terminal 514 may be provided at one side of the charging box body 510 adjacent to the socket 512.

The charging box body 510 may be provided with a switch 520 for controlling operations of the power circuit at one side thereof. The switch 520 may control the supply of power from the power circuit to the power supply, e.g., the socket 512. Preferably, in the embodiment, a plurality of sockets 512 may be provided. For example, three sockets may be provided. Further, the switch 520 may be provided to correspond to each socket 512. Accordingly, the switch may control the supply of power from the power circuit to each socket 512.

As described above, for the charging box unit 500, each socket 512 is provided with a switch 520. After a small-sized electric product connected to each socket 512 is used, supply of power from the socket 512 may be cut off without separating a cable.

The switch 520 may include a main power switch 522 that controls the entire power supplied to the charging box unit 500.

The main power switch 522 may completely cut off the supply of power to the power circuit when the user does not use the mirror cabinet apparatus 10 for a long period for the reasons that the user goes on a trip, goes on a business trip, move, and the like. Accordingly, consumption of standby power may be prevented.

The switch 520 may include an auxiliary power switch 524 that operates power supply of another module product attached to and detached from a lower portion of the charging box unit 500, at a lower portion of thereof.

In the embodiment, as an example, a cooler unit 400 in which cosmetics and the like are stored may be attached to a bottom of the charging box unit 500, and the auxiliary power switch 524 may be used to operate power supply of the cooler unit 400.

The auxiliary power switch 524 may cut off power supplied to the cooler unit 400 when temperature is low, the cooler unit 400 does not store cosmetics and the like, and the function of cooling is not required, e.g., in the winter.

The auxiliary power switch 524 may also be configured to perform another function in addition to the function of supplying power or cutting off power on the basis of the type of module products coupled to the lower portion of the charging box unit 500.

In the embodiment, the charging box unit 500 may be connected to voice recognition AI online services. The charging box unit 500 may be provided with an online connection switch and the like for a connection with online services.

Further, the charging box unit 500 may be provided with an overcurrent breaker for preventing an overcurrent of the power circuit, and may be provided with a reset switch for testing operations of the overcurrent breaker or for operating the overcurrent breaker again after a problem that causes an overcurrent is solved in case the overcurrent breaker is operated, at one side of the charging box unit 500.

The charging box body 510 may include a storage space 511a the front of which is opened. The storage space 511a may store small-sized electronic products, toiletries, bathroom products and the like.

The charging box body 510 may include a charging box door 530 provided to open and close the front of the charging box body.

Preferably, the socket 512 may be provided in the storage space 511a of the charging box body 510, and the charging box door 530 may simultaneously open and close the socket 512 and the storage space 511a. The charging box door 530 is configured to open and close a portion of the socket 512. Accordingly, when a plug of a small-sized household appliance is connected or disconnected to the socket, the charging box door 530 is opened, and, when the plug is being connected to the socket, the charging box door 530 is closed.

In the embodiment, the charging box door 530 opens and closes the socket 512 and the storage space 511a. When the socket 512 is disposed outside of the storage space 511a, the charging box door 530 may be provided only to open and close the storage space 511a.

The charging box door 530 may be provided with a light transmitting window made of a transparent or translucent material.

The charging box door 530 prevents wires from being exposed outwards, thereby providing aesthetic qualities, and prevents infiltration of moisture or insertion of foreign substances into the socket 512.

Further, the charging box body 510 may be provided with a charging module that is connected to the power circuit and that supplies power for charging a small-sized electronic product, at one side of an upper portion of the charging box body.

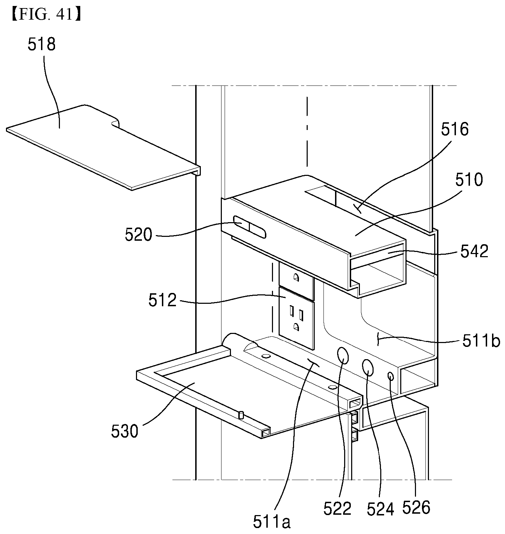

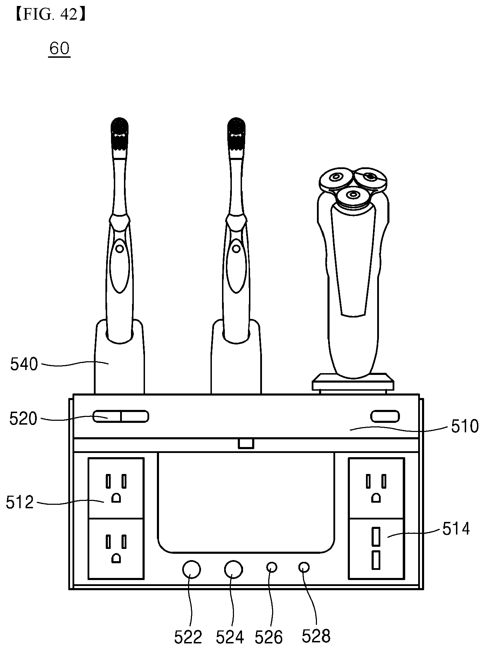

FIG. 41 is a perspective view illustrating a state in which a part of the charging box according to the fifth embodiment is cut. FIG. 42 is a front view illustrating a state in which the charging box according to the fifth embodiment is being used.

Referring to FIG. 41, the charging box body 510 may be provided with a cable storage part 511b at one side of the inside of the charging box body 510, e.g., a rear of the storage space 511a. The cable storage part 511b may be separated from the storage space 511a of the charging box body 510 by a wall and the like, and may store a cable connected to the power circuit.

An upper plate of the charging box body 510 may serve as a support surface on which a small-sized household appliance may be placed. Additionally, the charging box body 510 may include a cable connection hole 516 that is opened to allow a cable to be easily connected to the charging box body 510, at an upper portion of the charging box body 510.

Further, the charging box body 510 may be provided with an upper cover 518 that covers a part of the cable connection hole 516 to minimize exposure of the cable connection hole 516, at the upper portion of the charging box body.

The cable storage part 511b may store a cable for supplying power to a small-sized electronic product or a cable for supplying power to a charging module together.

When a small-sized household appliance is placed on the upper plate of the charging box body 510, a power cable may pass through the cable connection hole 516 and may connect to the inside of the charging box body 510 where the socket 512 is disposed. Accordingly, the power cable is not seen from the outside.

Referring to FIG. 42 that is a front view illustrating a charging module of a charging box according to an embodiment, in the embodiment, the charging module may include a charging dock 540 held on the upper surface of the charging box body 510.

The charging dock 540 may be provided to hold a small-sized electronic product. The charging dock 540 may supply power and charge a small-sized electronic product when the small-sized electronic product is held at the charging dock. For example, the charging dock 540 may be provided as a charging dock exclusively for charging a small-sized electronic product such as an electric toothbrush, an electric razor and the like.

The charging dock 540 may be connected to the power circuit through a cable, and the cable connected to the charging dock 540 is connected to the socket 512 of the charging box body 510 to receive power.

In the embodiment, the charging module may include a wireless charging pad (not illustrated) provided at an upper end of the charging box body 510. The wireless charging pad may supply power to a small-sized electronic product using an induced electromotive force in a non-contact manner. The wireless charging pad may supply power without connecting to an additional cable as long as the user places a mobile phone performing the function of wireless charging or other wireless charging devices at the upper end of the charging box body 510.

In the embodiment, the power circuit may cut off supply of power to prevent consumption of standby power in case a small-sized electronic product connected to the socket 512 or the charging module is not being used.

To this end, the power circuit may include an auxiliary relay that cuts off power supplied to the socket 512 or the charging module in case a voltage of power supplied to the socket 512 or the charging module is a predetermined voltage or lower.

The auxiliary relay may cut off supply of power in case a voltage of power consumed by the socket 512 or the charging module is kept at the predetermined voltage or lower, and may supply power to the socket 512 or the charging module again in case at least any one of a predetermined cycle, a predetermined period or predetermined conditions is satisfied.

For example, the auxiliary relay may cut off supply of power after a predetermined period in case an electric razor connected to the charging module is completely charged and current consumption drops to a level of standby power.

The auxiliary relay may resupply power at predetermined time such that a state, in which an electric razor is charged, maintained at the time when the user uses the electric razor. That is, the auxiliary relay may control the auxiliary relay such that power is resupplied to the electric razor from 7 a.m. in case the electric razor is scheduled to be used at 8 a.m. by the user.

Accordingly, even though the user forgets to operate the switch 520 to charge the electric razor, the auxiliary relay is controlled to automatically supply power from the power circuit to the charging module. Accordingly, the state in which the electric razor is charged may be maintained at least at the time when the user uses the electric razor.

In the embodiment, the charging box unit 500 may cut off the supply of power and save electric power when a small-sized electronic product connected to the socket 512 or the charging module does not consume power.

The charging box unit 500 may include a circuit that uses a current transformer (CT) sensor and an energy metering IC element to measure an amount of power supplied from the power circuit to each socket 512 or the charging module.

The charging box unit 500 may measure and calculate electric current supplied by each socket 512 or the charging module, and may confirm an amount of power consumed by a small-sized electronic product connected to each socket 512 or the charging module in real time.

The charging box unit 500 may conjecture a charging state of the small-sized electronic product using the amount of power, and may control an application state of power supplied by each socket 512 or the charging module using information on the charging state.

A method of controlling the charging box unit 500 is described as follows.

The method of controlling the charging box unit 500 may include a step of control over the supply of power to a small-sized electronic product connected to each socket 512 or a charging module.

The step of control over the supply of power to a small-sized electronic product may include a current supply step of supplying electric current to a power circuit. The power circuit may supply electric current to a small-sized electronic product through each socket 512 or the charging module. When electric current is supplied to the small-sized electronic product, a consumed current confirmation step of confirming electric current consumed by the power circuit may be performed. In the consumed current confirmation step, electric current consumed by the small-sized electronic product connected to each socket 512 or the charging module are sensed, and, when a state, in which the sensed electric current is constantly consumed at a level of standby current or lower, is maintained for a predetermined period or longer, the small-sized electronic product is not being used or is completely charged.

As described above, when the electric current confirmed in the current confirmation step is maintained at standby current or lower for a predetermined period, a power cutoff step is performed to cut off the supply of power to the power circuit.

The flow of control over the supply of power to a small-sized electronic product includes sensing a period for which the supply of power is cut off in the power cutoff step, and, when the period is longer than a predetermined period, a current resupply step of resupplying power to the power circuit may be performed.

The charging box unit 500, as described above, may sense consumption of power supplied by the power circuit and may sense s state in which electric current is used. When electric current is not used, the supply of power is cut off to reduce consumption of standby power.

Standby current that is a reference for determining power consumed by the power circuit in the power cutoff step may be set through following steps. The power cutoff step may include a maintenance period sustenance step in which a period of the consumed current confirmation step is increased to a predetermined maintenance period when consumed currents confirmed in the consumed current confirmation step are less than a set value, i.e., a predetermined reference current (e.g., 1 to 5 W with respect to an average standby power of 3.6 W).

Additionally, a period of a maintenance period sustenance step may be set to a predetermined period (e.g., one to a few hours), and, when the maintenance period passes, a standby current setting step of setting consumed currents confirmed in the consumed current confirmation step to standby current is performed.

As described above, in the power cutoff step, standby power may be determined through the maintenance period sustenance step and the standby current setting step, and, on the basis of the standby power, the supply of power to the power circuit may be cut off.

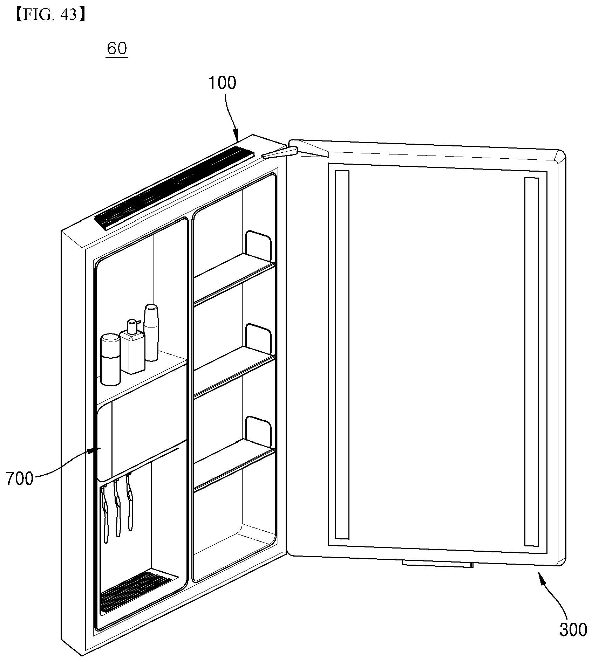

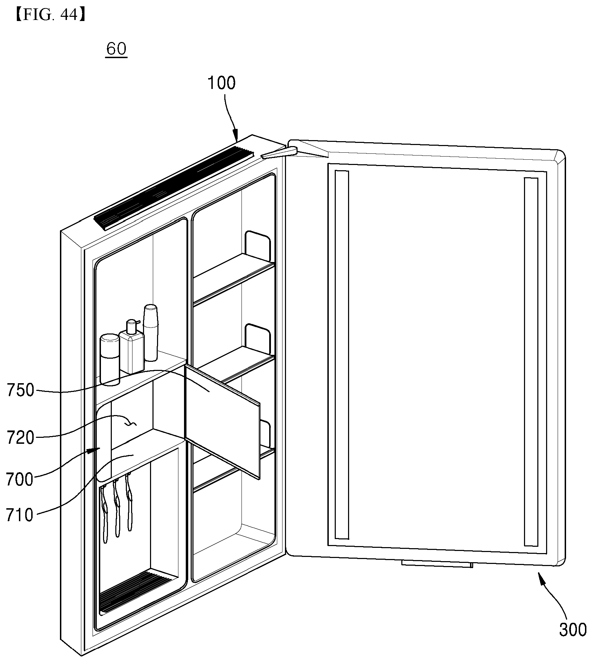

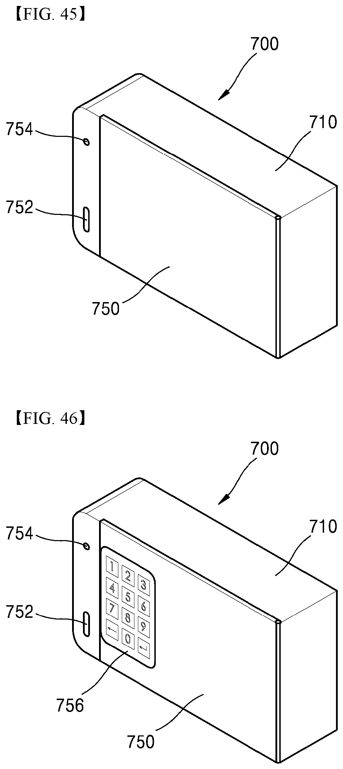

FIG. 43 is a perspective view illustrating a state in which a mirror door unit of a mirror cabinet apparatus 60 according to a sixth embodiment is opened, FIG. 44 is a perspective view illustrating a state in which a secret door 750 of a secret box 700 is opened in FIG. 43, and FIG. 45 is a view illustrating a secret box 700 according to an embodiment.

The mirror cabinet apparatus 60, as illustrated, includes a cabinet body 100, a mirror door unit 300, and a secret box 700, a sensor, a database and a controller.

The controller may control the mirror cabinet apparatus 60 while transmitting signals to and receiving the same from the sensor, a lock 770 and the database.

The secret box 700 may include a secret box body 710, a secret door 750, and a lock 770 that may lock the secret door 750.

The secret box 700 may be disposed at one side of an accommodation space formed at the cabinet body 100. To improve usability of the accommodation space, the accommodation space may be divided by a wall body, and the secret box 700 may be buried in the divided accommodation space.

The secret box 700 may be opened in a direction of an opened portion of the cabinet body 100 and may be provided with a secret space 720 therein.

The secret box body 710 may be formed by a wall formed in the cabinet body 100. Further, the secret box body 710 may be implemented as an additional member separate from the wall formed in the cabinet body 100.

The secret box 700 may include an additional secret door 750. The secret door 750 may open and close the secret space 720 provided by the secret box body 710.

Items such as personal hygienic products or medicine and the like that the user does not desire to show to others may be stored in the secret space 720.

Preferably, the secret box 700 is provided with the lock 770 that may lock the secret door 750 to restrict access to the secret space 720 by others except the user.

Preferably, the lock 770 may restrict access to the secret space 720 by others and may be freely opened and closed by the user when necessary.

The lock 770 may be unlocked using user biodata or a unlock signal input by the user.

The user biodata may include information on a voice, a fingerprint, the iris or the face and the like of the user. The unlock signal may include an arrangement of numbers or the order of patterns and the like.

The sensor may identify the user biodata or the unlock signal input by the user.

The user biodata or unlock information of the user may be prestored in the database.

After user biodata or an unlock signal identified by the sensor is compared with the user biodata or the unlock signal prestored in the database, the lock 770 may be unlocked.

The sensor may be provided with a number pad. The user may input the unlock signal comprised of arranged numbers by pressing buttons on the number pad. The number pad may be disposed at a front of the secret door 750 such that the user inputs the numbers easily.

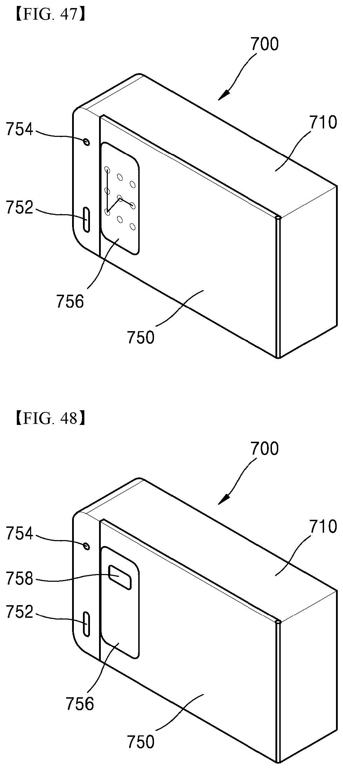

FIG. 46 is a view illustrating a display 756 for inputting a password of a secret box 700, and FIG. 47 is a view illustrating a display 756 for inputting a pattern of a secret box 700.

The secret box 700, as illustrated, may include a display 756.

The display 756 is preferably disposed at the front of the secret box 700 such that the user may readily see what is displayed on the display 756. Accordingly, the display 756 may be installed at the secret door 750.

As illustrated in FIG. 46, arranged numbers for inputting a password may be displayed on the display 756 such that the user unlocks the lock 770. The user may input the password using the number pad disposed on the display 756.

For the arrangement of numbers, numbers may be arranged from the smallest number to the largest number, or from the largest number to the smallest number, or randomly to prevent theft.

The display 756 may preferably sense a touch of the user such that the user inputs the password through the display 756. A surface of the display 756 is implemented as an electrostatic display or a pressure-sensitive display to sense a position touched by the user and to recognize a number corresponding to the position touched by the user.

As illustrated in FIG. 47, dots that are horizontally and vertically arranged at regular intervals may be displayed on the display 756 such that the user inputs a pattern for unlocking the lock 770.

As illustrated, a total of nine dots may be displayed. That is, three rows and three columns may be displayed on the display. However, the number of rows and columns is not limited. For example, four rows and five columns of dots, i.e., a total of 20 dots, may be displayed.

The user biodata stored in the database may include information on a voice of the user.

Accordingly, the secret box 700 may include a microphone 754 that may sense a sound, and a speaker 752 that may output a sound source playing signal.

A voice of the user may be input through the microphone 754, and a sound source playing signal may be output through the speaker 752.

The user may find out an operation state of the lock 770 using the signal output through the speaker 752. The speaker allows the user to know a state where the lock is ready to operate or allow the user to know an input error made by the user. Accordingly, user convenience may be promoted.

To effectively deliver a sound, the microphone 754 and the speaker 752 may be disposed at the front of the secret box 700.

When a voice of the user is input through the microphone 754 of the secret box 700, the input voice is compared with a voice of the user prestored in the database. When the input voice matches the stored voice, the lock 770 may be unlocked.

Voice information identified through the microphone 754 may include verbal information uttered by the user. For example, the verbal information may be arranged numbers in a predetermined order or a specific word uttered by the user.

As voices of different people have different frequency properties, the voice information identified through the microphone 754 may include information on a unique voice frequency of the user.

FIG. 48 is a view illustrating a fingerprint recognition device 758 of a secret box 700.

The secret box 700, as illustrated in FIG. 48, may be provided with a fingerprint recognition device 758 that may detect a fingerprint, at the front of the secret box 700.

A sensor may include the fingerprint recognition device 758 that may detect a fingerprint of the user and may identify user biodata.

The fingerprint recognition device 758 may be disposed at the front of the secret box 700 such that the user easily touches the fingerprint recognition device 758 with the user's finger.

The user biodata stored in the database may include information on a fingerprint of the user.

The sensor may include a camera that may recognize the iris or face of the user.

The camera may be disposed at the front of the secret box 700 to recognize the iris or face of the user.

The user biodata stored in the database may include information on the iris or the face of the user.

Information on a single user may be stored as user biodata or an unlock signal for the single user. However, information on a plurality of users may be stored such that the plurality of users use the secret box.

The user may not necessarily unlock the lock 770 by any one of the biodata and the unlock signal.

The user biodata or the unlock signal may all be stored in the database. When the user inputs any one of the biodata or the unlock signal, the input information is compared with the information stored in the database, and then when the input information matches the stored information, whether to unlock the lock 770 may be determined.

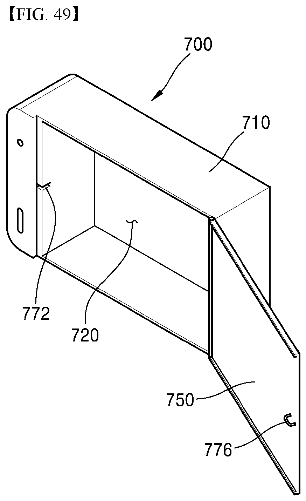

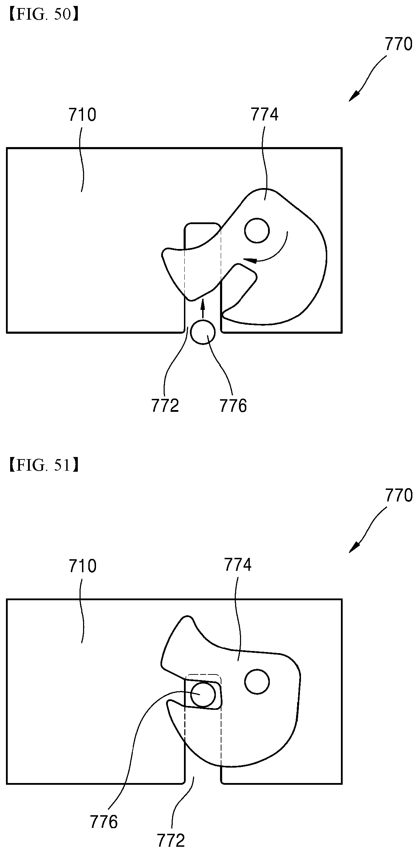

FIG. 49 is a view illustrating a hanger 776 and an entry hole 772 that are exposed when a secret box 700 is opened, and FIGS. 50 and 51 are views illustrating a lock with a secret box opened and with a secret box closed.

The secret door 750 may be provided with a hanger 776 at one side thereof. An entry hole 772 may be provided at one side of the secret box body 710 such that the hanger 776 installed at one side of the secret door 750 does not interfere with the secret body as the secret door 750 is closed.

When the secret door 750 is closed, the secret door 750 may completely come into close contact with the secret box body 710 and may close the secret space 720 while the hanger 776 is inserted into the entry hole 772.

A lever 774 that may hold or release the hanger 776 inserted into the entry hole when the hanger 776 is inserted into the entry hole 772 while the secret door 750 is closed, and a driver that may drive the lever 774 may be provided at a body of the secret door 750.

The lever 774 may be swivably installed. When the hanger 776 is inserted into the entry hole 772, the hanger 776 is inserted into the entry hole 772 while being held by the lever 774.

When the user unlocks the lock 770, the hanger 776 may escape from the entry hole 772 while the lever 774 is swiveled by the driver. When the hanger 776 escapes from the entry hole 772, the secret door 650 may be spaced apart from the body of the secret door 750 by a distance moved by the hanger.

Even though an additional handle is not formed at the secret door 750, the user may easily open the secret door 750 spaced apart from the body of the secret door 750. Further, as the secret door 750 is not provided with a handle, aesthetic qualities of the secret door 750 may be improved.

Positions of the hanger 776, the lever 774 and the driver may not be limited. The positions of the hanger 776, the lever 774 and the driver may be changed. That is, the hanger 776 may be installed at the body of the secret door 750, and the lever 774 and driver may be installed at the secret door 750.

The hanger 776 has a simpler structure than the lever 774 and the driver. When the hanger 776 is installed at the body of the secret door 750, the secret door 750 may become thin and light.

The lock 770 may be made of am electromagnet.

A magnetic force attachment may be disposed at one side of the secret door 750, and, with the secret door 750 closed, an electromagnetic member may be disposed at one side of the secret box body 2602 to correspond to a position of the magnetic force attachment.

Unlike a permanent magnet, an electromagnet is magnetized when electric current flows, and is not magnetized when the electric current is cut off.

Accordingly, when electric current flows in the electromagnetic member with the secret door 750 closed, an attractive force is generated between the electromagnetic member and the magnetic force attachment by a magnetic force, and the secret door 750 is closed.

When the user unlocks the lock 770, the secret door 750 may cut off the electric current flowing in the electromagnetic member, and the user may open the secret door 750.

The magnetic force attachment may be made of a magnet, or a ferromagnetic substance such as iron, nickel, cobalt and the like.

When a relatively simple structure may be installed at the secret door 750 in case the lock 770 is implemented as a device using a magnetic force, the secret door 750 may become thin and light.

The cabinet apparatus according to the embodiment may unlock the lock 770 using a mobile device.

User information transmitted by the mobile device through a transmitter that may mirror the mobile device may be received, then the received user information is compared with the user information stored in the database, whether the received user information matches the stored user information may be determined, and then the lock 770 may be unlocked.

Below, a mirror cabinet apparatus 70 according to a seventh embodiment is described.

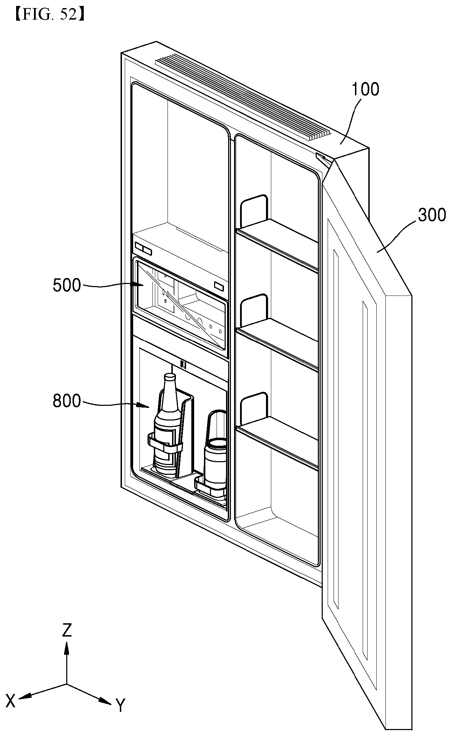

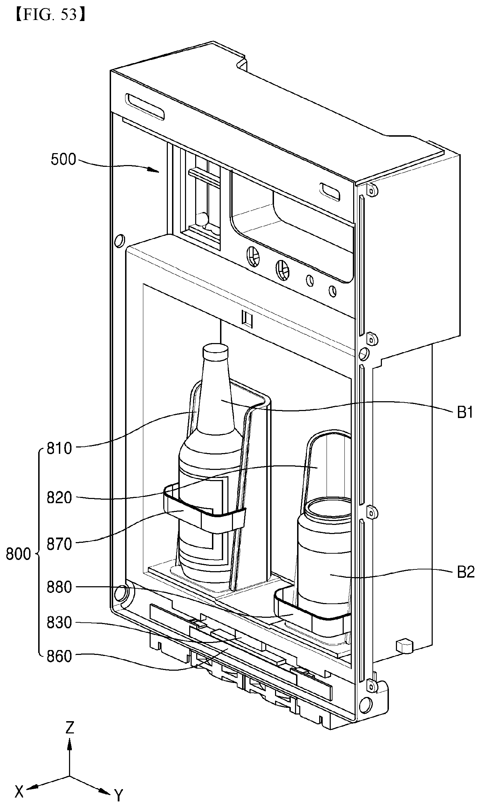

FIG. 52 is a view illustrating a mirror cabinet apparatus according to a seventh embodiment, and FIG. 53 is a view illustrating a rapid cooling unit of the mirror cabinet apparatus according to the seventh embodiment.

The mirror cabinet apparatus 70 may be provided with a rapid cooling unit 800 in storage of a cabinet body 100.

The storage provided in the cabinet body 100 is exposed through the opening of a mirror door unit 300. The cabinet body 100 is provided with storage at one side of a space therein to tidy up and store bathroom products.

The cabinet body 100 is provided with a rapid cooling unit 800 that may store beverage vessels, and a charging box unit 500, at the other side thereof.

The charging box unit 500 is the same as the above-described charging box unit. Accordingly, description in relation to the charging box unit 500 is omitted.

The rapid cooling unit 800 is a functional unit that may keep beverages vessel cold and allow the user to drink a cold beverage immediately when the user is thirsty, in a bathroom.

The rapid cooling unit 800 may be disposed below the charging box unit 500.

The rapid cooling unit 800 includes a holder 810, 820 that stores a beverage vessel (B1 and B2), a Peltier element 830 that cools a beverage stored at the holder, a heat pipe 850 that delivers cold energy of the Peltier element to the holder, and a heat release device 860.

A holder guide 870, 880 that may move upwards and downwards is coupled to a front of the holder 810, 820. On the basis of the upward and downward movement of the holder guide 870, 880, the supply of power to the Peltier element may be on/off.

The user opens the mirror door unit of the mirror cabinet apparatus, stores a beverage vessel (B1 and B2) at the holder 810, 820, moves the holder guide 870, 880 upwards and downwards and then changes positions of the holder guide 870, 880 to cool the beverage stored at the holder 810, 820.

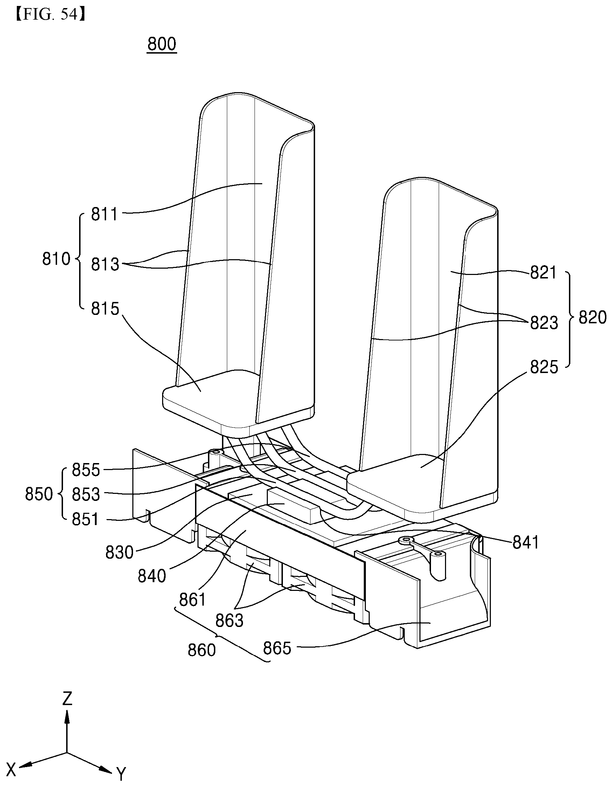

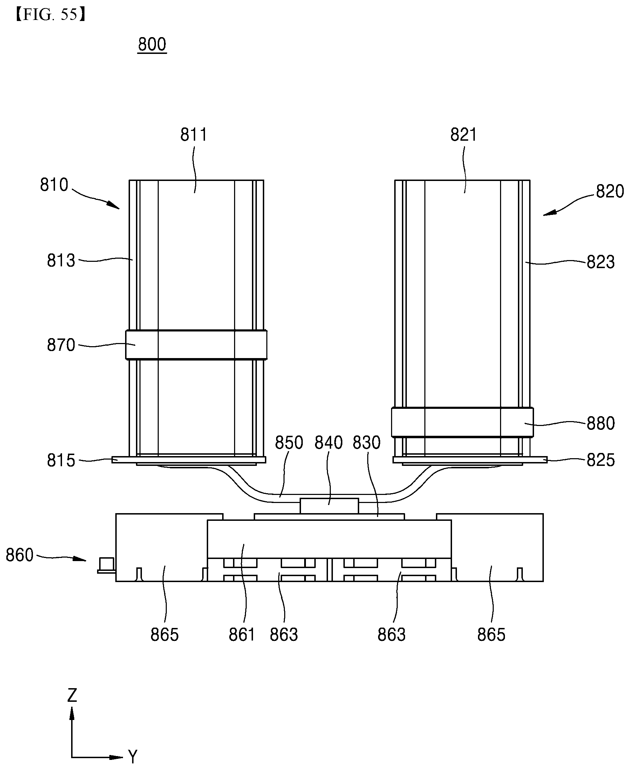

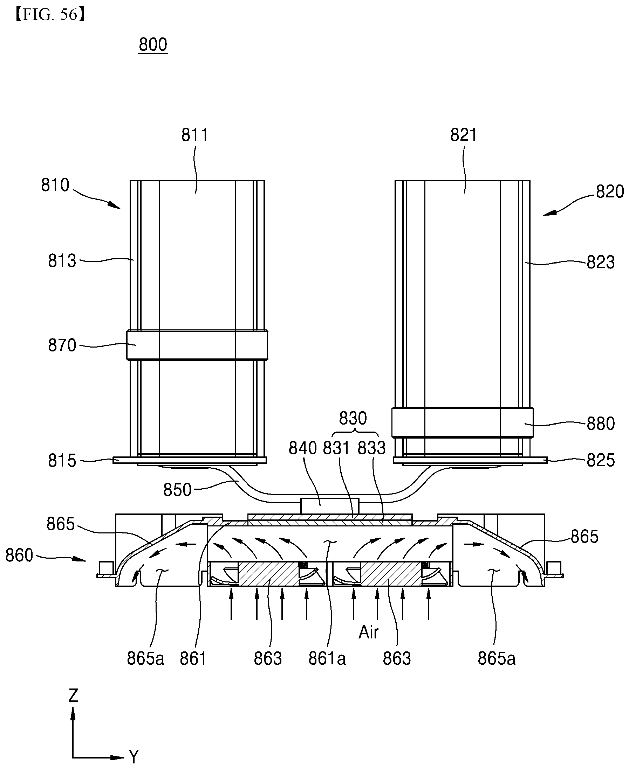

FIG. 54 is a perspective view schematically illustrating a rapid cooling unit according to an embodiment, FIG. 55 is a front view schematically illustrating a rapid cooling unit according to an embodiment, and FIG. 56 is a view illustrating an operation state in a heat release device of a rapid cooling unit according to an embodiment.

The rapid cooling unit 800, as illustrated, includes a holder 810, 820, a Peltier element 830, a heat pipe 850, and a heat release device 860.

The holder 810, 820 may store a beverage vessel (B1 and B2) and may rapidly cool beverage in the beverage vessel. At least one holder 810, 820 may be provided, and, as illustrated, a plurality of holders may be provided. For example, the plurality of holders 810, 820 may be spaced apart from each other in the left-right direction (i.e., the Y-axis). With the above-described configuration, the plurality of beverage vessels (B1 and B2) may be stored and cooled at the same time.

The holder 810, 820 may be installed through the storage in the mirror cabinet apparatus 70.

The Peltier element 830 is disposed below the holder 810, 820 and is cooled to a cooling temperature required for cooling a beverage at the holder 810, 820.

As for the Peltier element 830, one contact point is cooled and the other contact point is heated, when power is supplied as widely known.

In this case, as for the Peltier element 830, a portion of the contact point that is cooled to a cooling temperature required by the holder 810, 820 is referred to as a cooling part 831, and a portion of the contact point that is disposed on the opposite side of the cooling part and is heated is referred to as a heat generation part 833.

That is, the Peltier element 830 includes a cooling part 831 and a heat generation part 833.

The heat pipe 850 may be connected between the cooling part 831 of the Peltier element 830 and the holder 810, 820 and may be configured to deliver cold air of the cooling part 831 to the holder 810, 820.

An upper surface of the cooling part 831 of the Peltier element 830 is formed into a flat plate shape. The heat pipe 850 may be stably coupled to the cooling part 831 having the flat plate shape using a connection block 840.

The connection block 840 connects between the cooling part 831 and the heat pipe 850.

To this end, a bottom of the connection block 840 may be flat such that the bottom of the connection block 840 is disposed to face a top of the cooling part 831. A pipe installation groove 841 into which the heat pipe 850 is inserted and installed may be provided at an upper portion of the connection block 840.

Specifically, a plurality of heat pipes 850 may be used.

For example, the heat pipe 850 may include a first heat pipe 851, a second heat pipe 853 and a third heat pipe 855. The first, second, and third heat pipes 851, 853, 855 may be disposed in parallel with each other at regular intervals in the front-rear direction (i.e., the X-axis direction).

The connection block 840 may be provide with three pipe installation grooves 841 such that the first, second, and third heat pipes 851, 853, 855, i.e., three heat pipes, are inserted and installed in parallel in the front-rear direction (i.e., the X-axis direction).

As described above, the arrangement shape and the number of the pipe installation grooves 841 of the connection block 840 may be formed to correspond to those of the first, second and third heat pipes 851, 853, 855, and embodiments of the pipe installation groove may vary depending on the heat pipe 850.

A heat release device 860 may be coupled to face the heat generation part 833 of the Peltier element 830 and may release generated heat of the heat generation part 833.

For example, the heat release device 860 may cool generated heat of the heat generation part 833 while forcing air received from the outside to flow through a determined flow path. Then the air used to cool the heat generation part 833 may flow outwards and may be discharged.

Referring to. FIG. 56, the heat release device 860 includes a heat release housing 861, a blowing fan 863 and a heat release guide 865.

The heat release housing 861 is supplied with external air through the driving of the blowing fan 863 installed at a lower portion of the heat release housing 861 and allows the air to flow to both sides, i.e., the left and right of the heat release housing 861. Accordingly, the heat generation part 833 is cooled.

To this end, an inner path 861a may be formed in the heat release housing 861.

Air supplied from the lower portion of the heat release housing 861 cools generated heat of the heat generation part 833 while flowing to both sides. i.e., the left and right of the heat release housing 861 through the inner path 861a, and then is discharged outwards through the heat release guide 865 coupled to the left and right of the heat release housing 861.

The blowing fan 863 may be installed to supply external air to the heat release housing 861.

The blowing fan 863 may be installed below the heat release housing 861 to forcibly supply external air, i.e., air outside of the mirror cabinet apparatus 70, towards the inner path 861a of the heat release housing 861.

For example, a plurality of blowing fans 863 may be provided as illustrated in FIG. 3. At least one blowing fan 863 may be provided in each of the areas where the lower portion of the heat release housing 861 is divided into the left area and the right area.

That is, as each of the plurality of blowing fans 863 is installed in the left and right areas at the lower portion of the heat release housing 861 such that external air is smoothly supplied through the areas different from each other.

Air supplied to the left and right areas through the plurality of blowing fans 863 cools the heat generation part 833 and then is separated and discharged through the heat release guide 865 coupled to both sides of the heat release housing 861. Accordingly, the air may be smoothly discharged.

The heat release guide 865 may provide an exhaust path such that air used to release heat of the heat generation part 833 is smoothly discharged outwards, and may be provided with an exhaust hole 865a for discharging air.

Specifically, the heat release guides 865 may be coupled through both sides of the heat release housing 861 and may be formed to communicate with both ends of the heat release housing 861.

Accordingly, air supplied through the blowing fan 863 cools the heat generation part 833 while passing through the inner path 861a, and the air used for cooling passes through both sides of the inner path 861a and finally comes out of the exhaust hole 865a of the heat release guide 865.

Using the above-described method, the heat release device 860 may effectively cool the heat generation part 833 of the Peltier element 830.

According to the embodiment, a plurality of holders 810, 820 may be provided.

Referring to FIGS. 54 to 56, the plurality of holders 810, 820 are connected through both ends of the heat pipe 850.

The plurality of holders 810, 820 are spaced apart from each other in the left-right direction around the Peltier element 830 (or the connection block 140), and is configured to store and cool a beverage vessel through each of the holders 810, 820.

Below, the plurality holders 810, 820 may be referred to as a first holder 810, and a second holder 820 for convenience of description.

As illustrated, the first holder 810 and the second holder 820 have the same size and shape. However, the size and shape of each of the holders may be modified according to embodiments.

For example, the first holder 810 may be configured to easily store a beverage bottle (B1, see. FIG. 8), and the second holder 820 may be configured to easily store a beverage can (B2). However, the holders are not limited.

The first and second holders 810, 820 have to have a proper structure in which a beverage vessel is stably stored, and a structure in which a beverage vessel is easily taken out to allow the user to drink a cooled beverage.

Further, the first and second holders 810, 820 have to have a structure in which a stored beverage vessel using cold energy delivered through both ends of the heat pipe 850 is rapidly cooled.

To this end, the first and second holders 810, 820 may have a structure for delivering cold air towards a bottom surface, a rear surface, and a lateral surface of a beverage vessel.

Specifically, the first and second holders 810, 820 include a rear surface storage plate 811, 821, a lateral surface storage plate 813, 823 and a supporter 815, 825.

The rear surface storage plate 811, 812 may be installed to block a rear surface of storage where beverage vessels are stored.

The lateral surface storage plate 813, 823 may be installed to wrap both lateral surfaces of the storage where beverage vessels are stored.

For example, the lateral surface storage plate 813, 823 may be formed to protrude from both ends of the rear surface storage plate 811, 821 forwards and to block both lateral surfaces of a beverage vessel. The lateral surface storage plate 813, 823 and the rear surface storage plate 811, 821 may be formed into an integrated structure.

The lateral surface storage plate 813, 823 may have a shape where a width is gradually increased from an upper end towards a lower end. With the shape, a lower end of a beverage vessel may be wrapped more widely. Accordingly, a stable storage structure may be ensured and the effect of cooling may be improved. However, the shape of the lateral surface storage plate 813, 823 is not limited.

The supporter 815, 825 provides a bottom onto which a stored beverage vessel may be mounted.

Specifically, the rear surface storage plate 811, 821 and the lateral surface storage plate 813, 823 are connected onto a top of the supporter 815, 825, and the heat pipe 850 is connected to a bottom of the supporter 815, 825 to receive cold energy of the heat pipe 850.

The supporter 815, 825 may be made of a material that may deliver heat using conduction, to cool a stores beverage vessel by receiving cold energy of the heat pipe 850.

For example, the supporter 815, 825 may be made of a metallic material (e.g., Al and the like) that has excellent thermal conductivity, resistance against water, resistance against moisture and durability and that is lightweight, or an alloy including the same.

Like the supporter 815, 825, the rear surface storage plate 811, 821 and the lateral surface storage plate 813, 823 connected to the supporter 815, 825 may also be made of a material that may deliver heat through conduction.

Accordingly, cold energy received through the heat pipe 850 may be delivered to the rear surface storage plate 811, 821 and the lateral surface storage plate 813, 823 as well as the supporter 815, 925 to cool the stored beverage vessel more rapidly and efficiently.

Further, the outer portions, i.e., exterior surfaces of the rear surface storage plate 811, 821 and the lateral surface storage plate 813, 823 may be covered with a thermal insulation material having a predetermined thickness, and the thermal insulation material may be formed into an attachable and detachable structure. Accordingly, the thermal insulation material may be replaced after being used for a long time.

The holder 810, 820 may be further provided with a holder guide 870, 880.

The holder guide 870, 880 is installed to block a front surface of a beverage vessel stored in the storage of each holder 810, 820 to prevent the beverage vessel mounted onto the supporter 815, 825 from escaping.

Referring to FIG. 8, the beverage bottle B1 and the beverage can B2 are stored through the first and second holders 810, 820. The holder guide 870, 880 may be used to prevent the stored beverage vessels (B1 and B2) from escaping from the holders.

A height at which the holder guide 870, 880 is installed through the holder 810, 820 may vary on the basis of the shape and size of the beverage vessel (B1 and B2).

For example, the holder guide 870 (referred to as "first holder guide") coupled to the first holder 810 may be coupled to a relatively high position corresponding to a height of a beverage bottle.

The holder guide 880 (referred to as "second holder guide") coupled to the second holder 820 may be coupled to a relatively low position corresponding to a height of a beverage can. i.e., a position lower than the position of the first holder guide 870.

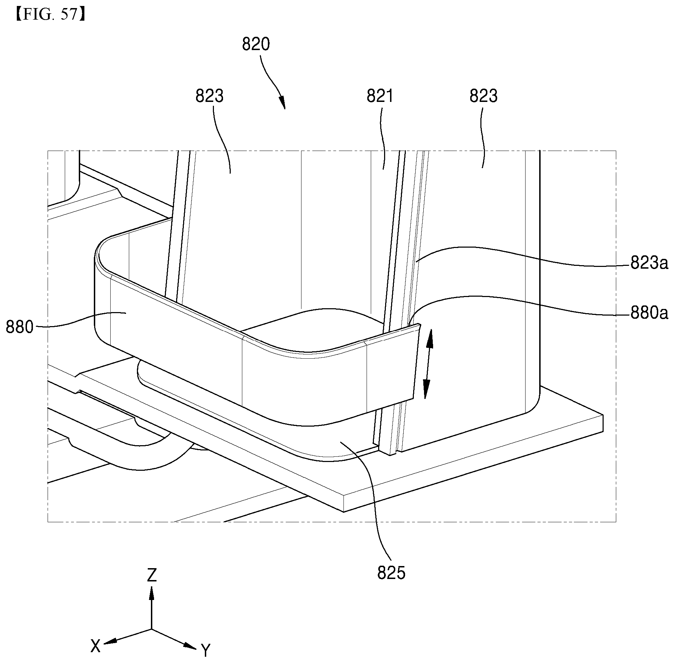

FIG. 57 is a view for describing a coupling structure and movements of a holder guide of a rapid cooling unit according to an embodiment.

Referring to FIG. 57, the holder guide 880 is detachably coupled to block the front of the storage where a beverage vessel is stored through the lateral surface storage plate 823.

The holder guide 880 may have a structure where the holder guide 880 may move in the up-down direction (i.e., the Z-axis direction) of the lateral surface storage plate 823 in a state in which the holder guide 880 is coupled to the lateral surface storage plate 823.

To this end, the lateral surface storage plate 823 is provided with a sliding groove 823a that is formed in the up-down direction within a set range of heights, and the holder guide 880 is provided with a sliding projection 880a at both ends thereof.

In this case, the holder guide 880 may slide in the up-down direction along the lateral surface storage plate 823 in a state in which the sliding projection 880a of the holder guide 880 is inserted into the sliding groove 823a of the lateral surface storage plate 823. Accordingly, a position of the holder guide 880 may be changed.

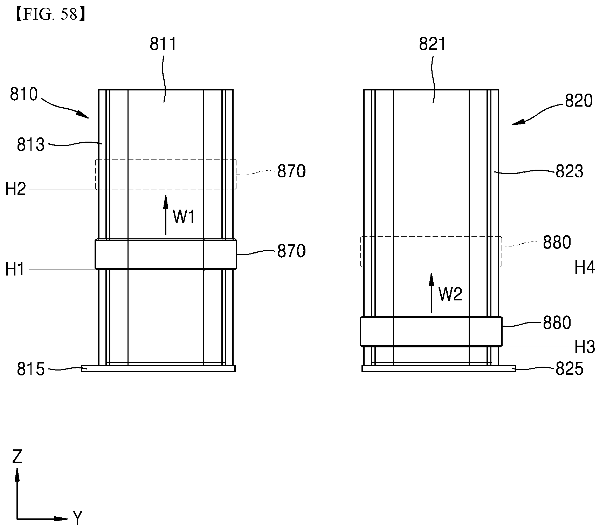

FIG. 58 is a view for describing upward and downward movements of a holder guide that constitutes a rapid cooling unit according to an embodiment.

Referring to FIG. 58, a plurality of holders according to the embodiment may be provided. The first holder 810 is coupled to the first holder guide 870, and the second holder 820 is coupled to the second holder guide 880.

A height of the first holder guide 870 and a height of the second holder guide 880 are different on the basis of a shape and size of a beverage vessel stored in each holder.

For example, as the first holder 810 stores a relatively long beverage bottle, the first holder guide 870 may be coupled to a relatively high position. As the second holder 820 stores a relatively short beverage can, the second holder guide 880 may be coupled to a position lower than the position of the first holder guide 870.

As described above, the first holder guide 870 and the second holder guide 880 may be slidably disposed at different positions.

For example, the position of the first holder guide 870 may be changed within a range of heights from H1 to H2.

When a beverage bottle is not stored, the first holder guide 870 is positioned at H1, and, when a beverage bottle is stored, the first holder guide 870 is moved to position H2 (i.e., W1) to prevent the beverage bottle from escaping and to keep the beverage bottle stably.

The position of the second holder guide 880 may be changed within a range of heights from H3 to H4.

when a beverage can is not stored, the second holder guide 880 is positioned at H3, and, when a beverage can is stored, the second holder guide 880 is moved to position H4 (i.e., W2) to prevent the beverage can from escaping and to keep the beverage can stably.

The holder guide 870, 880 may implement the switching operations of turning on/off power supplied to the Peltier element 830 on the basis of positions of upward and downward sliding movements.

For example, in case the first holder guide 870 is positioned at H1, the supply of power may be turned off, and, in case the first holder guide 870 is moved to position H2, the supply of power may be turned on.

Additionally, in case the second holder guide 880 is positioned at H3, the supply of power may be turned off, and, in case the second holder guide 880 is moved to position H4, the supply of power may be turned on.

Accordingly, as long as a beverage vessel is stored in the first and second holders 810, 820 and the positions of the first and second holder guides 870, 880 are changed, the beverage vessel stored in the first and second holders 810, 820 may be cooled.

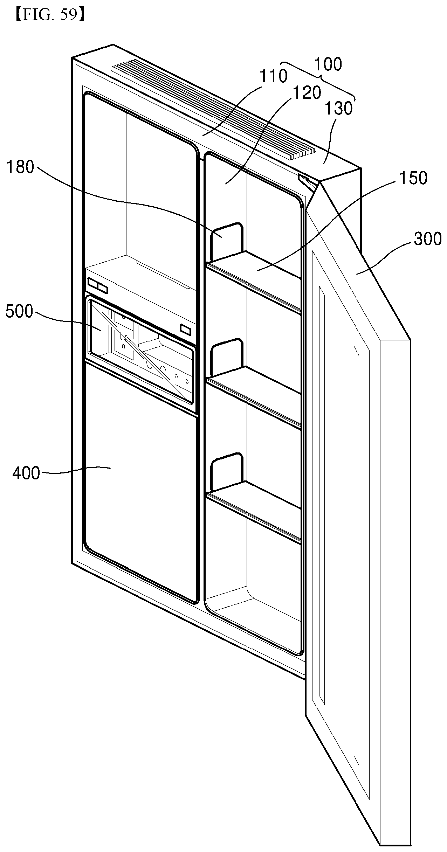

FIG. 59 is a view illustrating a mirror cabinet apparatus according to an eighth embodiment.

The mirror cabinet apparatus 80 according to the eighth embodiment includes a cabinet body 100 provided with storage, and a mirror door unit 300 configured to open and close the cabinet body 100. The cabinet body 100 includes a frame 110, a built-in panel 120 and an exterior panel 130.

The mirror cabinet apparatus 80 includes a height adjustment guide 180 attached to and detached from the built-in panel 120, and a shelf 150 held at the height adjustment guide 180. The mirror cabinet apparatus 80 may freely modify the storage in the cabinet body 100 thereby improving usability.

In the drawing, a charging box unit 500 and a cooler unit 400 are disposed in the left row of the cabinet body 100, and the height adjustment guide 180 and the shelf 150 are disposed in the right row of the cabinet body 100. However, the arrangement in the left and right rows may be changed. Further, the height adjustment guide 180 and the shelf 150 may be disposed at a top area of the charging box unit 500.

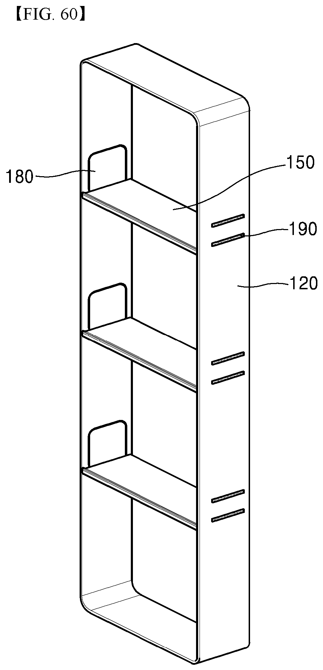

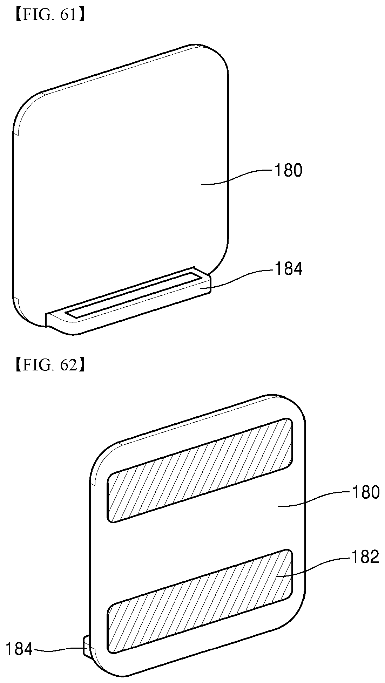

FIG. 60 is a perspective view illustrating inner panels and shelves of the mirror cabinet apparatus according to the eighth embodiment, and FIG. 61 is a view illustrating one surface of a height adjustment guide 180 according to the eighth embodiment.

As illustrated, for the cabinet apparatus according to the embodiment, an accommodation space is formed in a cabinet body 100. In the accommodation space, a height adjustment guide 180, and a shelf 150 disposed between the height adjustment guides 150.

The height adjustment guide 180 may be formed into a plate shape attachable onto a lateral wall in the cabinet body 100, and a support stand 184 may be formed to protrude at one end of the plate.

The height adjustment guide 180 may be attached onto a lateral wall of a built-in panel 120 of the cabinet body 100 and may support the shelf 150. In other words, a pair of height adjustment guides 180 may be disposed at an opposite inner lateral wall of the built-in panel 120.

A distance between the height adjustment guides 180 in a state in which the height adjustment guide 180 is attached onto the lateral wall of the built-in panel 120 is preferably greater than a length (the distance between the height adjustment guides) of the shelf 150.

The height adjustment guide 180 is preferably formed into a plate shape to ensure an accommodation space.

When the height adjustment guide 180 is formed into a plate shape and attached onto the lateral wall of the built-in panel 120, a portion that protrudes due to the height adjustment guide 180 is not formed in the accommodation space. Accordingly, usability of the accommodation space may be improved.

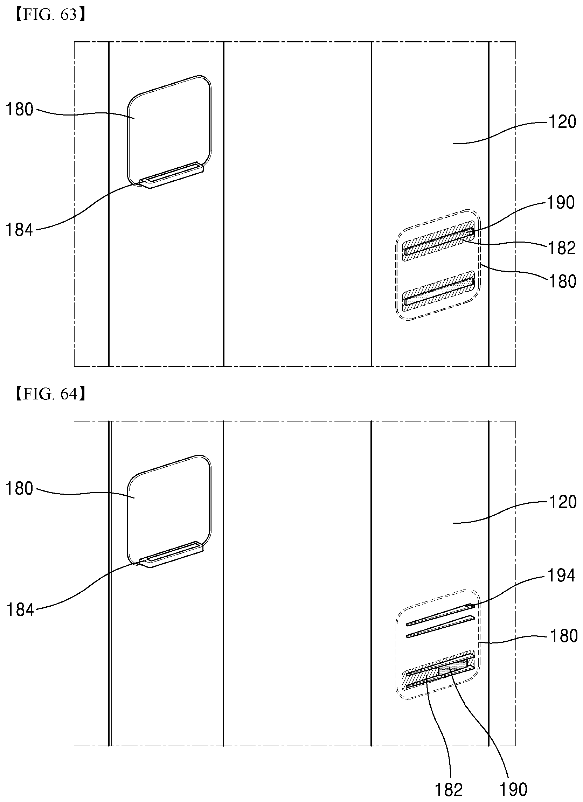

FIG. 62 is a view illustrating a back of the surface in FIG. 61 of a height adjustment guide 180, and FIG. 63 is a view illustrating a state in which a height adjustment guide 180 of a cabinet according to an embodiment is attached onto a lateral wall of a built-in panel 120.

The height adjustment guide 180 may be attached onto the lateral wall of the built-in panel 120 using a magnetic property.

As illustrated, the mirror cabinet apparatus according to the embodiment may be provided with a magnet 190 at a portion of the lateral wall of the built-in panel 120, onto which the height adjustment guide 180 is attached.

The magnet 190 should be able to fix the height adjustment guide 180 that contacts a back of the lateral wall of the built-in panel 120 using a magnetic force. Accordingly, a neodymium magnet that provides a strong magnetic force may be used as the magnet 190.

The height adjustment guide 180 includes a ferromagnetic substance to generate an attractive force caused by a magnetic force between the height adjustment guide 180 and the magnet 190. The ferromagnetic substance denotes a material that may be attached to a magnet, and, typically, includes iron, cobalt, nickel and an alloy thereof.

The magnet 190 is fixed to one surface of the built-in panel 120, and the height adjustment guide 180 including a ferromagnetic substance is fixed to a back of one surface of the built-in panel 120, with the lateral wall of the built-in panel 120 between the magnet 190 and the height adjustment guide 180.

The height adjustment guide 180 may be attached onto the lateral wall of the built-in panel 120 by an attractive force caused by a magnetic force generated between the magnet 190 fixed onto the lateral wall of the built-in panel 120 and the ferromagnetic substance included in the height adjustment guide 180.

Additionally, the height adjustment guide 180 may be detached from the lateral wall of the built-in panel 120 by a force greater than the attractive force caused by the magnetic force.

As a surface area, where the magnet 190 and the ferromagnetic substance of the height adjustment guide 180 contact each other with the lateral wall of the built-in panel 120 between them, becomes larger, the height adjustment guide 180 may be attached onto the lateral wall of the built-in panel 120 more stably.

However, as the surface area, where the magnet 190 and the ferromagnetic substance of the height adjustment guide 180 contact each other, becomes larger, it is difficult to select a material and it is cost consuming.

Considering the fact, when all or part of the height adjustment guide 180 is comprised of a ferromagnetic substance and all or part of the built-in panel 120 is comprised of a magnet 190, the height adjustment guide 180 may be attached onto the lateral wall of the built-in panel 120.

Even when all or part of the height adjustment guide 180 is comprised of a magnet 190 and all or part of the built-in panel 120 is comprised of a ferromagnetic substance, the height adjustment guide 180 may be attached onto the lateral wall of the built-in panel 120.

As the height adjustment guide 120 may be attached onto the lateral wall of the built-in panel 120 using a magnetic property without an additional device, the height adjustment guide 180 may be easily detached from the lateral wall of the built-in panel 120 while being attached onto the lateral wall of the built-in panel 120 stably.

Further, the magnet 190 may be disposed on a back of the lateral wall of the built-in panel 120 that constitutes the inside of the accommodation space, thereby improving aesthetic qualities of the inner space provided by the built-in panel 120.

FIG. 64 is a view illustrating a magnet fixation guide 194 installed on a lateral wall of a built-in panel 120 of a mirror cabinet apparatus according to the present disclosure.

As illustrated, for the mirror cabinet apparatus according to the embodiment, a magnet fixation guide 194 that may fix the magnet 190 may be installed on a back of a portion of the lateral wall of the built-in panel 120, onto which the height adjustment guide 180 is attached.

With the magnet fixation guide 194, the magnet 190 may be fixed onto the lateral wall of the built-in panel 120 without directly fixing the magnet 190 to the lateral wall of the built-in panel 120.

When the magnet fixation guide 194 is installed on the lateral wall of the built-in panel 120, the magnet 190 is inserted into and fixed to the magnet fixation guide 194 corresponding to a height at which a shelf 150 is held, and a position where the shelf 150 is held may be easily adjusted.

The magnet 190 may be fixed onto a lateral wall of the built-in panel 120 to correspond to a height at which the shelf 150 is held, and the height adjustment guide 180 including a ferromagnetic substance may be attached to a back of a portion to which the magnet 190 is fixed.

As the number of magnets 190 attached to the built-in panel 120 increases, a strong magnetic force affects the accommodation space in the built-in panel 120. Accordingly, the number of magnets 190 fixed onto the lateral wall of the built-in panel 120 is preferably minimized.

Preferably, while being installed on the lateral wall of the built-in panel 120 and allowing the height adjustment guide to be attached onto the lateral wall of the built-in panel 120, the magnet fixation guide 194 supports a lower portion of the magnet 190 to prevent the magnet 190 from moving downwards.

When the height adjustment guide is attached and detached, a lateral portion of the magnet 190 is preferably supported to prevent the magnet 190 from escaping from the magnet fixation guide 194.

However, one portion of the magnet fixation guide 194 may be opened such that the magnet 190 is drawn into or drawn out of the magnet fixation guide 194.

Further, the magnet fixation guide 194 may be implemented as a groove into which the magnet 190 may be inserted into the lateral wall of the built-in panel 120.

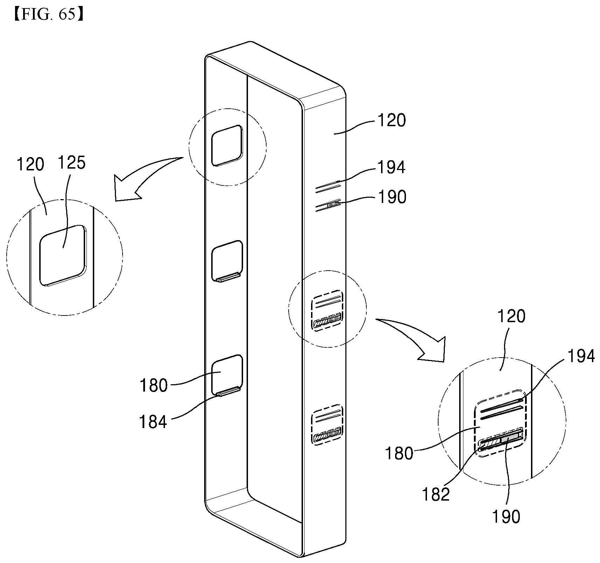

FIG. 65 is a view illustrating a fixation groove 125 formed on a lateral wall of a built-in panel 120 according to an embodiment.

As illustrated, the cabinet according to the embodiment may be provided with a fixation groove 125 having a shape corresponding to the shape of the height adjustment guide 180 on the lateral wall of the built-in panel 120.

The fixation groove 125 may have a shape corresponding to the shape of the height adjustment guide 180 and the height adjustment guide 180 may be inserted into the fixation groove 125.

Even when the height adjustment guide 180 is attached onto the lateral wall of the built-in panel 120 by a magnetic property, the height adjustment guide 180 may not tolerate self-weight of a shelf 150 and a product stored on the shelf 150.

When the fixation groove 125 is provided on the lateral wall of the built-in panel 120 and the height adjustment guide 180 is inserted into the fixation groove 125, the height adjustment guide 180 may be stably attached onto the lateral wall of the built-in panel 120.

When the height adjustment guide 180 is inserted into the fixation groove 125, an edge of the height adjustment guide 180 is stopped and supported by a step formed by the fixation groove 125. Accordingly, the height adjustment guide 180 may stably tolerate self-weight of a shelf 150 and a product stored on the shelves 150.

The fixation groove 125 preferably has a depth corresponding to a thickness of a plate (a thickness without a support stand 184) of the height adjustment guide 180.

When the depth of the fixation groove 125 corresponds to the thickness of the height adjustment guide 180, an uneven portion may not be formed at a boundary between the fixation groove 125 and the height adjustment guide 180 in a state in which the height adjustment guide 180 is inserted into the fixation groove 125. Accordingly, aesthetic qualities and usability of the accommodation space may be improved.

For the height adjustment guide 180, shapes of an upper portion and a lower portion of the plate are preferably symmetrical. Additionally, the shape of the fixation groove 125 preferably corresponds to the shape of the height adjustment guide 180.

Then even when the upper portion and the lower portion of the height adjustment guide 180 are inserted in a state in which the upper portion and the lower portion of the height adjustment 180 are rotated, the height adjustment guide 180 may be inserted into the fixation groove 125 without forming an overlapped portion or a gap between an outer edge of the height adjustment guide 180 and an inner edge of the fixation groove 125.

An overlapped portion or a gap between the height adjustment guide 180 and the fixation groove 125 is not formed in the state in which the height adjustment guide 180 is inserted into the fixation groove 125. Accordingly, aesthetic qualities of the accommodation space may be improved.

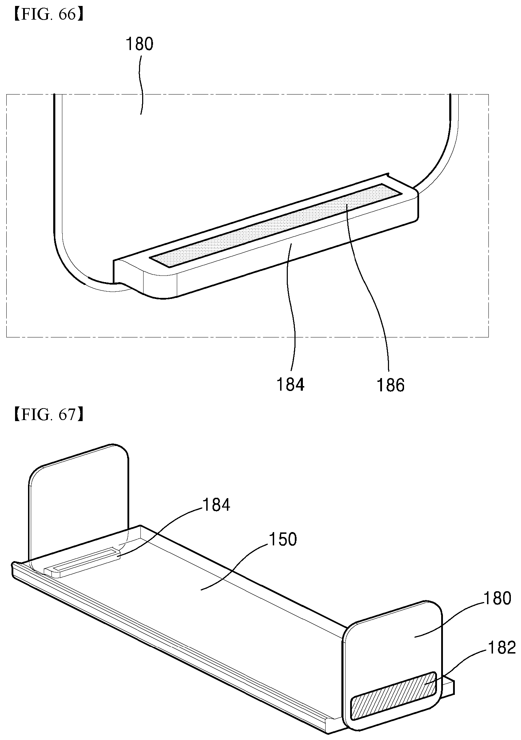

FIG. 66 is a view illustrating a support stand 184 formed at a height adjustment guide 180 according to an embodiment, and FIG. 67 is a view illustrating a state in which a support stand 184 of a cabinet according to an embodiment supports a shelf 150.

In the cabinet, as illustrated, the height adjustment guide 180 is provided with a support stand 184 protruding towards an inner side of the accommodation space on a back of a side of the height adjustment guide 180 attached to the built-in panel 120.

The support stand 184 is provided on a lateral surface of the height adjustment 180 and supports a lower portion of the shelf 150 to prevent the shelf 150 from falling by its self-weight.

Preferably, a distance between a protruding end of the support stand 184 and an opposite protruding end of the support stand 184 is shorter than a length of the shelf 150 (a distance between a lateral surface and a lateral surface facing the height adjustment guide 180).

The shelf 150 should not shake in the front-rear direction in the state in which the shelf 150 is supported by the support stand 184. Preferably, the support stand 184 is configured to support a front and rear of the edges of the shelf 150.

Further, the support stand 184 is formed to protrude from a lateral surface of the height adjustment guide 180. A shape of the support stand 184 is preferably configured to allow an upper surface of the shelf 150 held at the support stand 184 to balance the shelf 150 horizontally.

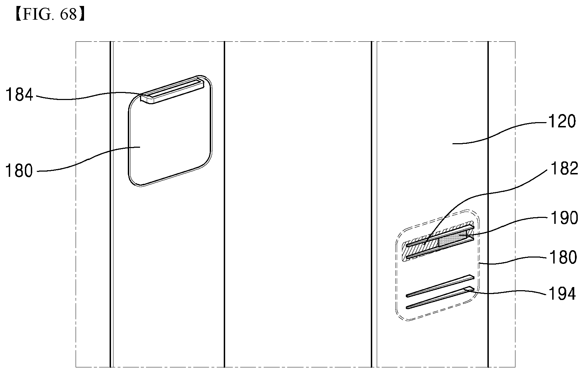

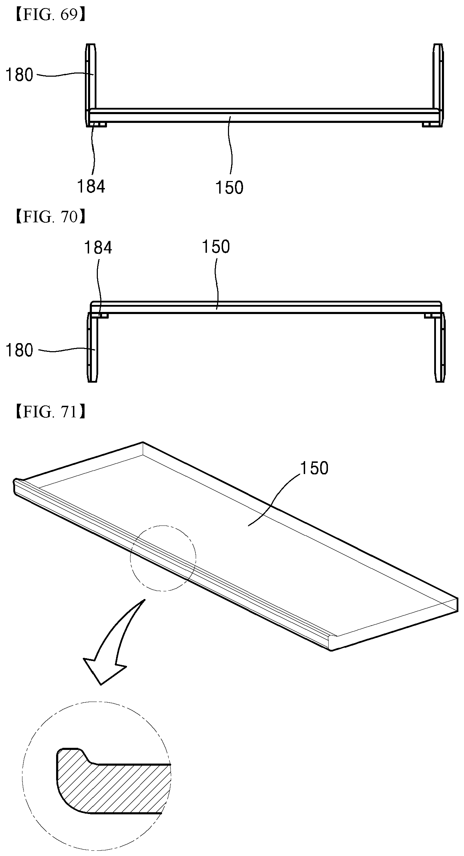

FIG. 68 is a view illustrating a state in which a support stand 184 of a cabinet according to an embodiment is placed disproportionately towards one side of a height adjustment guide 180 at an upper portion of the built-in panel 120, and FIGS. 69 and 70 are views illustrating a state in which a height of a shelf 150 is adjusted on the basis of a method of attaching a height adjustment guide 180 of a cabinet according to an embodiment.

The support stand 184 may be disposed at a central portion of the height adjustment guide 180 or may be disposed disproportionately towards one side of the height adjustment guide 180.

As illustrated, when the height adjustment guide 180 is attached to the built-in panel 120 in case the support stand 184 is disposed disproportionately towards one side of the height adjustment guide 180, a difference in heights of the support stand 184 results in a difference in heights of the shelve 150 held at the support stand 184.

That is, a height of the shelve 150 held in the accommodation space may differ depending on a method of attaching the support stand 184 disposed at one side of the height adjustment guide 180 to the built-in panel 120 such that the support stand 184 faces downwards and a method of attaching the support stand 184 disposed at one side of the height adjustment guide 180 to the built-in panel 120 such that the support stand 184 faces upwards.

When the support stand 184 is disposed disproportionately towards one side of the height adjustment guide 180 from a central portion thereof to a greater extent, a height of the shelf 150 held at the support stand 184 differs to a greater extent depending on the methods of attaching the height adjustment guide 180 to the built-in panel 120.

A surface of the support stand 184, which supports the shelf 150 varies depending on the methods of attaching the height adjustment guide 180 to the built-in panel 120. Accordingly, both surfaces of the support stand 184, which support the shelf 150, are preferably symmetrical.

The support stand 184 may include a slip prevention pad 186 having friction coefficient higher than that of a surface of the support stand 184 at a portion of the support stand 184 where the shelf 150 is held to prevent the shelf 150 from slipping or moving in a state in which the shelf 150 is held at the support stand 184.

The slip prevention pad 186 may be made of a PVC material. Further, the slip prevention pad 186 may be formed on an entire surface of the support stand 184 or a part of the surface of the support stand.

FIG. 71 is a view illustrating a shelf 150 of a cabinet according to an embodiment.

The shelf 150 separates the accommodation space formed in the built-in panel 120. Accordingly, the accommodation space may provide improved usability of space.

An upper surface of the shelf 150 of the cabinet according to the embodiment, as illustrated, is preferably formed into a flat surface to allow the shelf 150 to serve as a supporter for supporting a product stored in the accommodation space.

Further, a front end of the shelf 150 may be preferably formed to protrude further than the upper surface of the shelf 150.

The shelf 150 may store various products the bottom of which is flat and spherical, and the like. Left and right sides or a rear surface of the shelf 150 contact a cabinet wall body, while a front surface of the shelf 150, which is disposed at the cabinet door configured to open and close the accommodation space, may be opened when the cabinet door is opened.

The structure in which the front end of the shelf 150 protrudes allows a product stored on the shelf 150 to be stopped by a projection formed at the front end of the shelf 150 even when the product stored on the shelf 150 rolls, thereby preventing the product on the shelf 150 from escaping from the front surface of the shelf 150.

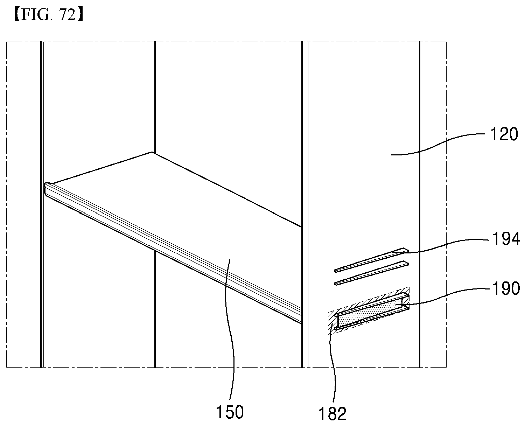

FIG. 72 is a view illustrating a state in which both ends of a shelf 150 according to an embodiment are directly attached onto a lateral wall of a built-in panel120.

As for the cabinet according to the embodiment, as illustrated, both ends of the shelf 150 facing the lateral wall of the built-in panel 120may be directly attached onto the lateral wall of the built-in panel 120 by a magnetic property when the shelf 150 separates the accommodation space.

The magnet 190 may be fixed onto a back of a portion of the lateral wall of the built-in panel 120, onto which the shelf 150 is attached, and both ends of the shelf 150 including a ferromagnetic substance may be attached onto the lateral wall of the built-in panel 120 by a magnetic property generated by the magnet 190.

The magnet 120 may be directly fixed onto the lateral wall of the built-in panel 120 or may be fixed by a magnet fixation guide 194 installed on the lateral wall of the built-in panel 120 while the magnet 190 is arranged at regular intervals along the lateral wall of the built-in panel 120 to adjust a height of the shelf 150.

The shelf 150 may be installed on a back of the lateral wall of the built-in panel 120 to which the magnet 190 is fixed. The shelf 150 may be supported without falling by an attractive force applied between the magnet 190 and a ferromagnetic substance included in both ends of the shelf 150.

Even when the magnet 190 is included at both ends of the shelf 150 and the cabinet wall body is provided with a ferromagnetic substance that magnetically reacts with the magnet 190, the shelf 150 may be supported at the lateral wall of the built-in panel 120.

The present disclosure has been described with reference to the embodiments illustrated in the drawings.

## Claims

1. A mirror cabinet apparatus, comprising:
a cabinet body (100) provided with an accommodation space therein and including an opened portion at least at a front thereof;
a mirror door unit (300) configured to open and close the opened portion of the cabinet body (100) and provided with at least one mirror;
a heat generation sheet (360) installed at an inside of the mirror and configured to heat the mirror;
a beauty lighting (330); and
a controller;
**characterized in that**:
the mirror cabinet further comprises a database in which data on lighting information classified on the basis of each time slot is stored; and
the beauty lighting (330) is provided at an inner side of the mirror door unit (300) and is operated in a state in which the mirror door unit (300) is opened;
the data on lighting information includes a color temperature and luminous flux of the sunlight that vary on earth on the basis of time; and
the mirror cabinet apparatus further comprises:
- a communication unit configured to receive data including information on weather, and wherein the controller is configured to control the beauty lighting (330) to provide lighting corresponding to lighting information of a current weather among pieces of lighting information stored in the database; and
- an input unit for inputting, by a user, a location and a time, and wherein the controller is configured to control the beauty lighting (330) such that the beauty lighting (330) provides lighting corresponding to weather in a location and in a time slot input by the user among pieces of lighting information stored in the database.

2. The mirror cabinet apparatus of claim 1, wherein the mirror door unit (300) includes at least one of an outer surface mirror (310) provided on an outer surface thereof and an inner surface mirror (320) provided on an inner surface thereof.

3. The mirror cabinet apparatus of claim 1, wherein the mirror door unit (300) includes a door frame (302) rotatably coupled to one side of the cabinet body (100) by a rotary connection member such as a hinge and the like, and
a cover frame (304) configured to shield one surface of the door frame (302).

4. The mirror cabinet apparatus of claim 3, further comprises:
at least one hook member (302a) being formed at one side of the door frame (302), and
a holding member (304a) being formed at one side of a rear surface of the cover frame (304) to be coupled to the hook member (302a).

5. The mirror cabinet apparatus of claim 1, wherein the heat generation sheet (360) comprises heating coils (362) that are arranged in a plurality of rows, the heating coils (362) being covered with an insulator (363) to be provided as a surface-type heat generator.

6. The mirror cabinet apparatus of claim 1, further comprises:
an operation switch (370) being provided at one side of the cabinet body (100) or the mirror door unit (300) for operating the heat generation sheet (360).

7. The mirror cabinet apparatus of claim 1, wherein the mirror cabinet apparatus further includes:
a moisture sensor provided at one side of the cabinet body (100) or the mirror door unit (300) and configured to sense moisture, and
a heat generation controller configured to control operations of the heat generation sheet (360) using humidity sensed by the moisture sensor.

8. The mirror cabinet apparatus of claim 1, further comprising:
an illuminance sensor provided at one side of the cabinet body (100) or the mirror door unit (300) to sense illumination, and
a lighting controller configured to control operations of the lighting unit based on illumination sensed by the illuminance sensor.

9. The mirror cabinet apparatus of claim 1, wherein the beauty lighting (330) is configured to adjust color temperatures; and
the mirror cabinet apparatus further comprising:
a lighting switch for controlling operations of the beauty lighting (330) being provided at one side of the cabinet body (100) or the mirror door unit (300).

10. The mirror cabinet apparatus of claim 1 or 9, wherein the beauty lighting (330) comprises a light emitting element and a diffusion panel configured to diffuse light emitted from the light emitting element over an entire light-emitting surface area,
wherein the light emitting element includes an LED element or an OLED element, and wherein the LED element or the OLED element includes a red light source, a blue light source and a green light source, and is configured to adjust brightness of the light source of each color to adjust a color temperature.

## Patentansprüche

1. Spiegelschrankvorrichtung, die Folgendes umfasst:
einen Schrankkörper (100), in dem ein Aufbewahrungsraum vorgesehen ist, der wenigstens an seiner Vorderseite einen offenen Abschnitt aufweist;
eine Spiegeltüreinheit (300), die konfiguriert ist, den offenen Abschnitt des Schrankkörpers (100) zu öffnen und zu verschließen und mit wenigstens einem Spiegel ausgestattet ist;
eine Wärmeerzeugungslage (360), die an einer Innenseite des Spiegels installiert ist und konfiguriert ist, den Spiegel zu erwärmen;
eine Schminkbeleuchtung (330); und
eine Steuereinheit,
**dadurch gekennzeichnet, dass**
der Spiegelschrank ferner eine Datenbank enthält, in der Daten über Beleuchtungsinformationen, die auf Basis jedes Zeitschlitzes klassifiziert sind, gespeichert sind;
die Schminkbeleuchtung (330) an einer Innenseite der Spiegeltüreinheit (300) vorgesehen ist und in einem Zustand betrieben wird, in dem die Spiegeltüreinheit (300) geöffnet ist; und
die Daten über Beleuchtungsinformationen eine Farbtemperatur und einen Lichtstrom des Sonnenlichts, die auf der Erde zeitabhängig unterschiedlich sind, enthalten; und
die Spiegelschrankvorrichtung ferner Folgendes umfasst:
- eine Kommunikationseinheit, die konfiguriert ist, Daten, die Informationen über das Wetter enthalten, zu empfangen, wobei die Steuereinheit konfiguriert ist, die Schminkbeleuchtung (330) so zu steuern, dass sie eine Beleuchtung bereitstellt, die den Lichtinformationen über ein aktuelles Wetter unter Teilen der Beleuchtungsinformationen, die in der Datenbank gespeichert sind, entspricht; und
- eine Eingabeeinheit, über die ein Benutzer einen Ort und eine Zeit eingeben kann, wobei die Steuereinheit konfiguriert ist, die Schminkbeleuchtung (330) so zu steuern, dass die Schminkbeleuchtung (330) eine Beleuchtung bereitstellt, die dem Wetter an einem Ort und einem Zeitschlitz entspricht, die von dem Benutzer unter Teilen von Beleuchtungsinformationen, die in der Datenbank gespeichert sind, eingegeben werden.

2. Spiegelschrankvorrichtung nach Anspruch 1, wobei die Spiegeltüreinheit (300) eine äußere Spiegeloberfläche (310), die an ihrer äußeren Oberfläche bereitgestellt ist, und/oder eine innere Spiegeloberfläche (320), die an ihrer inneren Oberfläche bereitgestellt ist, umfasst.

3. Spiegelschrankvorrichtung nach Anspruch 1, wobei die Spiegeltüreinheit (300) umfasst: einen Türrahmen (302), der an einer Seite des Schrankkörpers (100) durch ein Drehverbindungselement wie etwa ein Scharnier oder dergleichen drehbar gekoppelt ist, und
einen Abdeckrahmen (304), der konfiguriert ist, eine Oberfläche des Türrahmens (302) abzuschirmen.

4. Spiegelschrankvorrichtung nach Anspruch 3, die ferner Folgendes umfasst:
wenigstens ein Hakenelement (302a), das auf einer Seite des Türrahmens (302) ausgebildet ist, und
ein Halteelement (304a), das auf einer Seite einer hinteren Oberfläche des Abdeckrahmens (304) ausgebildet ist, um mit dem Hakenelement (302a) gekoppelt zu werden.

5. Spiegelschrankvorrichtung nach Anspruch 1, wobei die Wärmeerzeugungslage (360) Heizspulen (362) umfasst, die in mehreren Reihen angeordnet sind, wobei die Heizspulen (362) mit einem Isolator (363) abgedeckt sind, um einen Wärmeerzeuger des Oberflächentyps bereitzustellen.

6. Spiegelschrankvorrichtung nach Anspruch 1, die ferner Folgendes umfasst:
einen Betriebsschalter (370), der auf einer Seite des Schrankkörpers (100) oder der Spiegeltüreinheit (300) bereitgestellt ist, um die Wärmeerzeugungslage (360) zu betreiben.

7. Spiegelschrankvorrichtung nach Anspruch 1, wobei die Spiegelschrankvorrichtung ferner Folgendes umfasst:
einen Feuchtigkeitssensor, der auf einer Seite des Schrankkörpers (100) oder der Spiegeltüreinheit (300) bereitgestellt ist und konfiguriert ist, Feuchtigkeit zu erfassen, und
eine Wärmeerzeugungs-Steuereinheit, die konfiguriert ist, Betriebsabläufe der Wärmeerzeugungslage (360) unter Verwendung der durch den Feuchtigkeitssensor erfassten Feuchtigkeit zu steuern.

8. Spiegelschrankvorrichtung nach Anspruch 1, die ferner Folgendes umfasst:
einen Belichtungssensor, der auf einer Seite des Schrankkörpers (100) oder der Spiegeltüreinheit (300) bereitgestellt ist, um Belichtung zu erfassen, und
eine Beleuchtungssteuereinheit, die konfiguriert ist, Betriebsabläufe der Beleuchtungseinheit auf Basis der durch den Belichtungssensor erfassten Belichtung zu steuern.

9. Spiegelschrankvorrichtung nach Anspruch 1, wobei die Schminkbeleuchtung (330) konfiguriert ist, Farbtemperaturen einzustellen; und
die Spiegelschrankvorrichtung ferner Folgendes umfasst:
einen Beleuchtungsschalter zum Steuern von Betriebsabläufen der Schminkbeleuchtung (330), der auf einer Seite des Schrankkörpers (100) oder der Spiegeltüreinheit (300) bereitgestellt ist.

10. Spiegelschrankvorrichtung nach Anspruch 1 oder 9, wobei die Schminkbeleuchtung (330) ein lichtemittierendes Element und eine Streuplatte, die konfiguriert ist, Licht, das von dem lichtemittierenden Element emittiert wird, über den gesamten lichtemittierenden Oberflächenbereich zu streuen, umfasst,
wobei das lichtemittierende Element ein LED-Element oder ein OLED-Element enthält und wobei das LED-Element oder das OLED-Element eine Quelle für rotes Licht, eine Quelle für blaues Licht und eine Quelle für grünes Licht enthält und konfiguriert ist, die Helligkeit der Lichtquelle jeder Farbe einzustellen, um eine Farbtemperatur einzustellen.

## Revendications

1. Appareil de type armoire à miroir, comportant :
un corps d'armoire (100) fourni avec un espace de réception dans celui-ci et incluant une partie ouverte au moins sur un avant de celui-ci ;
un bloc-porte à miroir (300) configuré pour ouvrir et fermer la partie ouverte du corps d'armoire (100) et pourvu d'au moins un miroir ;
une feuille thermogène (360) installée sur un intérieur du miroir et configurée pour chauffer le miroir ;
un éclairage esthétique (330) ;
et
une commande ;
**caractérisé en ce que** :
l'armoire à miroir comporte en outre une base de données dans laquelle sont stockées des données sur des informations d'éclairage classées sur la base de chaque plage horaire ; et
l'éclairage esthétique (330) est agencé sur un côté intérieur du bloc-porte à miroir (300) et fonctionne dans un état dans lequel le bloc-de porte à miroir (300) est ouvert ;
les données sur des informations d'éclairage incluent une température de couleur et un flux lumineux de la lumière solaire qui varient sur terre en fonction de l'heure ; et
l'appareil de type armoire à miroir comporte en outre :
- une unité de communication configurée pour recevoir des données incluant des informations météorologiques, et dans lequel la commande est configurée pour commander à l'éclairage esthétique (330) de délivrer un éclairage correspondant à des informations d'éclairage d'une situation météorologique actuelle parmi des éléments d'informations d'éclairage stockés dans la base de données ; et
- une unité d'entrée pour entrer, par un utilisateur, un lieu et une heure, et dans lequel la commande est configurée pour commander l'éclairage esthétique (330) de telle sorte que l'éclairage esthétique (330) délivre un éclairage correspondant à la situation météorologique en un lieu et sur une plage horaire entrés par l'utilisateur parmi des éléments d'informations d'éclairage stockés dans la base de données.

2. Appareil de type armoire à miroir selon la revendication 1, dans lequel le bloc-porte à miroir (300) inclut au moins un élément parmi un miroir de surface extérieure (310) disposé sur une surface extérieure de celui-ci et un miroir de surface intérieure (320) disposé sur une surface intérieure de celui-ci.

3. Appareil de type armoire à miroir selon la revendication 1, dans lequel le bloc-porte à miroir (300) inclut un châssis de porte (302) couplé en rotation à un côté du corps d'armoire (100) par un élément de liaison rotative tel qu'une charnière et analogue, et
un châssis de recouvrement (304) configuré pour protéger une surface du châssis de porte (302).

4. Appareil de type armoire à miroir selon la revendication 3, comportant en outre :
au moins un élément de crochet (302a) étant formé sur un côté du châssis de porte (302), et
un élément de retenue (304a) étant formé sur un côté d'une surface arrière du châssis de recouvrement (304) pour être couplé à l'élément de crochet (302a).

5. Appareil de type armoire à miroir selon la revendication 1, dans lequel la feuille thermogène (360) comporte des bobines de chauffage (362) qui sont agencées dans une pluralité de rangées, les bobines de chauffage (362) étant recouvertes d'un isolant (363) pour être fournies sous la forme d'un générateur de chaleur de surface.

6. Appareil de type armoire à miroir selon la revendication 1, comportant en outre :
un commutateur d'actionnement (370) étant prévu sur un côté du corps d'armoire (100) ou du bloc-porte à miroir (300) pour faire fonctionner la feuille thermogène (360).

7. Appareil de type armoire à miroir selon la revendication 1, dans lequel l'appareil de type armoire à miroir inclut en outre :
un capteur d'humidité disposé sur un côté du corps d'armoire (100) ou du bloc-porte à miroir (300) et configuré pour détecter de l'humidité, et
une commande thermogène configurée pour commander des fonctionnements de la feuille thermogène (360) en utilisant l'humidité détectée par le capteur d'humidité.

8. Appareil de type armoire à miroir selon la revendication 1, comportant en outre :
un capteur d'éclairement agencé sur un côté du corps d'armoire (100) ou du bloc-porte à miroir (300) pour détecter l'éclairement, et
une commande d'éclairage configurée pour commander des fonctionnements du bloc d'éclairage sur la base de l'éclairement détecté par le capteur d'éclairement.

9. Appareil de type armoire à miroir selon la revendication 1, dans lequel l'éclairage esthétique (330) est configuré pour régler des températures de couleur ; et
l'appareil de type armoire à miroir comportant en outre :
un commutateur d'éclairage pour commander des fonctionnement de l'éclairage esthétique (330) étant disposé sur un côté du corps d'armoire (100) ou du bloc-porte à miroir (300).

10. Appareil de type armoire à miroir selon la revendication 1 ou 9, dans lequel l'éclairage esthétique (330) comporte un élément électroluminescent et un panneau de diffusion configuré pour diffuser de la lumière émise à partir de l'élément électroluminescent sur une aire de surface électroluminescente complète,
dans lequel l'élément électroluminescent inclut un élément à LED ou un élément à OLED, et l'élément à LED ou l'élément à OLED inclut une source de lumière rouge, une source de lumière bleue et une source de lumière verte, et est configuré pour régler la luminosité de la source de lumière de chaque couleur afin de régler une température de couleur.
